# EUROPEAN PATENT APPLICATION

(11) **EP 4 586 289 A1**
(43) Date of publication of application: **16.07.2025**
(21) Application number: 23863158.4
(22) Date of filing: 04.09.2023
(51) Int. Cl.: H01F 38/14, B60L 5/00, B60L 53/12, B60M 7/00, H01F 5/00, H01F 5/02, H01F 27/32, H01F 41/04, H01F 41/12, H02J 7/00, H02J 50/10, H02J 50/12, H02J 50/90

(54) **COIL COMPONENT, MANUFACTURING METHOD FOR SAME, POWER TRANSMISSION DEVICE, POWER RECEPTION DEVICE, POWER TRANSMISSION SYSTEM, AND MOBILE BODY**

(30) Priority: 05.09.2022 JP 2022141016; 12.09.2022 JP 2022144637; 05.01.2023 JP 2023000609
(71) Applicant: Dai Nippon Printing Co., Ltd., Tokyo 162-8001 (JP)
(72) Inventor: MIYAZAKI, Kenichi, Tokyo 162-8001 (JP); OKABE, Masato, Tokyo 162-8001 (JP); ARAKAWA, Akane, Tokyo 162-8001 (JP)
(74) Representative: Müller-Boré & Partner Patentanwälte PartG mbB
(86) International application number: PCT/JP2023/032292
(87) International publication number: WO 2024/053620

(57) **Abstract**

A coil component (10) includes a first planar coil (11) that includes multiple turn portions (11n) and a projecting piece (11T) that extends from an inner circumferential edge and/or an outer circumferential edge of at least one turn portion (11n) among the multiple turn portions (11n) and that bends such that the projecting piece leaves from the turn portion (11n), and a first holding member (20) that is in contact with the multiple turn portions (11n) of the first planar coil (11) and that overlaps the first planar coil (11). The first holding member (20) includes a groove (22) on a first surface (20A) on which the first planar coil 11 is stacked, and the projecting piece (11T) is in contact with an inner surface of the groove (22) in a radial direction.

## Description

### Technical Field

The present disclosure relates to a coil component, a method of manufacturing the coil component, a power transmitter, a power receiver, a power transmission system, and a mobile body.

### Background Art

Wireless power transmission systems that wirelessly transmit power are becoming widespread.

For example, a system that wirelessly transmits power by causing a high-frequency current to flow into a resonant circuit that includes a coil is known.

In the case where a high-frequency current flows into a coil, a skin effect can occur. The skin effect increases alternating-current resistance and accordingly causes transmission efficiency to be decreased during power transmission. In consideration of this, in the case where the coil is composed of Litz wire, the skin effect can be decreased, and accordingly, the transmission efficiency can be inhibited from decreasing. However, the Litz wire is composed of a large number of enameled wire lines that are twisted together, accordingly has high manufacturing costs, and needs time and effort for manufacture. The larger the size of the coil, the more the time and effort for manufacture.

A known technique uses a planar coil that has a spiral plate shape and that has a rectangular conductor wire section (see JP2015-518271A, JP2020-47614A, and JP2021-27112A). For example, the planar coil can be formed from a plate material by punching. Accordingly, the planar coil can improve manufacturing efficiency regardless of the size of the coil. In addition, there is an advantage in the perspective of decreases in the thickness and weight of a device into which the coil is incorporated.

The planar coil is suitable for a high-power wireless power transmission system for use in, for example, an electric vehicle, which is likely to have a large coil size. As for the wireless power transmission system for use in the electric vehicle, a power transmitter is installed on a road surface such as parking, and a power receiver is installed on the electric vehicle. For example, in the case where the planar coil described above is used for the electric vehicle, the height dimensions of the power transmitter and the power receiver in particular can be decreased. For this reason, the planar coil described above usefully functions, for example, in the field of vehicles, which imposes strict restrictions on space.

For example, the planar coil described above may be formed into a single body together with a sheet material with the planar coil overlapping the sheet material that contains resin. Consequently, the planar coil is easy to handle, for example, when being assembled.

In the case where the planar coil and the sheet material are formed into a single body, the planar coil may be embedded in the sheet material with a surface exposed. At this time, for example, the sheet material may be heated, the planar coil may be pressed against the sheet material, and consequently, the planar coil may be embedded in the sheet material. In this case, however, the planar coil can be likely to float in a direction away from the sheet material. For example, floating can occur due to a difficulty of ensuring strong adhesion at an interface because of different kinds of materials or a difference in coefficient of thermal expansion between the planar coil and the sheet material.

If the planar coil floats from the sheet material as described above, appropriate assembling fails in the case of, for example, assembling with another component. Also in the case of misalignment of the planar coil and the sheet material, appropriate assembling fails due to floating.

It is an object of first and second disclosures to provide a coil component, a method of manufacturing the coil component, a power transmitter, a power receiver, a power transmission system, and a mobile body that enable a planar coil to be inhibited from floating from a member that is formed into a single body together with the planar coil.

A coil is typically used with the coil contained in a hollow case. The coil is held by a holding member that differs from the case inside the case.

It is considered that the case is formed into a single body together with the coil, and the coil is held by the case. In other words, it is considered that the case is formed as a holding member that holds the coil. In this case, an inner surface of the holding member has a shape that corresponds to the shapes of the coil and another component attached to the coil. For example, in the case where the coil has a spiral shape, a magnetic material is disposed between portions of the coil adjacent to each other as disclosed in JP2021-27112A. For this reason, a groove that contains an end of the magnetic material is formed on the inner surface of the holding member.

The holding member can be manufactured by using a thermoplastic material or a thermosetting material. Specifically, the holding member described above can be manufactured in a manner in which the material that is heated and melted is fitted into a mold that has unevenness that corresponds to unevenness of the inner surface of the holding member and is subsequently cooled. In some cases, however, the holding member that is manufactured in this way warps.

It is an object of a third disclosure to provide a coil component, a method of manufacturing the coil component, a power transmitter, a power receiver, a power transmission system, and a mobile body that enable a holding member that holds a coil to be inhibited from warping.

As for the wireless power transmission system described above, it is preferable that the performance of a coil component be improved and that power be efficiently transmitted. In JP2023-88728A, it is considered that a wall composed of a magnetic material is provided between turn portions of a coil adjacent to each other, and consequently, the performance of a coil component is improved.

In the case where the case is formed as the holding member that holds the coil, the inner surface of the holding member has the shape that corresponds to the shapes of the coil and the other component attached to the coil as described above. Accordingly, in the case where the wall composed of the magnetic material described above extends from the coil, it is necessary to form a groove that receives the wall on the inner surface of the holding member.

The height of the wall composed of the magnetic material is preferably increased in order to improve the performance of the coil component. In this case, the groove of the holding member needs to be deep. However, when the groove of the holding member is deep, there is a concern that a portion at which the groove of the holding member is formed is thin and that the strength (accordingly, the strength of the coil component) of the holding member is decreased. In addition, when the groove of the holding member is deep, there is a concern that it is difficult to mold the holding member and that it is difficult to manufacture the coil component accordingly.

It is an object of a fourth disclosure to provide a coil component, a method of manufacturing the coil component, a power transmitter, a power receiver, a power transmission system, and a mobile body that enable the possibility that the strength of the coil component is decreased due to formation of a wall composed of a magnetic material to be decreased and that enable the coil component that includes the wall composed of the magnetic material to be easily manufactured.

### Summary of Invention

### <First Disclosure>

It is an object of the first disclosure to provide a coil component, a method of manufacturing the coil component, a power transmitter, a power receiver, and a power transmission system that enable a planar coil to be inhibited from floating from a member that is formed into a single body together with the planar coil.

A coil component according to the first disclosure includes:
a first planar coil that includes multiple turn portions that are arranged in a radial direction and a projecting piece that extends from an inner circumferential edge and/or an outer circumferential edge of at least one turn portion among the multiple turn portions and that bends such that the projecting piece leaves from the turn portion; and
a first holding member that is in contact with the multiple turn portions and that overlaps the first planar coil,
the first holding member includes a groove on a surface on which the first planar coil is stacked, and
the projecting piece is in contact with an inner surface of the groove in the radial direction.

As for the coil component according to the first disclosure,
the turn portion may be located outside the groove.

The coil component according to the first disclosure may further include:
a second holding member that exerts magnetism and that is formed into a single body together with the first planar coil and the first holding member such that the first planar coil is sandwiched between the second holding member and the first holding member, and
the groove may be filled with a portion of the second holding member.

As for the coil component according to the first disclosure,
a second planar coil may be embedded in the second holding member, and the second planar coil overlaps the first planar coil,
the second planar coil may include multiple turn portions that are arranged in a radial direction and a projecting piece that extends from an inner circumferential edge and/or an outer circumferential edge of at least one turn portion among the multiple turn portions and that bends such that the projecting piece leaves from the turn portion of the second planar coil, and
the projecting piece of the second planar coil may be in contact with the second holding member in the radial direction.

As for the coil component according to the first disclosure,
the first holding member may further include a protruding portion that projects from the groove and that is embedded in the second holding member, and
the protruding portion may face the projecting piece of the second planar coil in the radial direction.

As for the coil component according to the first disclosure,
the first holding member may further include a spacer portion that projects such that the spacer portion leaves from the first planar coil at least at a portion between the groove on the surface on which the first planar coil is stacked and the turn portion inside the groove in the radial direction or a portion between the groove and the turn portion outside the groove in the radial direction, and the spacer portion is adjacent to the protruding portion in the radial direction.

As for the coil component according to the first disclosure, the groove may extend in a spiral shape along the multiple turn portions.

As for the coil component according to the first disclosure,
the groove may contain a recessed location, and
at least a portion of the projecting piece (of the first planar coil) may be located at the recessed location.

As for the coil component according to the first disclosure, the projecting piece may extend from the inner circumferential edge and the outer circumferential edge of the turn portion.

As for the coil component according to the first disclosure, the projecting piece may extend only from the outer circumferential edge of the turn portion.

As for the coil component according to the first disclosure, the turn portion that is connected to the projecting piece may have a through-hole at a position at which the turn portion is adjacent to the projecting piece in the radial direction.

A method of manufacturing a coil component according to the first disclosure includes: a step of preparing a coil intermediate material that includes multiple turn portions that are arranged in a radial direction and a connection portion that connects the turn portions adjacent to each other in the radial direction;
a step of preparing a mold on which a protuberance is formed;
a step of placing the coil intermediate material on the mold such that the connection portion faces the protuberance, and the turn portions that are connected by the connection portion and that are adjacent to each other face a portion of the mold that differs from the protuberance;
a step of pressing a mold material against the mold with the coil intermediate material interposed therebetween, relatively pressing the protuberance into the mold material with the connection portion interposed therebetween, consequently separating the connection portion from one of the turn portions adjacent to each other, bending the connection portion such that the connection portion leaves from the turn portion, and forming a groove on the mold material; and
a step of solidifying the mold material and subsequently removing the mold material from the mold.

In the method of manufacturing the coil component according to the first disclosure,
the mold may include positioning protrusions that extend upward from the portion that differs from the protuberance,
the turn portions to which the connection portion is connected may have through-holes at positions at which the turn portions are adjacent to the connection portion in the radial direction, and
the coil intermediate material may be placed on the mold with the positioning protrusions extending through the through-holes.

In the method of manufacturing the coil component according to the first disclosure, the connection portion may include a constriction portion a sectional area of which locally decreases.

In the method of manufacturing the coil component according to the first disclosure, the constriction portion may be formed at an intermediate position on the connection portion in the radial direction.

In the method of manufacturing the coil component according to the first disclosure, the constriction portion may be formed at an outer end portion of the connection portion in the radial direction.

A method of manufacturing a coil component according to the first disclosure includes: a step of preparing a pre-coil component that includes a first planar coil that includes multiple turn portions that are arranged in a radial direction and a first holding member that is in contact with the multiple turn portions and that overlaps the first planar coil, the first holding member having a groove on a surface on which the first planar coil is stacked, the groove opening from between the turn portions adjacent to each other, the pre-coil component further including a protruding portion that projects from the groove;
a step of preparing a second coil intermediate material that includes multiple turn portions that are arranged in a radial direction and a connection portion that connects the turn portions adjacent to each other in the radial direction;
a step of stacking the second coil intermediate material with the first planar coil such that the connection portion faces the protruding portion, and
a step of pressing the connection portion against the protruding portion, separating the connection portion from one of the turn portions that are connected by the connection portion and that are adjacent to each other, and bending the connection portion such that the connection portion leaves from the turn portion.

A power transmitter according to the first disclosure includes: any one of the coil components according to the first disclosure.

A power receiver according to the first disclosure includes: any one of the coil components according to the first disclosure.

A power transmission system according to the first disclosure includes:
a power transmitter; and a power receiver, and
at least the power transmitter or the power receiver includes any one of the coil components according to the first disclosure.

A mobile body according to the first disclosure includes: any one of the coil components according to according to the first disclosure.

According to the first disclosure, a planar coil can be inhibited from floating from a member that is formed into a single body together with the planar coil.

### <Second Disclosure>

It is an object of the second disclosure to provide a coil component, a method of manufacturing the coil component, a coil intermediate material, a power transmitter, a power receiver, a power transmission system, and a mobile body that enable a planar coil to be inhibited from floating from a sheet material that is formed into a single body together with the planar coil.

A coil component according to the second disclosure includes:
a planar coil that has a spiral shape and that has a first surface and a second surface opposite each other in an axial direction that extends along a central axis of the spiral shape; and a first holding member that overlaps the planar coil such that the first holding member faces the second surface and that holds the planar coil, the planar coil has a path hole that extends from the first surface to the second surface, and the first holding member includes a base portion having a contact surface that is in contact with the second surface and that extends along the second surface and a rib portion that projects from the contact surface, that extends through the path hole, and that is in contact with or close to an inner circumferential surface of the path hole in a radial direction of the planar coil perpendicular to the central axis.

As for the coil component according to the second disclosure,
the first holding member may include a plurality of the rib portions, and
the plurality of the rib portions may be arranged at an interval in the radial direction.

As for the coil component according to the second disclosure,
the rib portion may include a raised portion that is in contact with or close to the path hole in the radial direction and crosses the planar coil in the axial direction and an overhang portion that extends from the raised portion in the radial direction and that faces the first surface.

A coil component according to the second disclosure includes:
a planar coil that has a spiral shape and that has a first surface and a second surface opposite each other in an axial direction that extends along a central axis of the spiral shape; and
a first holding member that overlaps the planar coil such that the first holding member faces the second surface and that holds the planar coil,
the first holding member includes a base portion having a contact surface that is in contact with the second surface and that extends along the second surface and a rib portion that projects from the contact surface and that is in contact with or close to a side surface of the planar coil that is located between the first surface and the second surface in a radial direction of the planar coil perpendicular to the central axis, and
the rib portion includes a raised portion that is in contact with or close to the side surface of the planar coil in the radial direction and that crosses the planar coil in the axial direction and an overhang portion that extends from the raised portion in the radial direction and that faces the first surface.

As for the coil component according to the second disclosure,
the raised portion may extend in a spiral shape along the planar coil that has the spiral shape.

As for the coil component according to the second disclosure,
the raised portion may include an inner raised portion that is in contact with or close to an inner circumferential side surface of the side surface that faces the central axis in the radial direction and an outer raised portion that is in contact with or close to an outer circumferential side surface of the side surface opposite the inner circumferential side surface, and
the inner raised portion and the outer raised portion may be separated from each other in the radial direction and project from the contact surface.

As for the coil component according to the second disclosure,
the rib portion may include a plurality of the overhang portions, and
the plurality of the overhang portions may be provided at an interval in a direction in which the planar coil extends in the spiral shape.

As for the coil component according to the second disclosure,
the plurality of the overhang portions may be arranged at an interval in the radial direction or a direction parallel with the radial direction.

As for the coil component according to the second disclosure, the overhang portion may partly cover the first surface.

As for the coil component according to the second disclosure,
the overhang portion may cover a range of 25% or less of an area of the first surface.

As for the coil component according to the second disclosure,
the first holding member may exert no magnetism and may have insulation properties.

The coil component according to the second disclosure may further include:
a second holding member that exerts magnetism and that is formed into a single body together with the planar coil and the first holding member such that the planar coil is sandwiched between the second holding member and the first holding member.

As for the coil component according to the second disclosure,
the planar coil may include multiple turn portions that are arranged in a radial direction,
the first holding member may have a groove at a position on the contact surface between the turn portions adjacent to each other, and
the second holding member may be filled in the groove.

The coil component according to the second disclosure may further include:
a first magnetic shield member that faces the first surface of the planar coil,
the first magnetic shield member may include multiple magnetic plates that exert magnetism, and
the multiple magnetic plates may include two of the magnetic plates that sandwich the plurality of the overhang portions arranged at the interval in the radial direction.

The coil component according to the second disclosure may further include:
an adhesive layer that contains thermoplastic resin that joins the second surface and the contact surface to each other.

As for the coil component according to the second disclosure,
surface roughness of the second surface may be more than surface roughness of the first surface.

A method of manufacturing a coil component according to the second disclosure includes:
a step of preparing a mold on which a recessed portion is formed;
a step of preparing a planar coil that has a spiral shape and that has a first surface and a second surface opposite each other in an axial direction that extends along a central axis of the spiral shape;
a step of placing the planar coil on the mold with the first surface facing a surface of the mold on which the recessed portion is formed and with the planar coil partly covering the recessed portion; and
a step of providing a mold material such that the mold material covers the second surface, forming a portion that fills the recessed portion and a portion that covers the second surface from the mold material, and solidifying the mold material with the portion that fills the recessed portion and the portion that covers the second surface being connected to each other.

In the method of manufacturing the coil component according to the second disclosure,
the planar coil may have a path hole that extends from the first surface to the second surface, and
the planar coil may be placed on the mold with the path hole overlapping the recessed portion, and the mold material is filled in the recessed portion from the path hole.

In the method of manufacturing the coil component according to the second disclosure,
the planar coil may be placed on the mold with the planar coil partly covering the recessed portion, and
the mold material may be filled in the recessed portion from a part of the recessed portion that is not covered by the planar coil.

In the method of manufacturing the coil component according to the second disclosure,
the mold may include a support portion that is located inside the recessed portion, and
the planar coil may be placed on the mold such that a portion of the planar coil that covers the recessed portion overlaps the support portion.

A method of manufacturing a coil component according to the second disclosure includes:
a step of preparing a mold;
a step of preparing a planar coil that has a spiral shape, that has a first surface and a second surface opposite each other in an axial direction that extends along a central axis of the spiral shape, and that has a path hole that extends from the first surface to the second surface;
a step of placing the planar coil on the mold; and
a step of providing a mold material such that the mold material covers the second surface, forming a portion that fills the path hole and a portion that covers the second surface from the mold material, and solidifying the mold material with the portion that fills the path hole and the portion that covers the second surface being connected to each other.

A coil intermediate material according to the second disclosure includes:
a planar coil that has a spiral shape and that has a first surface and a second surface opposite each other in an axial direction that extends along a central axis of the spiral shape; and
a first holding member that overlaps the planar coil such that the first holding member faces the second surface and that holds the planar coil,
the planar coil has a path hole that extends from the first surface to the second surface, and
the first holding member includes a base portion having a contact surface that is in contact with the second surface and that extends along the second surface and a rib portion that projects from the contact surface, that extends through the path hole, and that is in contact with or close to an inner circumferential surface of the path hole in a radial direction of the planar coil perpendicular to the central axis.

A coil intermediate material according to the second disclosure includes:
a planar coil that has a spiral shape and that has a first surface and a second surface opposite each other in an axial direction that extends along a central axis of the spiral shape; and
a first holding member that overlaps the planar coil such that the first holding member faces the second surface and that holds the planar coil,
the first holding member includes a base portion having a contact surface that is in contact with the second surface and that extends along the second surface and a rib portion that projects from the contact surface and that is in contact with or close to a side surface of the planar coil that is located between the first surface and the second surface in a radial direction of the planar coil perpendicular to the central axis, and
the rib portion includes a raised portion that is in contact with or close to the side surface of the planar coil in the radial direction and that crosses the planar coil in the axial direction and an overhang portion that extends from the raised portion in the radial direction and that faces the first surface.

A power transmitter according to the second disclosure includes: any one of the coil components according to the second disclosure.

A power receiver according to the second disclosure includes: any one of the coil components according to the second disclosure.

A power transmission system according to the second disclosure includes:
a power transmitter; and a power receiver, and
at least the power transmitter or the power receiver includes any one of the coil components according to the second disclosure.

A mobile body according to the second disclosure includes: any one of the coil components according to the second disclosure.

According to the second disclosure, a planar coil can be inhibited from floating from a sheet material that is formed into a single body together with the planar coil.

### <Third Disclosure>

It is an object of the third disclosure to provide a coil component, a method of manufacturing the coil component, a power transmitter, a power receiver, a power transmission system, and a mobile body that enable a holding member that holds a coil to be inhibited from warping.

A coil component according to the third disclosure includes:
a planar coil that has a spiral shape and that has a first surface and a second surface opposite each other in an axial direction that extends along a central axis of the spiral shape;
a first holding member that overlaps the planar coil such that the first holding member faces the second surface and that holds the planar coil; and
a second holding member that is formed into a single body together with the planar coil and the first holding member such that the planar coil is sandwiched between the second holding member and the first holding member,
the planar coil includes multiple turn portions that are arranged in a radial direction of the planar coil,
the second holding member includes a projecting portion that extends in the axial direction between turn portions of the planar coil adjacent to each other,
the first holding member has a contact surface in contact with the second surface and an outer surface opposite the contact surface,
a first groove that receives the projecting portion is formed on the contact surface,
a second groove is formed on the outer surface, and
the second groove is formed in a region on the outer surface that overlaps a region on the contact surface that contains the central axis and the first groove when viewed in the axial direction.

As for the coil component according to the third disclosure,
the second groove may be formed along the spiral shape of the planar coil when viewed in the axial direction.

**As** for the coil component according to the third disclosure,
a width of the second groove may be 0.2 times to 1.1 times a width of the first groove.

As for the coil component according to the third disclosure,
a depth of the second groove may be 0.2 times to 1.1 times a depth of the first groove.

As for the coil component according to the third disclosure,
a volume of the second groove may be 0.2 times to 1.1 times a volume of the first groove.

As for the coil component according to the third disclosure,
the second groove may not overlap the first groove when viewed in the axial direction.

A coil component according to the third disclosure includes:
a planar coil that has a spiral shape and that has a first surface and a second surface opposite each other in an axial direction that extends along a central axis of the spiral shape;
a first holding member that overlaps the planar coil such that the first holding member faces the second surface and that holds the planar coil; and
a second holding member that is formed into a single body together with the planar coil and the first holding member such that the planar coil is sandwiched between the second holding member and the first holding member,
the planar coil includes multiple turn portions that are arranged in a radial direction of the planar coil,
the second holding member includes a projecting portion that extends in the axial direction between turn portions of the planar coil adjacent to each other,
the first holding member has a contact surface in contact with the second surface and an outer surface opposite the contact surface,
a first groove that receives the projecting portion is formed on the contact surface,
at least one rib is formed on the outer surface, and
the at least one rib is formed in a region on the outer surface that overlaps a region on the contact surface that contains the central axis and the first groove when viewed in the axial direction.

As for the coil component according to the third disclosure,
the at least one rib may include multiple ribs that extend in directions in which these intersect with each other.

As for the coil component according to the third disclosure,
the at least one rib may include multiple ribs, and the multiple ribs may be formed in a lattice shape when viewed in the axial direction.

As for the coil component according to the third disclosure,
the first holding member may exert no magnetism and may have an insulation property.

As for the coil component according to the third disclosure,
the second holding member may exert magnetism.

As for the coil component according to the third disclosure,
the planar coil may have a plate shape.

As for the coil component according to the third disclosure,
the planar coil may be composed of Litz wire.

A coil intermediate material according to the third disclosure includes:
a planar coil that has a spiral shape and that has a first surface and a second surface opposite each other in an axial direction that extends along a central axis of the spiral shape; and
a first holding member that overlaps the planar coil such that the first holding member faces the second surface and that holds the planar coil,
the planar coil includes multiple turn portions that are arranged in a radial direction of the planar coil,
the first holding member has a contact surface in contact with the second surface and an outer surface opposite the contact surface,
a first groove is formed on the contact surface,
a second groove is formed on the outer surface,
the first groove is formed along the spiral shape of the planar coil between turn portions of the planar coil adjacent to each other when viewed in the axial direction, and
the second groove is formed in a region on the outer surface that overlaps a region on the contact surface that contains the central axis and the first groove when viewed in the axial direction.

As for the coil intermediate material according to the third disclosure,
the second groove may be formed along the spiral shape of the planar coil when viewed in the axial direction.

A coil intermediate material according to the third disclosure includes:
a planar coil that has a spiral shape and that has a first surface and a second surface opposite each other in an axial direction that extends along a central axis of the spiral shape; and
a first holding member that overlaps the planar coil such that the first holding member faces the second surface and that holds the planar coil,
the planar coil includes multiple turn portions that are arranged in a radial direction of the planar coil,
the first holding member has a contact surface in contact with the second surface and an outer surface opposite the contact surface,
a first groove is formed on the contact surface,
at least one rib is formed on the outer surface,
the first groove is formed along the spiral shape of the planar coil between turn portions of the planar coil adjacent to each other when viewed in the axial direction, and
the at least one rib is formed in a region on the outer surface that overlaps a region on the contact surface that contains the central axis and the first groove when viewed in the axial direction.

As for the coil intermediate material according to the third disclosure,
the at least one rib may include multiple ribs that extend in directions in which these intersect with each other.

A power transmitter according to the third disclosure includes: any one of the coil components according to the third disclosure.

A power receiver according to the third disclosure includes: any one of the coil components according to the third disclosure.

A power transmission system according to the third disclosure includes:
a power transmitter; and a power receiver, and
at least the power transmitter or the power receiver includes any one of the coil components according to the third disclosure.

A mobile body according to the third disclosure includes: any one of the coil components according to the third disclosure.

According to the third disclosure, a holding member that holds a coil can be inhibited from warping.

### <Fourth Disclosure>

It is an object of the fourth disclosure to provide a coil component, a method of manufacturing the coil component, a power transmitter, a power receiver, a power transmission system, and a mobile body that enable the possibility that the strength of the coil component is decreased due to formation of a wall composed of a magnetic material to be decreased and that enable the coil component that includes the wall composed of the magnetic material to be easily manufactured.

A coil component according to the fourth disclosure includes:
a planar coil that has a spiral shape and that has a first surface and a second surface opposite the first surface;
a first holding member that overlaps the planar coil such that the first holding member faces the first surface and holds the planar coil; and
a second holding member configured such that the planar coil is sandwiched between the second holding member and the first holding member,
the planar coil includes multiple turn portions that are arranged in a coil radial direction that is a radial direction of the planar coil,
the first holding member has a contact surface in contact with the first surface,
a groove that extends between turn portions of the planar coil adjacent to each other is formed on the contact surface when viewed in a coil axial direction that is an axial direction of the planar coil,
the second holding member includes a foundation portion in contact with the second surface of the planar coil and a wall portion that extends from the foundation portion into the groove of the first holding member between turn portions of the planar coil adjacent to each other, and
a width of a bottom portion of the groove is less than a width of the groove at a height position of the contact surface.

As for the coil component according to the fourth disclosure,
a surface of the first holding member that defines the groove may include a pair of groove side surfaces that face each other in the coil radial direction, and
at least one groove side surface of the pair of groove side surfaces may include an inclined surface that is inclined with respect to the coil axial direction.

As for the coil component according to the fourth disclosure,
of the pair of groove side surfaces, a groove side surface that is located outside in the coil radial direction may include the inclined surface that is inclined with respect to the coil axial direction.

As for the coil component according to the fourth disclosure,
of the pair of groove side surfaces, a groove side surface that is located inside in the coil radial direction may include the inclined surface that is inclined with respect to the coil axial direction.

As for the coil component according to the fourth disclosure,
both of the pair of groove side surfaces may include respective inclined surfaces that are inclined with respect to the coil axial direction.

As for the coil component according to the fourth disclosure,
the wall portion may include a base end portion that extends from the foundation portion in the coil axial direction and that has a uniform width, and
a dimension in the coil axial direction of the base end portion may be more than a thickness of the planar coil.

As for the coil component according to the fourth disclosure,
a distance between a top portion of the groove and the contact surface may be 2 mm or more.

As for the coil component according to the fourth disclosure,
the width of the bottom portion of the groove may be 1/2 or less of the width of the groove at the height position of the contact surface.

As for the coil component according to the fourth disclosure,
the first holding member may contain a fiber.

As for the coil component according to the fourth disclosure,
the first holding member may exert no magnetism and may have an insulation property.

As for the coil component according to the fourth disclosure,
the second holding member may exert magnetism.

As for the coil component according to the fourth disclosure,
the planar coil may have a plate shape.

A power transmitter according to the fourth disclosure includes: any one of the coil components according to the fourth disclosure.

A power receiver according to the fourth disclosure includes: any one of the coil components according to the fourth disclosure.

A power transmission system according to the fourth disclosure includes:
a power transmitter; and a power receiver, and
at least the power transmitter or the power receiver includes any one of the coil components according to the fourth disclosure.

A mobile body according to the fourth disclosure includes: any one of the coil components according to the fourth disclosure.

A method of manufacturing the coil component according to the fourth disclosure includes:
a step of preparing a mold that includes a body part and a protuberance that extends from the body part and that has a spiral shape;
a step of disposing a planar coil that has a spiral shape that corresponds to the spiral shape of the protuberance on the body part of the mold such that the protuberance extends from between turn portions of the planar coil adjacent to each other;
a step of molding a first holding member by pressing a material for manufacturing the first holding member against the mold on which the planar coil is disposed and manufacturing a coil intermediate material that is a single body of the first holding member and the planar coil;
a step of removing the mold from the coil intermediate material; and
a step of forming a second holding member that covers the planar coil on the coil intermediate material after the mold is removed from the coil intermediate material, and
a width of a top portion of the protuberance of the mold is less than a width of the protuberance at a position of connection with the body part.

In the method of manufacturing the coil component according to the fourth disclosure,
the protuberance may have a pair of mold side surfaces that face each other in a mold radial direction that is a radial direction of the protuberance, and
at least one mold side surface of the pair of mold side surfaces may include an inclined surface that is inclined with respect to a mold axial direction that is an axial direction of the protuberance.

In the method of manufacturing the coil component according to the fourth disclosure,
of the pair of mold side surfaces, a mold side surface that is located outside in the mold radial direction may include the inclined surface that is inclined with respect to the mold axial direction.

In the method of manufacturing the coil component according to the fourth disclosure,
of the pair of mold side surfaces, a mold side surface that is located inside in the mold radial direction may include the inclined surface that is inclined with respect to the mold axial direction.

In the method of manufacturing the coil component according to the fourth disclosure,
both of the pair of mold side surfaces may include respective inclined surfaces that are inclined with respect to the mold axial direction.

In the method of manufacturing the coil component according to the fourth disclosure,

the width of the top portion of the protuberance may be 1/2 or less of a width of the protuberance at a position of connection with the body part.

According to the fourth disclosure, the possibility that the strength of the coil component is decreased due to formation of a wall composed of a magnetic material can be decreased, and the coil component that includes the wall composed of the magnetic material can be easily manufactured.

### Brief Description of Drawings

[Fig. 1] Fig. 1 schematically illustrates a wireless power transmission system for which coil components according to first to fourth disclosures are used.
[Fig. 2] Fig. 2 is a plan view of a coil component according to a first embodiment of the first disclosure.
[Fig. 3] Fig. 3 is a perspective view of a portion of the coil component illustrated in Fig. 2.
[Fig. 4] Fig. 4 is a sectional view taken along a line F4-F4 in Fig. 2.
[Fig. 5] Fig. 5 is a sectional view taken along a line F5-F5 in Fig. 2.
[Fig. 6] Fig. 6 is a plan view of a coil intermediate material for manufacturing the coil component illustrated in Fig. 2.
[Fig. 7] Fig. 7 illustrates an example of a method of manufacturing the coil component illustrated in Fig. 2.
[Fig. 8] Fig. 8 illustrates the example of the method of manufacturing the coil component illustrated in Fig. 2.
[Fig. 9] Fig. 9 illustrates the example of the method of manufacturing the coil component illustrated in Fig. 2.
[Fig. 10] Fig. 10 illustrates the example of the method of manufacturing the coil component illustrated in Fig. 2.
[Fig. 11] Fig. 11 illustrates a modification to the coil intermediate material illustrated in Fig. 6.
[Fig. 12] Fig. 12 is a sectional view of a coil component according to a second embodiment of the first disclosure.
[Fig. 13] Fig. 13 is a perspective view of a coil component according to a third embodiment of the first disclosure.
[Fig. 14] Fig. 14 is a sectional view of the coil component illustrated in Fig. 13.
[Fig. 15] Fig. 15 illustrates a coil intermediate material for manufacturing the coil component illustrated in Fig. 13.
[Fig. 16] Fig. 16 is a perspective view of a coil component according to a fourth embodiment of the first disclosure.
[Fig. 17] Fig. 17 is a sectional view of the coil component illustrated in Fig. 16.
[Fig. 18] Fig. 18 is a perspective view of a coil component according to a fifth embodiment of the first disclosure.
[Fig. 19] Fig. 19 is a sectional view taken along a line F19-F19 in Fig. 18.
[Fig. 20] Fig. 20 is a sectional view taken along a line F20-F20 in Fig. 18.
[Fig. 21] Fig. 21 illustrates an example of a method of manufacturing the coil component illustrated in Fig. 18.
[Fig. 22] Fig. 22 illustrates the example of the method of manufacturing the coil component illustrated in Fig. 18.
[Fig. 23] Fig. 23 illustrates the example of the method of manufacturing the coil component illustrated in Fig. 18.
[Fig. 24] Fig. 24 illustrates the example of the method of manufacturing the coil component illustrated in Fig. 18.
[Fig. 25] Fig. 25 illustrates the example of the method of manufacturing the coil component illustrated in Fig. 18.
[Fig. 26] Fig. 26 is a plan view of a coil component according to a first embodiment of the second disclosure.
[Fig. 27] Fig. 27 is an exploded perspective view of the coil component illustrated in Fig. 26.
[Fig. 28] Fig. 28 is a sectional view of the coil component illustrated in Fig. 26.
[Fig. 29] Fig. 29 is a plan view of a first planar coil and a first holding member that are included in the coil component illustrated in Fig. 26.
[Fig. 30] Fig. 30 is a sectional view taken along a line F30-F30 in Fig. 29.
[Fig. 31] Fig. 31 is a perspective view of a section illustrated in Fig. 30.
[Fig. 32] Fig. 32 is a sectional view taken along a line F32-F32 in Fig. 29.
[Fig. 33] Fig. 33 is a sectional view taken along a line F33-F33 in Fig. 29.
[Fig. 34] Fig. 34 is a perspective view of a mold for manufacturing the coil component illustrated in Fig. 26.
[Fig. 35] Fig. 35 is a sectional view taken along a line F35-F35 in Fig. 34.
[Fig. 36] Fig. 36 is a sectional view taken along a line F36-F36 in Fig. 34.
[Fig. 37] Fig. 37 is a sectional view taken along a line F37-F37 in Fig. 34.
[Fig. 38] Fig. 38 illustrates an example of a method of manufacturing the coil component illustrated in Fig. 26.
[Fig. 39] Fig. 39 illustrates the example of the method of manufacturing the coil component illustrated in Fig. 26.
[Fig. 40] Fig. 40 illustrates the example of the method of manufacturing the coil component illustrated in Fig. 26.
[Fig. 41] Fig. 41 is a sectional view of a coil component according to a second embodiment of the second disclosure.
[Fig. 42] Fig. 42 is a sectional view of a mold for manufacturing the coil component illustrated in Fig. 41.
[Fig. 43] Fig. 43 illustrates an example of a method of manufacturing the coil component illustrated in Fig. 41.
[Fig. 44] Fig. 44 is a sectional view of a modification to the mold illustrated in Fig. 42.
[Fig. 45] Fig. 45 is a plan view of a coil component according to a third embodiment of the second disclosure.
[Fig. 46] Fig. 46 is a sectional view taken along a line F46-F46 in Fig. 45.
[Fig. 47] Fig. 47 is a sectional view taken along a line F47-F47 in Fig. 45.
[Fig. 48] Fig. 48 is a sectional view of a coil component according to another embodiment of the second disclosure.
[Fig. 49] Fig. 49 is a sectional view of a coil component according to another embodiment of the second disclosure.
[Fig. 50] Fig. 50 is a plan view of a coil component according to an embodiment of the third disclosure.
[Fig. 51] Fig. 51 is an exploded perspective view of the coil component illustrated in Fig. 50.
[Fig. 52] Fig. 52 is a sectional view of the coil component illustrated in Fig. 50.
[Fig. 53] Fig. 53 is a perspective view of a coil intermediate material illustrated in Fig. 52 viewed from above a planar coil.
[Fig. 54] Fig. 54 is a perspective view of the coil intermediate material illustrated in Fig. 53 viewed from above an outer surface of a first holding member.
[Fig. 55] Fig. 55 is a plan view of the coil intermediate material illustrated in Fig. 54.
[Fig. 56] Fig. 56 is a perspective view of a mold for molding the first holding member illustrated in Fig. 54 and Fig. 55.
[Fig. 57] Fig. 57 is a sectional view for describing an example of a method of manufacturing the coil component illustrated in Fig. 50.
[Fig. 58] Fig. 58 is a plan view of the outer surface of the first holding member for describing a modification to a coil component according to the fourth disclosure.
[Fig. 59] Fig. 59 illustrates a section of the first holding member taken along a line F59-F59 in Fig. 58.
[Fig. 60] Fig. 60 illustrates a section of the first holding member taken along a line F60-F60 in Fig. 58.
[Fig. 61] Fig. 61 is an exploded perspective view of a coil component according to an embodiment of the fourth disclosure.
[Fig. 62] Fig. 62 is a sectional view of the coil component illustrated in Fig. 61 taken in a coil axial direction.
[Fig. 63] Fig. 63 is a plan view of a coil intermediate material for the coil component illustrated in Fig. 61.
[Fig. 64] Fig. 64 is a sectional view for describing an example of a method of manufacturing the coil component illustrated in Fig. 61.
[Fig. 65] Fig. 65 is a sectional view for describing the example of the method of manufacturing the coil component illustrated in Fig. 61.
[Fig. 66] Fig. 66 is a sectional view for describing the example of the method of manufacturing the coil component illustrated in Fig. 61.
[Fig. 67] Fig. 67 is a sectional view for describing the example of the method of manufacturing the coil component illustrated in Fig. 61.
[Fig. 68] Fig. 68 corresponds to an enlarged view of a portion in Fig. 62 and is a diagram for describing a modification to the coil component according to the fourth disclosure.
[Fig. 69] Fig. 69 corresponds to the enlarged view of the portion in Fig. 62 and is a diagram for describing another modification to the coil component according to the fourth disclosure.
[Fig. 70] Fig. 70 corresponds to the enlarged view of the portion in Fig. 62 and is a diagram for describing another modification to the coil component according to the fourth disclosure.
[Fig. 71] Fig. 71 corresponds to the enlarged view of the portion in Fig. 62 and is a diagram for describing another modification to the coil component according to the fourth disclosure.
[Fig. 72] Fig. 72 corresponds to the enlarged view of the portion in Fig. 62 and is a diagram for describing another modification to the coil component according to the fourth disclosure.
[Fig. 73] Fig. 73 is a table illustrating the result of a simulation.
[Fig. 74] Fig. 74 is a graph illustrating the result of the simulation.
[Fig. 75] Fig. 75 corresponds to the enlarged view of the portion in Fig. 62 and is an enlarged view of a sectional portion of a coil component in which the width of a wall portion is uniform in the coil axial direction.
[Fig. 76] Fig. 76 corresponds to Fig. 64 and is a diagram for describing a method of manufacturing the coil component illustrated in Fig. 75.

### Description of Embodiments

Embodiments will hereinafter be described with reference to the drawings.

In the present specification, words such as a "sheet", a "film", and a "plate" are not distinguished from each other only based on different names. Accordingly, for example, the "sheet" has a concept that includes a member that can be referred to as a film or a plate.

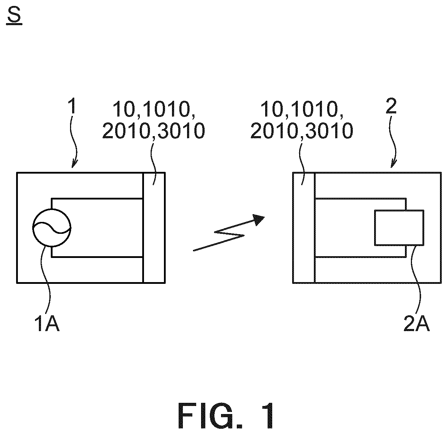

Fig. 1 schematically illustrates a wireless power transmission system S for which coil components 10, 1010, 2010, and 3010 according to first to fourth disclosures are used. The wireless power transmission system S (abbreviated below as the power transmission system S) will now be described with reference to Fig. 1.

### <Wireless Power Transmission System>

The power transmission system S includes a power transmitter 1 and a power receiver 2. The power transmitter 1 includes a coil component 10, 1010, 2010, or 3010 and a high-frequency current applying unit 1A. The coil component 10, 1010, 2010, or 3010 of the power transmitter 1 functions as a power transmission coil. The high-frequency current applying unit 1A applies a high-frequency current to the coil component 10, 1010, 2010, or 3010 that functions as the power transmission coil.

The power receiver 2 includes a coil component 10, 1010, 2010, or 3010 and a converter 2A. The coil component 10, 1010, 2010, or 3010 of the power receiver 2 functions as a power reception coil. The converter 2A modulates a high-frequency current that is generated at the coil component 10, 1010, 2010, or 3010. For example, the converter 2A includes a rectifier circuit that converts the high-frequency current into a direct current. For example, the converter 2A may be configured to include a full-wave rectifier circuit that includes multiple diodes and a smoothing capacitor.

According to the present embodiment, the power transmitter 1 and the power receiver 2 include the respective coil components 10, 1010, 2010, or 3010. However, the power transmitter 1 or the power receiver 2 may include the coil component 10, 1010, 2010, or 3010, and another coil component may be used for the other.

When power is wirelessly (non-contact) transmitted from the power transmitter 1 to the power receiver 2, the power transmitter 1 applies a high-frequency current at a predetermined frequency from the high-frequency current applying unit 1A to the coil component 10, 1010, 2010, or 3010 that functions as the power transmission coil. At this time, a magnetic field is generated at the coil component 10, 1010, 2010, or 3010 due to electromagnetic induction. As for the power receiver 2, a high-frequency current is generated at the coil component 10, 1010, 2010, or 3010 that functions as the power reception coil due to the influence of the magnetic field. That is, the power receiver 2 receives the magnetic field from the power transmitter 1 or is affected by the magnetic field at the power transmitter 1 and causes the high-frequency current to flow due to the electromagnetic induction. The converter 2A converts the high-frequency current into a direct current and applies the converted direct current to, for example, a battery not illustrated.

A power transmission method that is used for the power transmission system S illustrated in Fig. 1 is a magnetic resonance method. However, the coil components 10, 1010, 2010, and 3010 according to the present embodiment may be used for a power transmission system in an electromagnetic induction method. The power transmission system S is configured to transmit power wirelessly to an electric vehicle. In this case, the power transmitter 1 is installed on a road, parking, and so on. The power receiver 2 is installed on the electric vehicle.

However, the use of the power transmission system S is not limited to power transmission to the electric vehicle. For example, the power transmission system S may be used for power transmission to a flying object such as a drone or a robot. The power transmission system S may be used for power transmission to a submersible in a sea or an exploration robot. The power transmission system S can be used for power transmission to various mobile bodies such as an electric vehicle, a flying object, a robot, and a submersible. The use of the coil components 10, 1010, 2010, and 3010 is not limited to a wireless power transmission system. For example, the coil components 10, 1010, 2010, and 3010 may be used for a transformer, a DC-DC converter, or an antenna.

### <<<Embodiments of First Disclosure>>>

Embodiments of the first disclosure will now be described with reference to the drawings.

### <<First Embodiment of First Disclosure>>

### <Coil Component>

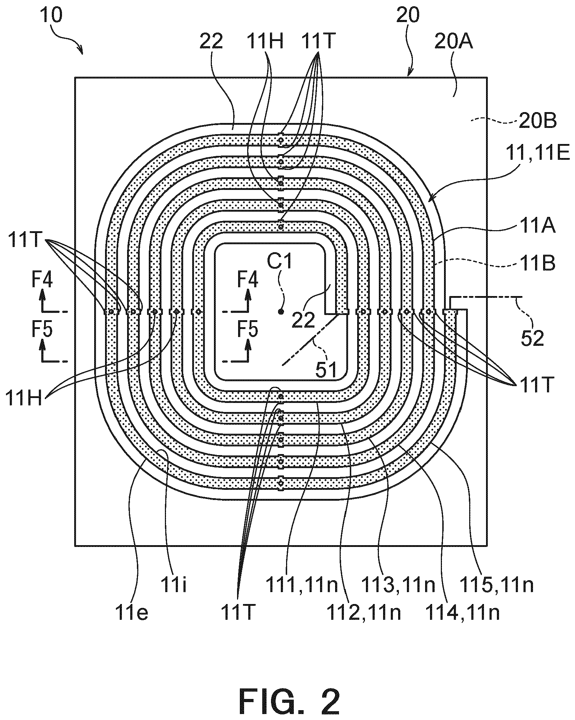

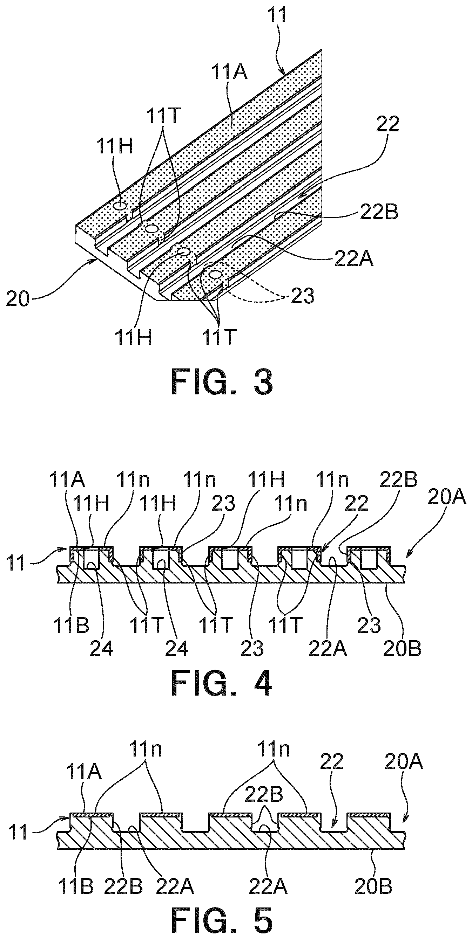

The coil component 10 according to a first embodiment will now be described. Fig. 2 is a plan view of the coil component 10. Fig. 3 is a perspective view of a portion of the coil component 10 and is specifically a perspective view of the portion of the coil component 10 taken along a line F5-F5 in Fig. 2. Fig. 4 is a sectional view taken along a line F4-F4 in Fig. 2. Fig. 5 is a sectional view taken along the line F5-F5 in Fig. 2.

As illustrated in Fig. 2 to Fig. 5, the coil component 10 includes a first planar coil 11, a first holding member 20, a first connection terminal 51, and a second connection terminal 52.

The first holding member 20 overlaps the first planar coil 11 and holds the first planar coil 11. That is, the first holding member 20 and the first planar coil 11 are formed into a single body. In Fig. 2, the first connection terminal 51 and the second connection terminal 52 are simply illustrated by using two-dot chain lines. Components of the coil component 10 will now be described in detail.

### (First Planar Coil)

The first planar coil 11 has a spiral shape and is composed of a conductive material. According to the present embodiment, the first planar coil 11 contains copper. Specifically, the first planar coil 11 is composed of copper. However, the first planar coil 11 may be composed of, for example, a copper alloy, aluminum, or an aluminum alloy.

As illustrated in Fig. 2 and Fig. 3, the first planar coil 11 has a plate shape, and a sectional shape of the first planar coil 11 in a direction perpendicular to a direction (in other words, a direction in which the spiral shape extends) in which the first planar coil 11 turns in the spiral shape is a rectangular shape.

A reference sign C1 illustrated in Fig. 2 represents the central axis of the first planar coil 11 that passes through the center of the spiral shape of the first planar coil 11. In the case where the axial direction of the first planar coil 11 is mentioned below, the direction means a direction that extends along the central axis C1 or a direction parallel with the central axis C1. A direction perpendicular to the central axis C1 is referred to as a radial direction of the first planar coil 11. The first planar coil 11 has a first surface 11A and a second surface 11B opposite each other in the axial direction. As for the first planar coil 11, the second surface 11B faces the first holding member 20.

As illustrated in Fig. 2, the first planar coil 11 includes a conductor 11E that has a spiral shape formed by multiple turn portions 11n. The multiple turn portions 11n of the first planar coil 11 are arranged in the direction (the radial direction) perpendicular to the central axis C1 of the spiral shape. Specifically, the multiple turn portions 11n are connected so as to be increasingly far away from the central axis C1 outward in the radial direction from the central axis C1 of the spiral shape. Consequently, the spiral shape is formed.

The turn portions 11n are basically formed so as to turn 360 degrees around the central axis C1 such that linear conductive portions do not form an annular shape. In the case of a so-called planar coil, both end portions of each turn portion 11n are shifted in the radial direction. As for the multiple turn portions 11n, an outer end portion in the radial direction of one of the turn portions 11n is connected to an inner end portion in the radial direction of another turn portion 11n, and the other turn portion 11n extends so as to be far away from the central axis C1.

In some cases below, one nearest to the central axis C1 among the multiple turn portions 11n is referred to as a turn portion 111. In some cases, a turn portion that is connected to the turn portion 111 is referred to as a turn portion 112. According to the present embodiment, the multiple turn portions 11n include five turn portions 111 to 115. In the following description for common matters among the multiple turn portions 11n, these are basically referred to as the turn portions 11n.

According to the present embodiment, the turn portions 11n turn so as to form a rectangular shape. However, the turn portions 11n may turn so as to form a polygonal shape other than a rectangular shape. For example, the turn portions 11n may turn so as to form an octagonal shape, a regular octagonal shape, a dodecagonal shape, or a regular dodecagonal shape. The turn portions 11n may turn so as to form a circular shape. The spiral shape described in the present specification and the present disclosure means a shape of a planar curve that is helically wound. The planar curve described herein includes a planar pattern that repeatedly turns while curving as in a polyline as illustrated. In other words, the spiral shape is a shape that turns so as to gradually extend outward around the central axis C1 of the first planar coil 11.

An inner end portion (an end portion near the central axis C1) in the radial direction of the turn portion 111 nearest to the central axis C1 is electrically connected to the first connection terminal 51. An outer end portion (an end portion that is distal from the central axis C1) in the radial direction of the turn portion 115 farthest from the central axis C1 among the multiple turn portions 11n is connected to the second connection terminal 52.

The phrase "inner in the radial direction of the first planar coil 11 (the turn portions 11n)" described herein means a radial direction toward the central axis C1. The phrase "outer in the radial direction of the first planar coil 11 (the turn portions 11n)" described herein means a radial direction away from the central axis C1. According to the present embodiment, the central axis C1 is determined as follows. Linear imaginary turn portions each of which has a shape similar to that of the turn portion 112 are sequentially drawn from an inner end portion in the radial direction of the turn portion 112 adjacent to the innermost turn portion 111 so as to form a spiral shape inward in the radial direction. Drawing continues until an imaginary turn portion can be drawn within a diameter of 1 cm. A line that passes through an inner region in the radial direction of the imaginary turn portion that is drawn within a diameter of 1 cm in a direction perpendicular to the radial direction and to the circumferential direction of the spiral shape is determined as the central axis C1.

Referring to, for example, Fig. 3 and Fig. 4, the first planar coil 11 according to the present embodiment further includes projecting pieces 11T that extend from inner circumferential edges and/or outer circumferential edges of the turn portions 11n and that bend in the axial direction such that the projecting pieces 11T leave from the turn portions 11n. The projecting pieces 11T are in contact with the first holding member 20 so as to be caught thereon. Consequently, as for the coil component 10 according to the present embodiment, the first planar coil 11 is unlikely to be shifted from the first holding member 20. The projecting pieces 11T will be described in detail later.

For example, the first planar coil 11 according to the present embodiment is formed into the spiral shape by being punched from a copper plate.

For example, the thickness (the thickness of the conductor 11E) of the first planar coil 11 may be 0.1 mm or more and 1.0 mm or less. The radius (a distance to a portion farthest from the central axis C1 in the radial direction) of the first planar coil 11 may be 80 mm or more or may be 80 mm or more and 450 mm or less. The aspect ratio of the first planar coil 11 (the conductor 11E) a sectional shape of which is a rectangular shape is determined by dividing the line width (the width in the radial direction of each turn portion 11n) of the first planar coil 11 (the conductor 11E) by the thickness of the first planar coil 11 (the conductor 11E). The aspect ratio of the first planar coil 11 (the conductor 11E) may be 40 or less, may be 2 or more and 12 or less, or may be 3 or more and 10 or less.

In the case where power is transmitted to the electric vehicle by using the magnetic resonance method, a power of 1 kW or more, preferably, 5 kW or more can be preferably transmissive in the frequency band of the high-frequency current at 10 kHz to 200 kHz, particularly, at 75 kHz or more and 100 kHz or less, or at 79 kHz to 90 kHz. In this case, the thickness of the first planar coil 11 composed of copper is preferably 0.2 mm or more. In this perspective, the lower limit of the thickness of the first planar coil 11 may be set at 0.2 mm. In the case where power is transmitted to the electric vehicle, an excessive size is not preferable, and restriction on size is imposed in some cases. In this perspective, the first planar coil 11, specifically, the conductor 11E of the first planar coil 11 is preferably formed so as to be within a squire a side of which is 800 mm in size.

The line width (the line width of the conductor 11E) of the first planar coil 11, that is, the radial width (the width in the radial direction) of each turn portion 11n is not particularly limited. In consideration that a power of 1 kW or more, preferably, 5 kW or more is made transmissive in the frequency band of the high-frequency current at, for example, 79 kHz to 90 kHz, the radial width of each turn portion 11n may be 2 mm or more and 20 mm or less, or may be 2 mm or more and 16 mm or less, 2 mm or more and 12 mm or less, or 2 mm or more and 8 mm or less. The number of turns of the first planar coil 11 may be 4 or more and 12 or less but is not particularly limited.

### (First Holding Member)

The first holding member 20 overlaps the first planar coil 11 so as to face the second surface 11B of the first planar coil 11 and holds the first planar coil 11. The first holding member 20 has a first surface 20A and an opposite second surface 20B that extend in the radial direction of the first planar coil 11, and the first surface 20A is a surface on which the first planar coil 11 is stacked. With the first planar coil 11 and the first holding member 20 being stacked, the multiple turn portions 11n of the first planar coil 11 are in contact with the first holding member 20. The first surface 20A on which the first planar coil 11 is stacked means a surface including a surface that is in contact with the first planar coil 11 and a surface that faces in the same direction as the surface and that is not in contact with the first planar coil 11.

For example, in the case where power is transmitted, the coil component 10 may cause the magnetic field that is generated at the first planar coil 11 to pass through the first holding member 20. According to the present embodiment, it is supposed that the magnetic field passes through the first holding member 20. Accordingly, the first holding member 20 preferably has no conductivity (insulation properties) and exerts no magnetism so as not to impede the magnetic field and so as not to generate an eddy current.

In consideration that non-conductivity (insulation properties) and non-magnetism are preferable, an example of the material of the first holding member 20 is resin or may be fiber reinforced plastic. More specifically, the material of the first holding member 20 may be glass fiber reinforced polyamide. However, the material of the first holding member 20 is not particularly limited. For example, glass fibers may not be contained. Thermoplastic resin or thermosetting resin other than polyamide may be used. The insulation properties mean that volume resistivity is 10¹⁰ Ω · m or more. The non-magnetism means that magnetism is not exerted.

The first holding member 20 and the first planar coil 11 are formed into a single body, and the first holding member 20 consequently holds the first planar coil 11. According to the present embodiment, the first planar coil 11 and the first holding member 20, strictly, the mold material thereof are thermally pressed, and consequently, the first planar coil 11 and the first holding member 20 are formed into a single body. For example, the single body is obtained in a manner in which the first holding member 20 bites into unevenness of the surface of the first planar coil 11 composed of metal.

The first planar coil 11 and the first holding member 20 are composed of different kinds of materials, and accordingly, strong adhesion cannot be obtained in some cases. In view of this, the first planar coil 11 according to the present embodiment includes the projecting pieces 11T described above. The first holding member 20 has grooves 22 on the first surface 20A, and the projecting pieces 11T are in contact with inner surfaces of the grooves 22 so as to be caught thereon.

As illustrated in Fig. 2, the grooves 22 extend in a spiral shape along the turn portions 11n. Specifically, the grooves 22 extend from a position in the radial direction inside the innermost turn portion 111 along the turn portion 111 and subsequently extend between the turn portions 11n adjacent to each other one after another. A sectional shape of each groove 22 taken in the radial direction is a rectangular shape, and as illustrated in Fig. 3 and Fig. 4, the inner surface of the groove 22 includes a bottom surface 22A and a pair of side surfaces 22B that extends upward from the bottom surface 22A. However, the shape of each groove 22 is not particularly limited. For example, the grooves 22 according to the present embodiment are formed into a spiral shape, but for example, the grooves 22 may be intermittently formed in a circumferential direction between the turn portions 11n adjacent to each other. The sectional shape of each groove 22 may be a trapezoidal shape or a triangular shape.

### (Connection Terminal)

As illustrated in Fig. 2, the first connection terminal 51 is connected to the inner end portion in the radial direction of the turn portion 111 of the first planar coil 11. The second connection terminal 52 is connected to the outer end portion in the radial direction of the turn portion 115 of the first planar coil 11. The first connection terminal 51 and the second connection terminal 52 can be used for, for example, connection to the high-frequency current applying unit 1A or the converter 2A. The first connection terminal 51 and the turn portion 111 may be connected to each other by ultrasonic joining, and the second connection terminal 52 and the turn portion 115 may be connected to each other by ultrasonic joining. However, a connection method is not limited but may be, for example, connection with a conductive adhesive.

### <Projecting Pieces of First Planar Coil>

The projecting pieces 11T will now be described in detail. As illustrated in Fig. 2 to Fig. 4, the projecting pieces 11T extend from the inner circumferential edge and/or the outer circumferential edge of at least one turn portion 11n among the multiple turn portions 11n and bend in the axial direction so as to leave from the turn portion 11n. According to the present embodiment, for example, all of the turn portions 11n include the projecting pieces 11T.

Specifically, as for the innermost turn portion 111, multiple projecting pieces 11T extend from only the outer circumferential edge. As for the other turn portions 112 to 115, multiple projecting pieces 11T extend from the inner circumferential edges and the outer circumferential edges of the turn portions 112 to 115. The multiple projecting pieces 11T are provided on the turn portions 11n at an interval in the circumferential direction. The multiple projecting pieces 11T that are provided on the multiple turn portions 11n include groups of projecting pieces 11T that are arranged in the radial direction, and in an illustrated example, the groups of projecting pieces 11T that are arranged in the radial direction are formed at an interval of 90 degrees in the circumferential direction. However, the number and positions of the projecting pieces 11T are not particularly limited.

The inner circumferential edges of the turn portions 11n are portions of the turn portions 11n that face the central axis C1 (inward in the radial direction), and the outer circumferential edges of the turn portions 11n are portions of the turn portions 11n that face away from the central axis C1 (outward in the radial direction). In Fig. 2, for convenience of description, the inner circumferential edge of the outermost turn portion 115 is illustrated by using a reference sign 11i, and the outer circumferential edge of the turn portion 115 is illustrated by using a reference sign 11e.

The projecting pieces 11T are in contact with the inner surfaces of the grooves 22 so as to be caught thereon as described above, and specifically, the projecting pieces 11T are in contact with the inner surfaces of the grooves 22 in the radial direction. The first planar coil 11 according to the present embodiment overlaps the first holding member 20 such that the turn portions 11n are in contact with portions of the first holding member 20 at which the grooves 22 are not formed. That is, the turn portions 11n are located outside the grooves 22. In this state, the projecting pieces 11T bend, for example, at right angles from the turn portions 11n, extend toward the bottom surfaces 22A of the grooves 22, and are in contact with the side surfaces 22B of the grooves 22.

More specifically, according to the present embodiment, the grooves 22 contain recessed locations 23 on the side surfaces 22B, and at least portions of the projecting pieces 11T (the whole according to the present embodiment) are located at the recessed locations 23 as clear from a comparison between Fig. 4 and Fig. 5. In other words, at least portions of the projecting pieces 11T are fitted into the recessed locations 23 and are embedded in the first holding member 20. The projecting pieces 11T and the inner surfaces of the recessed locations 23 are preferably joined to each other with anchor effect, but the projecting pieces 11T and the recessed locations 23 may be in contact with each other or close to each other. The grooves 22 may not contain the recessed locations 23, and the projecting pieces 11T may be in contact with the side surfaces 22B of the grooves 22 that are flat.

According to the present embodiment, the projecting pieces 11T extend so as to bend at right angles from the turn portions 11n, but the projecting pieces 11T may obliquely extend from the turn portions 11n toward the bottom surfaces 22A of the grooves 22. According to the present embodiment, the projecting pieces 11T do not reach the bottom surfaces 22A, but the projecting pieces 11T may be in contact with the bottom surfaces 22A or may be embedded in the bottom surfaces 22A.

For example, the lengths of the turn portions 11n from the second surfaces 11B to end portions of the projecting pieces 11T may be 1 mm or more, may be 1.5 mm or more, or may be 2 mm or more. From the perspective that the first planar coil 11 and the first holding member 20 are inhibited from being misaligned, for example, the lengths of the projecting pieces 11T are preferably 1 mm or more, but excessive sizes are not preferable in the perspective of electric current flow in some cases, and for example, the lengths may be 20 mm or less or may be 15 mm or less. However, the sizes and shapes of the projecting pieces 11T are not particularly limited.

As illustrated in Fig. 3 and Fig. 4, the turn portions 11n have through-holes 11H at positions adjacent to the projecting pieces 11T in the radial direction. The through-holes 11H overlap hollow portions 24 that are formed at portions of the first holding member 20 at which the grooves 22 are not formed. The first planar coil 11 and the first holding member 20 are formed into a single body by being thermally pressed by using a mold 200 as described later. During thermal pressing, positioning protrusions 204 that are formed on the mold 200 are inserted into the through-holes 11H of the first planar coil 11. The hollow portions 24 are holes that are caused by a manufacturing process and that are formed in a manner in which the positioning protrusions 204 are inserted into a mold material of which the first holding member 20 is composed. The through-holes 11H and the hollow portions 24 may not be provided.

### <Method of Manufacturing Coil Component 10>

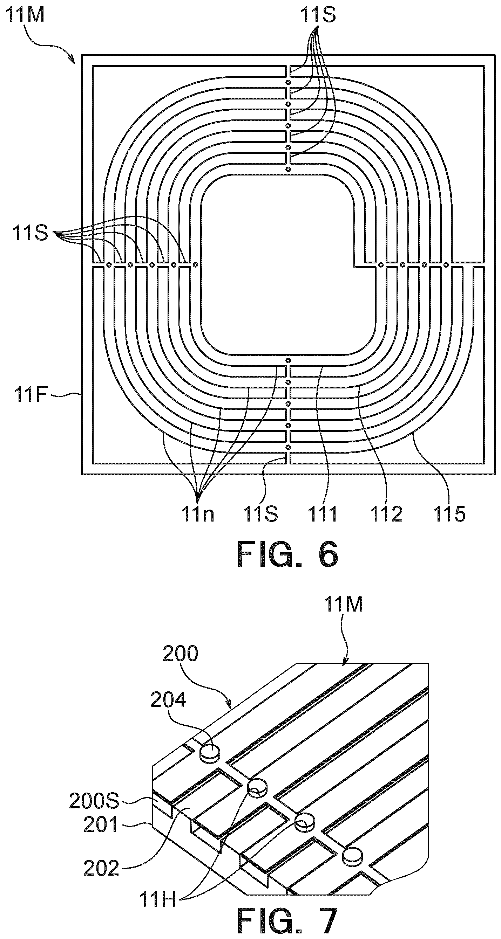

An example of a method of manufacturing the coil component 10 will now be described with reference to Fig. 6 to Fig. 11.

Fig. 6 is a plan view of a coil intermediate material 11M for manufacturing the coil component 10. When the coil component 10 is manufactured, the coil intermediate material 11M is prepared. The coil intermediate material 11M is a member that corresponds to an intermediate material for the first planar coil 11. Specifically, the first planar coil 11 is formed by being punched from the coil intermediate material 11M that is punched from a copper plate.

The coil intermediate material 11M includes the multiple turn portions 11n that are arranged in the radial direction, multiple connection portions 11S that connect the turn portions 11n adjacent to each other in the radial direction, and a frame portion 11F that surrounds the outermost turn portion 115 and that is connected to the connection portions 11S that extend from the outer circumferential edge of the turn portion 115. More specifically, the first planar coil 11 is formed in a manner in which the frame portion 11F is separated from the coil intermediate material 11M, and the connection portions 11S are separated from one of the turn portions 11n that are connected by these and that are adjacent to each other. The multiple connection portions 11S include groups of connection portions 11S that are arranged in the radial direction, and in an illustrated example, the groups of connection portions 11S that are arranged in the radial direction are formed at an interval of 90 degrees in the circumferential direction. However, the number and positions of the connection portions 11S are not particularly limited. The connection portions 11S are provided to inhibit the coil intermediate material 11M form warping.

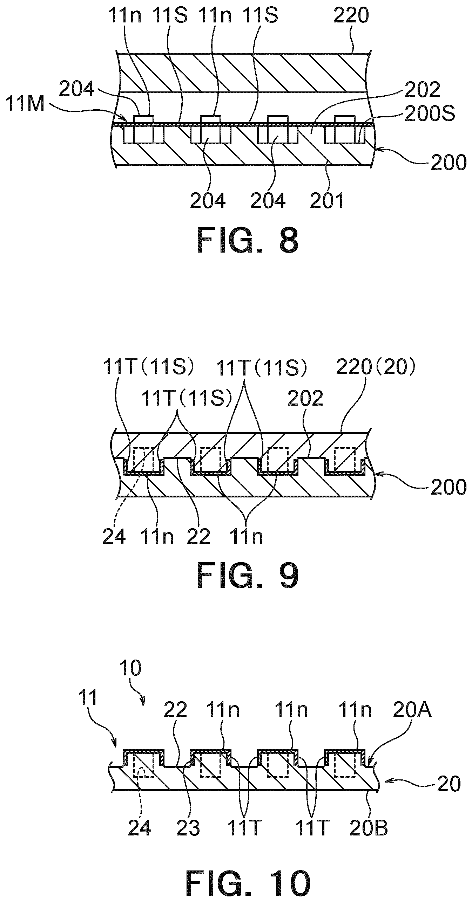

When the coil component 10 is manufactured, as illustrated in Fig. 7 and Fig. 8, the mold 200 is prepared. Fig. 7 illustrates a perspective view of a portion of the mold 200, and Fig. 8 schematically illustrates a section of the mold 200. The mold 200 includes a body portion 201 that has a plate shape and that has a flat installation surface 200S on which the first planar coil 11 is placed. Protuberances 202 that project from the installation surface 200S and that extend in a spiral shape are formed on the body portion 201. Also referring to Fig. 4 and Fig. 5, the protuberances 202 are portions at which the grooves 22 of the first holding member 20 are formed. According to the present embodiment, the multiple positioning protrusions 204 described above are formed at portions of the body portion 201 at which the protuberances 202 are not formed, that is, appropriate positions on the installation surface 200S.

After the coil intermediate material 11M and the mold 200 described above are prepared, the coil intermediate material 11M is placed on the mold 200. At this time, according to the present embodiment, as illustrated in Fig. 7 and Fig. 8, the coil intermediate material 11M is placed on the mold 200 such that the connection portions 11S face the protuberances 202 of the mold 200, and the turn portions 11n that are connected by the connection portions 11S and that are adjacent to each other face portions (the installation surface 200S) of the mold 200 that differ from the protuberances 202. The first planar coil 11 is placed such that the connection portions 11S are in contact with the protuberances 202, and consequently, the turn portions 11n float from the installation surface 200S. The first planar coil 11 is placed on the mold 200 such that the positioning protrusions 204 are inserted into the through-holes 11H that are formed in the turn portions 11n.

Subsequently, as illustrated in Fig. 8, a mold material 220 is installed on the coil intermediate material 11M. The coil intermediate material 11M and the mold material 220 are thermally pressed between the mold 200 and another mold not illustrated. During thermal pressing, the mold material 220 is softened and melted. The mold material 220 is pressed in the mold 200 with the coil intermediate material 11M interposed therebetween, and at this time, the protuberances 202 are relatively pressed into the mold material 220 with the connection portions 11S interposed therebetween. Consequently, the protuberances 202 and the positioning protrusions 204 are embedded in the mold material 220, and the mold material 220 is filled up to the installation surface 200S. At this time, according to the present embodiment, the protuberances 202 press the connection portions 11S, and consequently, the connection portions 11S are separated from one of the turn portions 11n that are connected and that are adjacent to each other and are bent so as to leave from the turn portion 11n as illustrated in Fig. 9. Consequently, the connection portions 11S are separated from one of the turn portions 11n that are connected by the connection portions 11S and that are adjacent to each other, and the projecting pieces 11T are formed from the connection portions 11S that are separated.

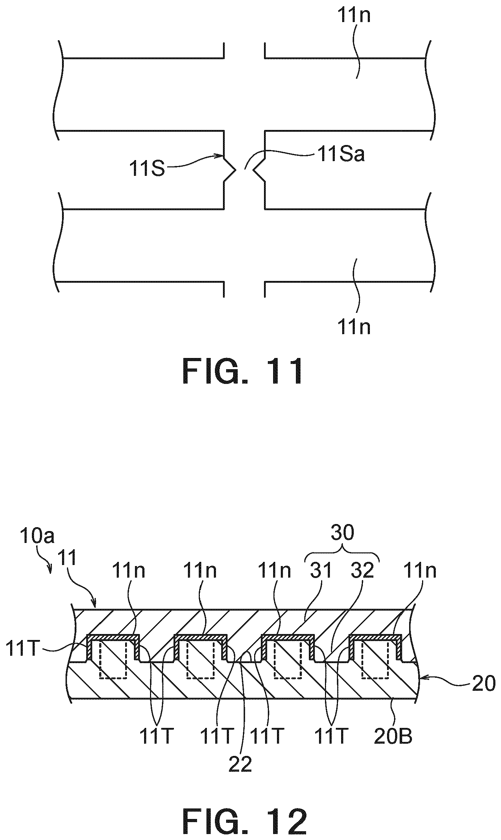

According to the present embodiment, intermediate locations in the radial direction of the connection portions 11S are cut, and consequently, the projecting pieces 11T that extend from the outer circumferential edges of inner turn portions 11n and the projecting pieces 11T that extend from the inner circumferential edges of outer turn portions 11n are formed from the connection portions 11S that are connected to the turn portions 11n adjacent to each other. In the case where pairs of projecting pieces 11T are formed from the connection portions 11S, it is necessary to cut the intermediate locations in the radial direction of the connection portions 11S by using the mold 200. For example, as illustrated in Fig. 11, the connection portions 11S may include constriction portions 11Sa a sectional area of which locally decreases at intermediate positions on the connection portions 11S in the radial direction for appropriate cutting.

After thermal pressing is performed as described above, the mold material 220 is cured (solidified), and consequently, the first holding member 20 that is formed into a single body together with the first planar coil 11 is formed. The first holding member 20 has the grooves 22 that are formed in a manner in which the protuberances 202 are inserted into the mold material 220 and the hollow portions 24 that are formed in a manner in which the positioning protrusions 204 are inserted. As illustrated in Fig. 10, the first planar coil 11 and the first holding member 20 are removed from the mold 200, and consequently, the coil component 10 is obtained. The manufacturing method is described above by way of example. For example, the first planar coil 11 and the first holding member 20 may be formed into a single body in a manner in which the mold material is injected between the mold 200 and another mold not illustrated.

### <Use of Coil Component>

The coil component 10 according to the present embodiment can be used as the power transmission coil of the power transmitter 1 of the wireless power transmission system S described above and can be used as the power reception coil of the power receiver 2.

In the case where the coil component 10 is used as the power transmission coil, the first connection terminal 51 and the second connection terminal 52 are connected to the high-frequency current applying unit 1A illustrated in Fig. 1 or an alternating-current power source. After the high-frequency current is applied to the coil component 10, an electric current can flow from the first connection terminal 51 to the high-frequency current applying unit 1A or the alternating-current power source via the first planar coil 11 and the second connection terminal 52. The electric current can flow from the second connection terminal 52 to the high-frequency current applying unit 1A or the alternating-current power source via the first planar coil 11 and the first connection terminal 51. This enables a magnetic field that includes a line of magnetic force parallel with the central axis of each planar coil to be generated.

In the case where the coil component 10 is used as the power reception coil, the magnetic field that includes the line of magnetic force is received or is generated so as to pass inside the first planar coil 11, and consequently, the high-frequency current can be generated at the first planar coil 11. The high-frequency current can be applied from the first connection terminal 51 or the second connection terminal 52 to an external device.

The coil component 10 can be used for a transformer or an antenna. For example, in the case where the coil component 10 functions as a primary coil of the transformer, the first connection terminal 51 and the second connection terminal 52 are connected to the alternating-current power source. The supply of the high-frequency current enables magnetic flux to be applied from the center of each planar coil to an iron core.

The coil component 10 according to the present embodiment described above includes the first planar coil 11 that includes the multiple turn portions 11n, the projecting pieces 11T that extend from the inner circumferential edge and/or the outer circumferential edge of at least one turn portion 11n among the multiple turn portions 11n and that bend such that the projecting pieces 11T leave from the turn portion 11n, and the first holding member 20 that is in contact with the multiple turn portions 11n of the first planar coil 11 and that overlaps the first planar coil 11. The first holding member 20 has the grooves 22 on the first surface 20A on which the first planar coil 11 is stacked, and the projecting pieces 11T are in contact with the inner surfaces of the grooves 22 in the radial direction.

As for the coil component 10, the projecting pieces 11T are in contact with the inner surfaces of the grooves 22 in the radial direction. This enables the first planar coil 11 to be inhibited from floating or being shifted from the first holding member 20 that is formed into a single body together with the first planar coil 11. In particular, according to the present embodiment, the projecting pieces 11T are formed from the connection portions 11S that are members that fulfill the inherent function mainly in the course of manufacture, and consequently, the projecting pieces 11T can be efficiently formed at low costs. When the first holding member 20 is molded, the connection portions 11S are cut by using the mold 200 that is particularly used for molding, and accordingly, the manufacturing efficiency of the coil component 10 can be improved. That is, the first holding member 20 may be molded after the connection portions 11S of the coil intermediate material 11M are cut, but according to the present embodiment, the manufacturing efficiency can be greatly improved for manufacture under these procedures.

The projecting pieces 11T are connected to the inner circumferential edges and/or the outer circumferential edges of the turn portions 11n, and consequently, the projecting pieces 11T are inhibited from adversely affecting the flow of the electric current through the turn portions 11n. Accordingly, the present embodiment enables the performance of the coil component 10 to be inhibited from declining and enables the first planar coil 11 to be inhibited from being shifted from the first holding member 20. In practice, the present inventor has not confirmed in experiments and simulations that the projecting pieces 11T cause the performance of the coil component 10 to decline. However, when the number of the projecting pieces 11T is excessively increased, there is a concern that the performance of the coil component 10 is greatly affected. From this perspective, for example, the proportion of the connection portions of the projecting pieces 11T of one of the turn portions 11n may be set at 20% or less, 10% or less, or 5% or less of the entire length of the one of the turn portions 11n.

According to the present embodiment, the grooves 22 contain the recessed locations 23, and at least portions of the projecting pieces 11T are located at the recessed locations 23. This enables the first planar coil 11 to be effectively inhibited from being shifted from the first holding member 20. The projecting pieces 11T extend from the inner circumferential edges and the outer circumferential edges of the turn portions 11n. Also, this enables the first planar coil 11 to be effectively inhibited from being shifted from the first holding member 20.

### <<Second Embodiment of First Disclosure>>

A coil component 10a according to a second embodiment will now be described. Fig. 12 is a sectional view of a portion of the coil component 10a according to the second embodiment. Components according to the embodiment described later like or corresponding to those according to the first embodiment of the first disclosure are designated by using like reference signs. In the case of the like components, the detailed description thereof is omitted.

The coil component 10a according to the second embodiment includes a second holding member 30 in addition to the first planar coil 11 and the first holding member 20 described according to the first embodiment. The second holding member 30 is formed into a single body together with the first planar coil 11 and the first holding member 20 such that the first planar coil 11 is sandwiched between the second holding member 30 and the first holding member 20. The second holding member 30 according to the present embodiment exerts magnetism. Specifically, the second holding member 30 exerts magnetism, has high electrical resistivity, and preferably has insulation properties. However, the second holding member 30 may have insulation properties but may not exert magnetism.

The second holding member 30 will be described in detail, and the second holding member 30 includes a body portion 31 that is in contact with the first surface 11A of the first planar coil 11 opposite the second surface 11B that is in contact with the first holding member 20 and that extends in a sheet shape and wall portions 32 that pass between the turn portions 11n adjacent to each other from the body portion 31 and that are filled in the grooves 22. The second holding member 30 exerts magnetism as a whole, and the wall portions 32 exert magnetism. The wall portions 32 that exert magnetism are formed so as to project from the first planar coil 11, and consequently, the performance of the coil component 10a can be improved.

The relative permeability of the second holding member 30 is preferably 2.0 or more or may be 2.0 or more and 10.0 or less. The relative permeability of the second holding member 30 is more preferably 5.0 or more or may be 5.0 or more and 10.0 or less. The relative permeability of the second holding member 30 is not particularly limited, but when the relative permeability is too high, the flexibility and strength of the second holding member 30 are undesirably decreased in some cases. Accordingly, the relative permeability of the second holding member 30 may be 200 or less.

The second holding member 30 includes the wall portions 32 and can consequently effectively improve coil performance. The height of each wall portion 32 from a foundation portion that is connected to the first planar coil 11 to an end portion is not particularly limited but may be, for example, 0.5 mm or more or may be 1.0 mm or more. As the height of each wall portion 32 increases, an eddy current loss tends to be further decreased, and a coupling coefficient tends to increase. As the wall portions 32 become higher, the wall portions 32 tend to be broken from the root. In view of this, for example, the height of each wall portion 32 may be 10 mm or less.

For example, the second holding member 30 according to the present embodiment contains multiple or innumerable magnetic material particles composed of a magnetic material and resin. The magnetic material particles are held by the resin that serves as a holding material. The resin exerts no magnetism and has insulation properties.

The magnetic material particles may be composed of ferrite, particularly, ferrite of a soft magnetic material, a nanocrystal magnetic material, silicon steel, electromagnetic soft iron, or amorphous metal, or two or more kinds of these. The resin that serves as the holding material may be glass fiber reinforced polyamide. That is, the resin may be composed of a material that contains polyamide that is thermoplastic resin (a thermoplastic material) and glass fibers. However, the mold material of the second holding member 30 is not particularly limited, but for examples, the resin that is contained in the second holding member 30 may be thermosetting resin.

According to the second embodiment described above, the second holding member 30 inhibits the first planar coil 11 from being shifted from the first holding member 20 with certainty. The second holding member 30 exerts magnetism, and consequently, the performance of the coil component 10a can be improved.

### <<Third Embodiment of First Disclosure>>

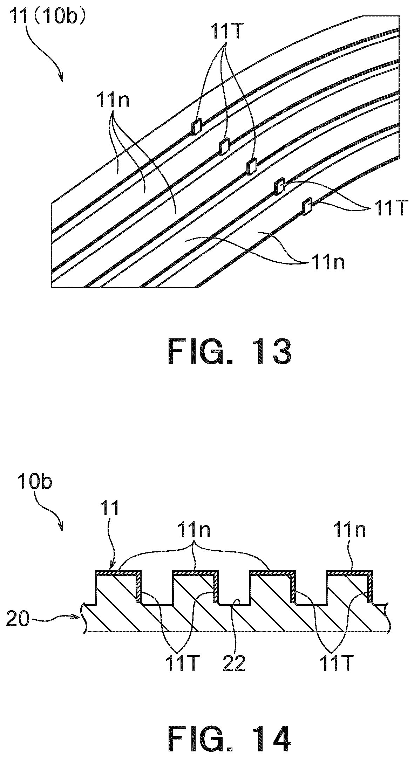

A coil component 10b according to a third embodiment will now be described. Fig. 13 is a perspective view of the coil component 10b according to the third embodiment and is specifically a perspective view of the first planar coil 11 that is included in the coil component 10b. Fig. 14 is a sectional view of a portion of the coil component 10b. Components according to the embodiment described later like or corresponding to those according to the first and second embodiments of the first disclosure are designated by using like reference signs. In the case of the like components, the detailed description thereof is omitted.

According to the present embodiment, as illustrated in Fig. 13 and Fig. 14, the projecting pieces 11T extend from only the inner circumferential edges of the turn portions 11n. Multiple projecting pieces 11T extend from the inner circumferential edge of one of the turn portions 11n, and the multiple projecting pieces 11T are provided at an interval in the circumferential direction although an illustration is omitted. In Fig. 13, an illustration for the first holding member 20 is omitted, but in practice, the first holding member 20 is located above the first planar coil 11 in Fig. 13.

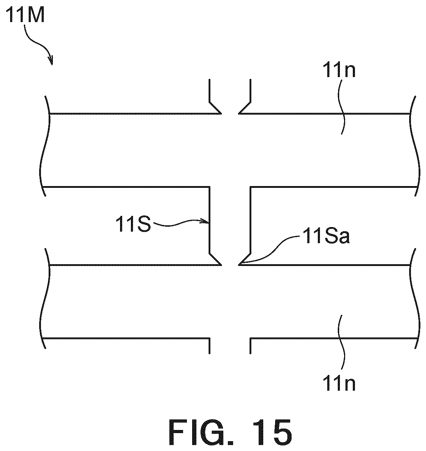

Fig. 15 illustrates the coil intermediate material 11M for forming the first planar coil 11 of the coil component 10b. According to the present embodiment, the connection portions 11S of the coil intermediate material 11M include the constriction portions 11Sa a sectional area of which locally decreases. The constriction portions 11Sa are formed on inner end portions of the connection portions 11S in the radial direction.

According to the embodiment described above, the connection portions 11S can be relatively easily formed. In addition, increasing the length of one of the connection portions 11S enables misalignment to be decreased. Also according to the present embodiment, the second holding member 30 described according to the second embodiment may be used.

### <<Fourth Embodiment of First Disclosure>>

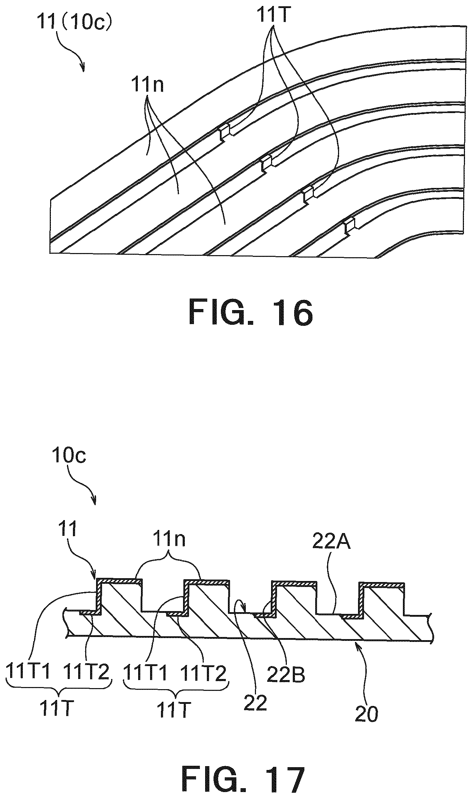

A coil component 10c according to a fourth embodiment will now be described. Fig. 16 is a perspective view of the coil component 10c according to the fourth embodiment and is specifically a perspective view of the first planar coil 11 that is included in the coil component 10c. Fig. 17 is a sectional view of a portion of the coil component 10c. Components according to the embodiment described later like or corresponding to those according to the first to third embodiments of the first disclosure are designated by using like reference signs. In the case of the like components, the detailed description thereof is omitted.

According to the present embodiment, as illustrated in Fig. 16 and Fig. 17, the projecting pieces 11T extend from only the outer circumferential edges of the turn portions 11n. Multiple projecting pieces 11T extend from the outer circumferential edge of one of the turn portions 11n, and the multiple projecting pieces 11T are provided at an interval in the circumferential direction although an illustration is omitted. In Fig. 16, an illustration for the first holding member 20 is omitted, but in practice, the first holding member 20 is located above the first planar coil 11 in Fig. 16.

The projecting pieces 11T according to the present embodiment include first portions 11T1 that extend from the turn portions 11n along the side surfaces 22B of the grooves 22 and second portions 11T2 that bend from ends of the first portions 11T1 and that extend along the bottom surfaces 22A of the grooves 22. The second portions 11T2 are located at recessed locations that are formed on the bottom surface 22A.

A coil intermediate material for forming the first planar coil 11 of the coil component 10c includes the connection portions 11S as in the third embodiment, and the constriction portions 11Sa are formed on the connection portions 11S although an illustration is omitted. However, the constriction portions 11Sa are formed at outer end portions of the connection portions 11S in the radial direction.

According to the embodiment described above, the same effects as those according to the third embodiment are obtained. In the case where an alternating electric current flows into the first planar coil 11, the current density of inner circumferential edge portions of the turn portions 11n is typically higher than the current density at outer circumferential edge portions. Accordingly, according to the present embodiment, the projecting pieces 11T can be effectively inhibited from adversely affecting the flow of the electric current. Also according to the present embodiment, the second holding member 30 described according to the second embodiment may be used.

### <<Fifth Embodiment of First Disclosure>>

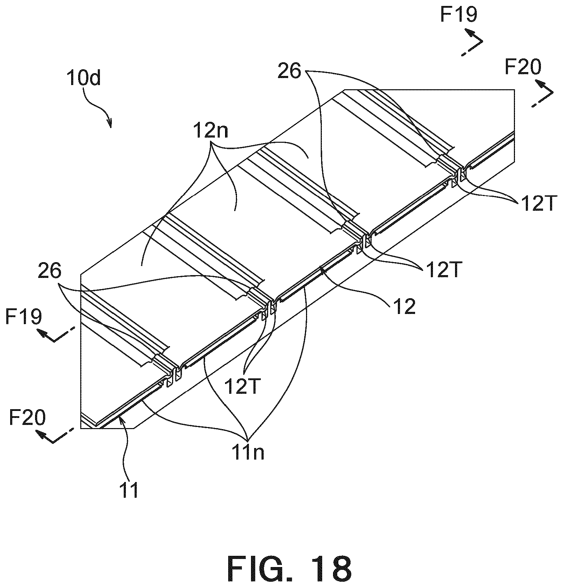

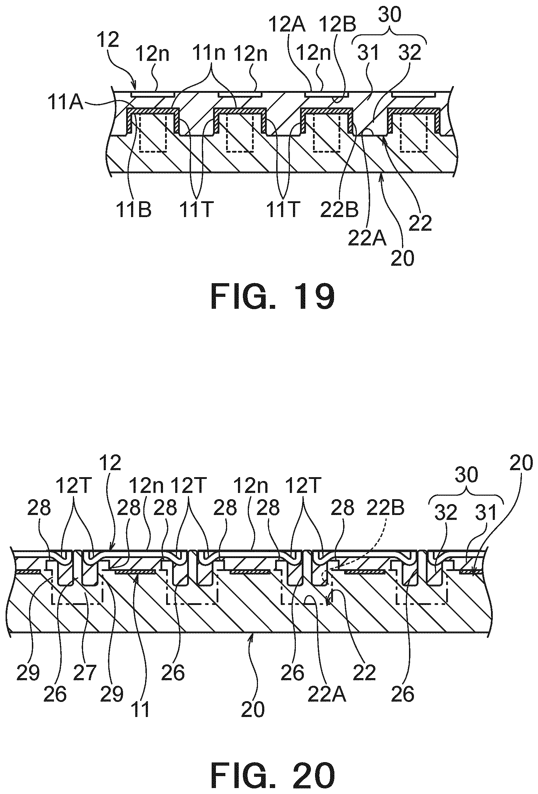

A coil component 10d according to a fifth embodiment will now be described. Fig. 18 is a perspective view of the coil component 10d according to the fifth embodiment. Fig. 19 is a sectional view of the coil component 10d taken along a line F19-F19 in Fig. 18, and Fig. 20 is a sectional view of the coil component 10d taken along a line F20-F20 in Fig. 18. Components according to the embodiment described later like or corresponding to those according to the first to fourth embodiments of the first disclosure are designated by using like reference signs. In the case of the like components, the detailed description thereof is omitted.

As illustrated in Fig. 18 to Fig. 20, the coil component 10d according to the present embodiment includes the second holding member 30 in addition to the first planar coil 11 and the first holding member 20. However, the structure of the first holding member 20 and the structure of the second holding member 30 differ from those according to the first embodiment and the second embodiment. In Fig. 18, for convenience of description, an illustration for the second holding member 30 is omitted.

The second holding member 30 is formed into a single body together with the first planar coil 11 and the first holding member 20 such that the first planar coil 11 is sandwiched between the second holding member 30 and the first holding member 20 as in the second embodiment. The second holding member 30 exerts magnetism. Specifically, the second holding member 30 exerts magnetism, has high electrical resistivity, and preferably has insulation properties, but may not exert magnetism. The second holding member 30 differs from that according to the second embodiment in that a second planar coil 12 is embedded. The second planar coil 12 overlaps the first planar coil 11. According to the present embodiment, a first surface 12A of the second planar coil 12 opposite a second surface 12B that faces the first planar coil 11 is exposed from the second holding member 30, but the first surface 12A may be covered by the second holding member 30.

The second planar coil 12 includes multiple turn portions 12n that are arranged in the radial direction thereof and projecting pieces 12T that extend from an inner circumferential edge and/or an outer circumferential edge of at least one turn portion 12n among the multiple turn portions 12n and that bend such that the projecting pieces 12T leave from the turn portion 12n of the second planar coil in the axial direction as in the first planar coil 11. The projecting pieces 12T of the second planar coil 12 are in contact with the second holding member 30 in the radial direction. That is, the projecting pieces 12T extend so as to bend from the turn portion 12n toward the first holding member 20 and are embedded in the second holding member 30. Consequently, the projecting pieces 12T are in contact with the second holding member 30 in the radial direction.

Specifically, the projecting pieces 12T extend so as to bend from the turn portion 12n toward the first holding member 20 and subsequently curve so as to leave from the first holding member 20. Ends of the projecting pieces 12T are flush or substantially flush with the first surfaces 12A of the turn portions 12n that are exposed to the outside.

According to the present embodiment, the first holding member 20 further includes protruding portions 26 that project from the grooves 22 and that are embedded in the second holding member 30. The protruding portions 26 face the projecting pieces 12T of the second planar coil 12 in the radial direction. Specifically, top portions of the protruding portions 26 and top portions of the projecting pieces 12T face each other in the radial direction, and the top portions of the projecting pieces 12T extend along the protruding portions 26. Specifically, the protruding portions 26 extend so as to project from top surfaces of base portions 27 that are raised from the bottom surfaces 22A of the grooves 22, specifically, central portions thereof. The base portions 27 are raised up to intermediate locations in the depth direction of the grooves 22, specifically, up to substantially the middle and extend along the side surfaces 22B that face each other in the radial direction of the grooves 22.

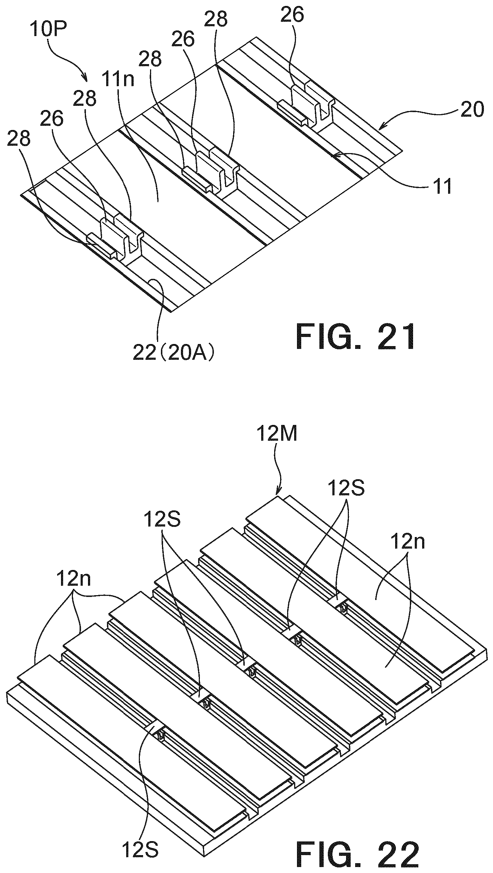

The second planar coil 12 is composed of a second coil intermediate material 12M (see Fig. 22) described later that is the same as the coil intermediate material 11M of which the first planar coil 11 is composed. The second coil intermediate material 12M includes connection portions 12S that are the same as the connection portions 11S of the coil intermediate material 11M. The protruding portions 26 are members for cutting the connection portions 12S in the course of manufacture.

The first holding member 20 also includes spacer portions 28 that are provided at least at portions between the grooves 22 on the first surface 11A on which the first planar coil 11 is stacked and the turn portions 11n inside the grooves 22 in the radial direction or at portions between the grooves 22 and the turn portions 11n outside the grooves 22 in the radial direction. The spacer portions 28 project so as to leave from the first planar coil 11. According to the present embodiment, the spacer portions 28 are formed at the portions between the grooves 22 on the first surface 11A and the turn portions 11n inside the grooves 22 in the radial direction and at the portions between the grooves 22 and the turn portions 11n outside the grooves in the radial direction.

The spacer portions 28 are adjacent to the protruding portions 26 in the radial direction. The projecting pieces 11T of the first planar coil 11 are not located at portions at which the spacer portions 28 are formed. The spacer portions 28 restrain the projecting pieces 12T from bending such that the projecting pieces 12T approach the first planar coil 11. The spacer portions 28 are connected to the base portions 27 by using coupling portions 29 that extend along the side surfaces 22B of the grooves 22. The projecting pieces 11T of the first planar coil 11 and the projecting pieces 12T of the second planar coil 12 do not overlap and are shifted from each other in the circumferential direction.

According to the present embodiment, spaces are formed between the protruding portions 26 and the coupling portions 29 and between the base portions 27 and the projecting pieces 12T, and portions of the second holding member 30 are filled in the spaces. The portions of the second holding member 30 that are filled in the spaces are portions of the wall portions 32.

The protruding portions 26, the base portions 27, and the spacer portions 28 of the first holding member 20 described above can be formed in a manner in which recesses or holes are formed at the protuberances 202 of the mold 200 illustrated in Fig. 7 and Fig. 8. That is, according to the present embodiment, the protruding portions 26, the base portions 27, and the spacer portions 28 are formed into a single body in the first holding member 20, a jig that includes the protruding portions 26, the base portions 27, and the spacer portions 28 may be formed, and the jig may be fitted into the grooves 22. Shapes around the protruding portions 26 of the first holding member 20 can be changed in various ways, and for example, the base portions 27 may not be provided.

An example of a method of manufacturing the coil component 10d will now be described with reference to Fig. 21 to Fig. 25.

A pre-coil component 10P illustrated in Fig. 21 is first prepared. The pre-coil component 10P is manufactured in the same manufacturing process and has the same structure as the coil component 10 according to the first embodiment but differs therefrom in including, for example, the protruding portions 26. Specifically, the pre-coil component 10P includes the first planar coil 11 and the first holding member 20. As for the pre-coil component 10P, however, the first holding member 20 has the grooves 22 on the first surface 11A on which the first planar coil 11 is stacked, and the grooves 22 open from between the turn portions 11n adjacent to each other. The first holding member 20 further includes the protruding portions 26 that project from the grooves 22. The protruding portions 26 project from the grooves 22 beyond the first planar coil 11. Needless to say, the first holding member 20 includes the base portions 27 and the spacer portions 28.

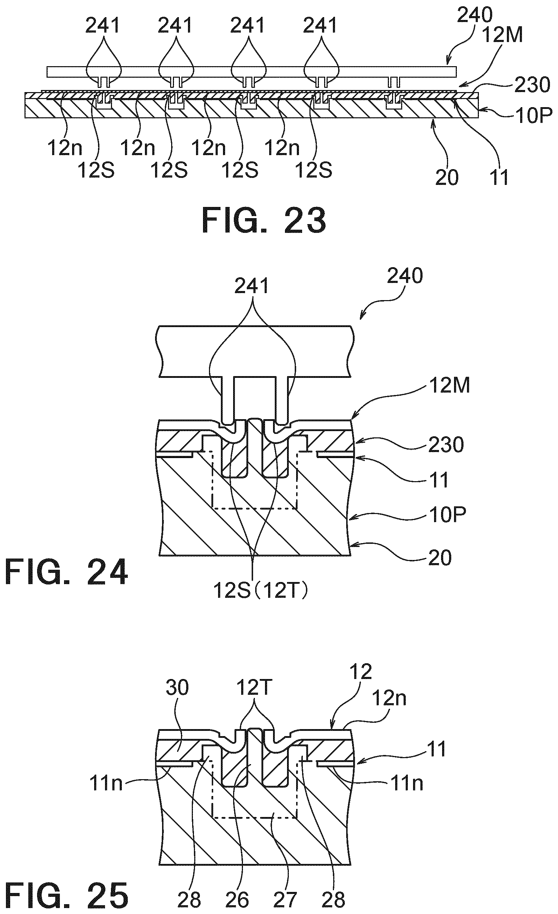

As illustrated in Fig. 22, the second coil intermediate material 12M is prepared, and the second coil intermediate material 12M is stacked with the pre-coil component 10P. The second coil intermediate material 12M includes the multiple turn portions 12n that are arranged in the radial direction and the connection portions 12S that connect the turn portions 12n adjacent to each other in the radial direction. Specifically, the second coil intermediate material 12M is stacked with the first planar coil 11 of the pre-coil component 10P such that the connection portions 12S face the protruding portions 26. More specifically, according to the present embodiment, as illustrated in Fig. 23, a second mold material 230 is installed on the pre-coil component 10P, and the second coil intermediate material 12M is subsequently stacked with the second mold material 230 interposed therebetween. In this example, the second mold material 230 is composed of thermosetting resin that is in a liquid state or that has a sheet body and that is not cured (solidified), but the second mold material 230 may be composed of thermoplastic resin.

Subsequently, as illustrated in Fig. 23, a facing mold 240 is arranged so as to face the second coil intermediate material 12M. The facing mold 240 includes multiple cutting assist protruding portions 241 on a surface that faces the second coil intermediate material 12M. According to the present embodiment, the facing mold 240 includes the cutting assist protruding portions 241 the number of which is twice the number of the protruding portions 26 of the first holding member 20. The multiple cutting assist protruding portions 241 include multiple pairs each of which includes two cutting assist protruding portions 241 that are close to each other, the pairs of the cutting assist protruding portions 241 can receive the protruding portions 26 therebetween when the facing mold 240 approaches the pre-coil component 10P and have a positional relationship that enables the cutting assist protruding portions 241 to enter the grooves 22. In Fig. 23, for convenience of description, portions that correspond to the protruding portions 26, the base portions 27, and the spacer portions 28 are illustrated without hatching.

A positional relationship between the facing mold 240 and the pre-coil component 10P is adjusted such that the protruding portions 26 are located between the cutting assist protruding portions 241 of the respective pairs, and the cutting assist protruding portions 241 overlap the grooves 22 and the connection portions 12S when viewed in a direction in which the facing mold 240 and the pre-coil component 10P overlap, and subsequently, the cutting assist protruding portions 241 are pressed against the connection portions 12S as illustrated in Fig. 24. Consequently, the protruding portions 26 are relatively pressed against the connection portions 12S. At this time, the connection portions 12S are separated from one of the turn portions 12n that are connected and that are adjacent to each other and are bent so as to leave from the turn portion 12n. Consequently, the projecting pieces 12T of the second planar coil 12 are formed from the connection portions 12S.

At this time, according to the present embodiment, the cutting assist protruding portions 241 press the connection portions 12S toward the grooves 22, and central parts of the connection portions 12S that are cut by being pressed by the protruding portions 26 are bent in a direction away from the grooves 22. Consequently, the projecting pieces 12T extend so as to bend from the turn portion 12n toward the first holding member 20 and subsequently curve so as to leave from the first holding member 20. When the cutting assist protruding portions 241 press the connection portions 12S toward the grooves 22, the spacer portions 28 restrain the connection portions 12S from curving, and consequently, the connection portions 12S avoid excessively approaching the first planar coil 11.

Subsequently, the second mold material 230 is heated and cured (solidified), and consequently, the second holding member 30 is formed. Consequently, as illustrated in Fig. 25, the coil component 10d is obtained.

As for the coil component 10d according to the fifth embodiment described above, the projecting pieces 12T are in contact with the second holding member 30 in the radial direction. This enables the second planar coil 12 to be inhibited from being shifted from the second holding member 30 that is formed into a single body together with the second planar coil 12. In particular, according to the present embodiment, the projecting pieces 12T are formed from the connection portions 12S that are members that fulfill the inherent function mainly in the course of manufacture, and consequently, the projecting pieces 12T can be efficiently formed at low costs as in the projecting pieces 11T of the first planar coil 11 described according to the first embodiment.

The embodiments of the present disclosure are described above, and the embodiments described above may be modified in various ways. Such modifications can be included in the technical range of the present disclosure.

### <<<Embodiments of Second Disclosure>>>

Embodiments of the second disclosure will now be described with reference to the drawings.

### <<First Embodiment of Second Disclosure>>

### <Coil Component>

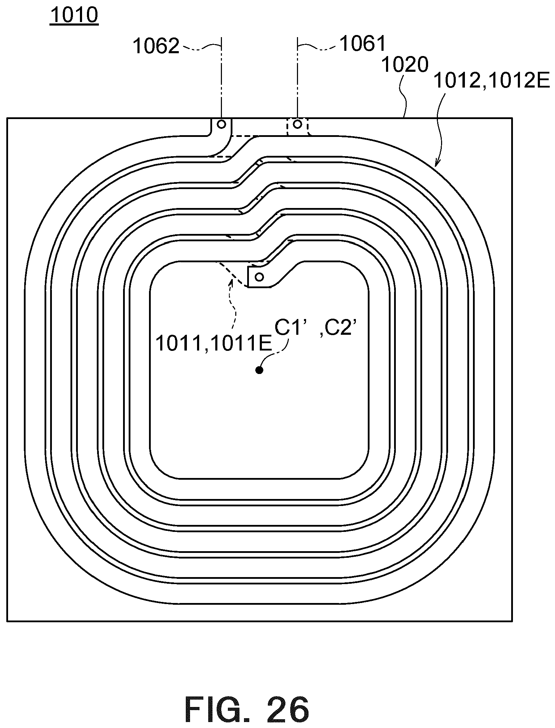

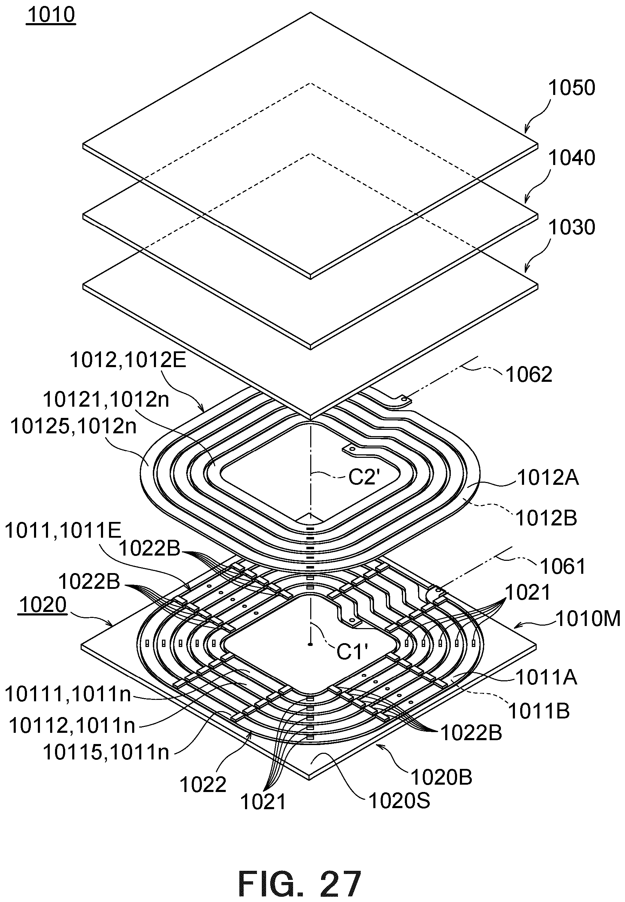

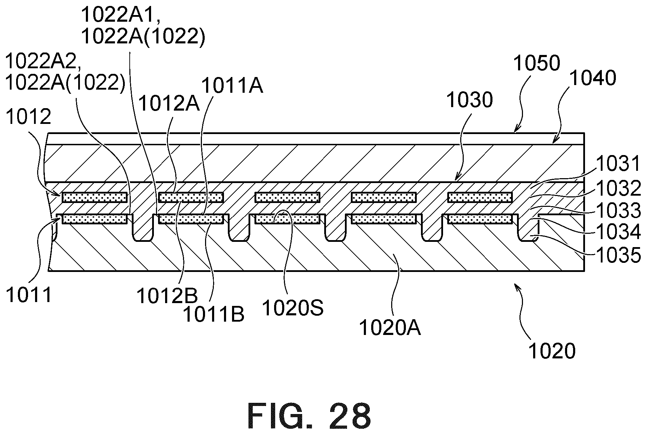

The coil component 1010 according to a first embodiment will now be described. Fig. 26 is a plan view of the coil component 1010. Fig. 27 is an exploded perspective view of the coil component 1010. Fig. 28 is a sectional view of the coil component 1010.

As illustrated in Fig. 26 to Fig. 28, the coil component 1010 includes a first planar coil 1011, a second planar coil 1012, a first holding member 1020, a second holding member 1030, a first magnetic shield member 1040, a second magnetic shield member 1050, a first connection terminal 1061, and a second connection terminal 1062.

As for the coil component 1010, as illustrated in Fig. 27, the first planar coil 1011, the second planar coil 1012, the second holding member 1030, the first magnetic shield member 1040, and the second magnetic shield member 1050 overlap the first holding member 1020 in this order. In Fig. 26, for convenience of description, an illustration for the second holding member 1030, the first magnetic shield member 1040, and the second magnetic shield member 1050 is omitted, but in practice, the second holding member 1030, the first magnetic shield member 1040, and the second magnetic shield member 1050 overlap the second planar coil 1012 illustrated by using solid lines. In Fig. 26, for convenience of description, the first planar coil 1011 is illustrated by using dashed lines.

The second holding member 1030 overlaps the second planar coil 1012 as described above, and in Fig. 27, the second holding member 1030 is schematically illustrated so as to be disposed between the second planar coil 1012 and the first magnetic shield member 1040. In practice, as illustrated in Fig. 28, a portion of the second holding member 1030 is interposed between the second planar coil 1012 and the first magnetic shield member 1040, and another portion is interposed also between the first planar coil 1011 and the second planar coil 1012. The shape of the second holding member 1030 will be described in detail later. In Fig. 26 and Fig. 27, the first connection terminal 1061 and the second connection terminal 1062 are simply illustrated by using two-dot chain lines. Components of the coil component 1010 will now be described in detail.

### (First Planar Coil and Second Planar Coil)

The first planar coil 1011 has a spiral shape and is composed of a conductive material. According to the present embodiment, the first planar coil 1011 contains copper. Specifically, the first planar coil 1011 is composed of copper. However, the first planar coil 1011 may be composed of, for example, a copper alloy, aluminum, or an aluminum alloy.

As illustrated in Fig. 27, the first planar coil 1011 has a plate shape, and as illustrated in Fig. 28, a sectional shape of the first planar coil 1011 in a direction perpendicular to a direction (in other words, a direction in which the spiral shape extends) in which the first planar coil 1011 turns in the spiral shape is a rectangular shape.

A reference sign C1' illustrated in Fig. 26 and Fig. 27 represents a first central axis of the first planar coil 1011 that passes through the center of the spiral shape of the first planar coil 1011. In the case where the axial direction of the first planar coil 1011 is mentioned below, the direction means a direction that extends along the first central axis C1' or a direction parallel with the first central axis C1'. A direction perpendicular to the first central axis C1' is referred to as a radial direction of the first planar coil 1011. The first planar coil 1011 has a first surface 1011A and a second surface 1011B opposite each other in the axial direction. As for the first planar coil 1011, the second planar coil 1012, for example, is stacked with respect to the first surface 1011A, and the second surface 1011B faces the first holding member 1020.

As illustrated in Fig. 27, the first planar coil 1011 includes a conductor 1011E that has a spiral shape formed by multiple turn portions 1011n. The multiple turn portions 1011n of the first planar coil 1011 are arranged in the direction (the radial direction) perpendicular to the first central axis C1' of the spiral shape. Specifically, the multiple turn portions 1011n are connected so as to be increasingly far away from the first central axis C1' outward in the radial direction from the first central axis C1' of the spiral shape. Consequently, the spiral shape is formed.

The turn portions 1011n are basically formed so as to turn 360 degrees around the first central axis C1' such that linear conductive portions do not form an annular shape. In the case of a so-called planar coil, both end portions of each turn portion 1011n are shifted in the radial direction. As for the multiple turn portions 1011n, an outer end portion in the radial direction of one of the turn portions 1011n is connected to an inner end portion in the radial direction of another turn portion 1011n, and the other turn portion 1011n extends so as to be far away from the first central axis C1'.

In some cases below, one nearest to the first central axis C1' among the multiple turn portions 1011n is referred to as a turn portion 10111. In some cases, a turn portion that is connected to the turn portion 10111 is referred to as a turn portion 10112. According to the present embodiment, the multiple turn portions 1011n include five turn portions 10111 to 10115. In the following description for common matters among the multiple turn portions 1011n, these are basically referred to as the turn portions 1011n.

According to the present embodiment, the turn portions 1011n turn so as to form a rectangular shape. However, the turn portions 1011n may turn so as to form a polygonal shape other than a rectangular shape. For example, the turn portions 1011n may turn so as to form an octagonal shape, a regular octagonal shape, a dodecagonal shape, or a regular dodecagonal shape. The turn portions 1011n may turn so as to form a circular shape. The spiral shape described in the present specification and the present disclosure means a shape of a planar curve that is helically wound as described above. The planar curve described herein includes a planar pattern that repeatedly turns while curving as in a polyline as illustrated. In other words, the spiral shape is a shape that turns so as to gradually extend outward around the first central axis C1' of the first planar coil 1011.

An inner end portion (an end portion near the first central axis C1') in the radial direction of the turn portion 10111 nearest to the first central axis C1' is electrically connected to the second planar coil 1012. An outer end portion (an end portion that is distal from the first central axis C1') in the radial direction of the turn portion 10115 farthest from the first central axis C1' among the multiple turn portions 1011n is connected to the first connection terminal 1061.

The phrase "inner in the radial direction of the first planar coil 1011 (the turn portions 1011n)" described herein means a radial direction toward the first central axis C1'. The phrase "outer in the radial direction of the first planar coil 1011 (the turn portions 1011n)" described herein means a radial direction away from the first central axis C1'. According to the present embodiment, the first central axis C1' is determined as follows. Linear imaginary turn portions each of which has a shape similar to that of the turn portion 10112 are sequentially drawn from an inner end portion in the radial direction of the turn portion 10112 adjacent to the innermost turn portion 10111 so as to form a spiral shape inward in the radial direction. Drawing continues until an imaginary turn portion can be drawn within a diameter of 1 cm. A line that passes through an inner region in the radial direction of the imaginary turn portion that is drawn within a diameter of 1 cm in a direction perpendicular to the radial direction and to the circumferential direction of the spiral shape is determined as the first central axis C1'.

For example, the first planar coil 1011 according to the present embodiment is formed into the spiral shape by being punched from a copper plate. However, the first planar coil 1011 can be formed by etching copper foil into the spiral shape.

For example, the thickness (the thickness of the conductor 1011E) of the first planar coil 1011 may be 0.1 mm or more and 1.0 mm or less. The radius (a distance to a portion farthest from the first central axis C1' in the radial direction) of the first planar coil 1011 may be 80 mm or more or may be 80 mm or more and 450 mm or less. The aspect ratio of the first planar coil 1011 (the conductor 1011E) a sectional shape of which is a rectangular shape is determined by dividing the line width (the width in the radial direction of each turn portion 1011n) of the first planar coil 1011 (the conductor 1011E) by the thickness of the first planar coil 1011 (the conductor 1011E). The aspect ratio of the first planar coil 1011 (the conductor 1011E) may be 40 or less, may be 2 or more and 12 or less, or may be 3 or more and 10 or less.

In the case where power is transmitted to the electric vehicle by using the magnetic resonance method, a power of 1 kW or more, preferably, 5 kW or more can be preferably transmissive in the frequency band of the high-frequency current at 10 kHz to 200 kHz, particularly, at 75 kHz or more and 100 kHz or less, or at 79 kHz to 90 kHz. In this case, the thickness of the first planar coil 1011 composed of copper is preferably 0.2 mm or more. In this perspective, the lower limit of the thickness of the first planar coil 1011 may be set at 0.2 mm. In the case where power is transmitted to the electric vehicle, an excessive size is not preferable, and restriction on size is imposed in some cases. In this perspective, the first planar coil 1011 and the second planar coil 1012 described later, specifically, the conductor 1011E of the first planar coil 1011 and a conductor 1012E of the second planar coil 1012 are preferably formed so as to be within a squire a side of which is 800 mm in size.

The line width (the line width of the conductor 1011E) of the first planar coil 1011, that is, the radial width (the width in the radial direction) of each turn portion 1011n is not particularly limited. In consideration that a power of 1 kW or more, preferably, 5 kW or more is made transmissive in the frequency band of the high-frequency current at, for example, 79 kHz to 90 kHz, the radial width of each turn portion 1011n may be 2 mm or more and 20 mm or less, or may be 2 mm or more and 16 mm or less, 2 mm or more and 12 mm or less, or 2 mm or more and 8 mm or less. The number of turns of the first planar coil 1011 may be 4 or more and 12 or less but is not particularly limited.

Also, the second planar coil 1012 has a spiral shape, and the second planar coil 1012 contains copper according to the present embodiment. Specifically, the second planar coil 1012 is composed of copper. The material of the second planar coil 1012 is not particularly limited, but examples may include a copper alloy, aluminum, and an aluminum alloy. Also, the second planar coil 1012 has a plate shape, and as illustrated in Fig. 28, a sectional shape of the second planar coil 1012 in a direction perpendicular to a direction in which the second planar coil 1012 turns in the spiral shape is a rectangular shape.

A reference sign C2' illustrated in Fig. 26 and Fig. 27 represents a second central axis of the second planar coil 1012 that passes through the center of the spiral shape of the second planar coil 1012. In the case where the axial direction of the second planar coil 1012 is mentioned below, the direction means a direction that extends along the second central axis C2' or a direction parallel with the second central axis C2'. A direction perpendicular to the second central axis C2' is referred to as a radial direction of the second planar coil 1012. The second planar coil 1012 has a first surface 1012A and a second surface 1012B opposite each other in the axial direction. As for the second planar coil 1012, the second holding member 1030, the first magnetic shield member 1040, and the second magnetic shield member 1050 are stacked with respect to the first surface 1012A, and the second surface 1012B faces the first planar coil 1011 (the first surface 1011A).

According to the present embodiment, the second planar coil 1012 is disposed coaxially with the first planar coil 1011. That is, the first central axis C1' of the first planar coil 1011 and the second central axis C2' of the second planar coil 1012 match each other, in other words, are along the same line. However, the first planar coil 1011 and the second planar coil 1012 may overlap such that the first central axis C1' of the first planar coil 1011 and the second central axis C2' of the second planar coil 1012 are parallel with each other. That is, the first planar coil 1011 and the second planar coil 1012 may not be coaxial with each other.

The second planar coil 1012 includes the conductor 1012E that has a spiral shape formed by multiple turn portions 1012n. The multiple turn portions 1012n of the second planar coil 1012 are arranged in the direction perpendicular to the second central axis C2' of the spiral shape.

The names (such as a turn portion 10121) depending on positions and the connection form of the multiple turn portions 1012n are similar to those of the turn portions 1011n of the first planar coil 1011. According to the present embodiment, the number of turns of the first planar coil 1011 and the number of turns of the second planar coil 1012 are equal to each other, and the multiple turn portions 1012n include five turn portions 10121 to 10125. The turn portions 1012n turn so as to form a rectangular shape as in the turn portions 1011n. The turn portions 1012n may turn so as to form a polygonal shape other than a rectangular shape. For example, the turn portions 1012n may turn so as to form an octagonal shape, a regular octagonal shape, a dodecagonal shape, or a regular dodecagonal shape. The turn portions 1012n may turn so as to form a circular shape. The number of turns of the first planar coil 1011 and the number of turns of the second planar coil 1012 may differ from each other. For example, the turn portions 1012n may have a rectangular shape, and the turn portions 1011n may have a circular shape.

The inner end portion in the radial direction of the turn portion 10111 nearest to the first central axis C1' is electrically connected to the second planar coil 1012 as described above. Specifically, the inner end portion in the radial direction of the turn portion 10111 is connected to an inner end portion of the turn portion 10121 of the second planar coil 1012. With the first planar coil 1011 and the second planar coil 1012 connected to each other, a direction in which the first planar coil 1011 turns from an end portion (the outer end portion in the radial direction of the turn portion 10115) that is not connected to the second planar coil 1012 to an end portion that is connected to the second planar coil 1012 is the same as a direction in which the second planar coil 1012 turns from an end portion that is connected to the first planar coil 1011 to an end portion (an outer end portion in the radial direction of the turn portion 10125) that is not connected to the first planar coil 1011.

The outer end portion in the radial direction of the turn portion 10125 farthest from the second central axis C2' among the multiple turn portions 1012n is connected to the second connection terminal 1062. Directions that are represented by the phrase "inner and outer in the radial direction of the second planar coil 1012 (the turn portions 1012n)" are determined as in the case of the phrase "inner and outer in the radial direction of the first planar coil 1011" described above. A method of determining the position of the second central axis C2' is determined in the same manner as in the case of the first central axis C1'. For example, the second planar coil 1012 according to the present embodiment is formed into the spiral shape by being punched from a copper plate. However, the second planar coil 1012 can be formed by etching copper foil into the spiral shape.

According to the present embodiment, for example, the thickness (the thickness of the conductor 1012E) of the second planar coil 1012 may be 0.1 mm or more and 1.0 mm or less. The radius (a distance to a portion farthest from the second central axis C2' in the radial direction) of the second planar coil 1012 may be 80 mm or more or may be 80 mm or more and 450 mm or less as in the case of the first planar coil 1011. The aspect ratio of the second planar coil 1012 (the conductor 1012E) a sectional shape of which is a rectangular shape may be 40 or less, may be 2 or more and 12 or less, or may be 3 or more and 10 or less as in the case of the first planar coil 1011. The line width (the line width of the conductor 1012E) of the second planar coil 1012, that is, the radial width (the width in the radial direction) of each turn portion 1012n may be 2 mm or more and 20 mm or less, or may be 2 mm or more and 16 mm or less, 2 mm or more and 12 mm or less, or 2 mm or more and 8 mm or less. The number of turns of the second planar coil 1012 may be 4 or more and 12 or less but is not particularly limited.

The first planar coil 1011 and the second planar coil 1012 overlap at an interval. The interval may be 0.5 mm or more and 1.5 mm or less. The dimensions of the interval are not particularly limited, but when the interval is too small, an eddy current loss that is made at the first planar coil 1011 and the second planar coil 1012 when the electric current is applied tends to increase. When the interval is too large, a decrease in the thickness of the coil component 1010 is lessened. A state in which the first planar coil 1011 and the second planar coil 1012 are separated from each other is maintained by the second holding member 1030 that is interposed therebetween as described above, and this will be described later.

### (First Holding Member)

The first holding member 1020 overlaps the first planar coil 1011 so as to face the second surface 1011B of the first planar coil 1011 and holds the first planar coil 1011. For example, in the case where power is transmitted, the coil component 1010 causes the magnetic field that is generated at the first planar coil 1011 and the second planar coil 1012 to pass through the first holding member 1020. Accordingly, the first holding member 1020 preferably has no conductivity (insulation properties) and exerts no magnetism so as not to impede the magnetic field and so as not to generate an eddy current.

In consideration that non-conductivity (insulation properties) and non-magnetism are preferable, an example of the material of the first holding member 1020 is resin or may be fiber reinforced plastic. More specifically, the material of the first holding member 1020 may be glass fiber reinforced polyamide. However, the material of the first holding member 1020 is not particularly limited. For example, glass fibers may not be contained. Thermoplastic resin or thermosetting resin other than polyamide may be used. The insulation properties mean that the volume resistivity is 10¹⁰ Ω · m or more as described above. The non-magnetism means that magnetism is not exerted.

The first holding member 1020 is formed into a single body together with the first planar coil 1011 and consequently holds the first planar coil 1011. According to the present embodiment, the first planar coil 1011 and the first holding member 1020, strictly, the mold material thereof are thermally pressed, and the first planar coil 1011 and the first holding member 1020 are formed into a single body. For example, the single body is obtained in a manner in which the first holding member 1020 bites into unevenness of the surface of the first planar coil 1011 composed of metal.

The first planar coil 1011 and the first holding member 1020 are composed of different kinds of materials, and accordingly, strong adhesion cannot be obtained in some cases. In view of this, the first holding member 1020 according to the present embodiment includes a base portion 1020B has a contact surface 1020S that is in contact with the second surface 1011B of the first planar coil 1011 and that extends along the second surface 1011B and first rib portions 1021 and second rib portions 1022 that project from the contact surface 1020S. The first rib portions 1021 and the second rib portions 1022 can improve the stability of the state of the single body of the first planar coil 1011 and the first holding member 1020.

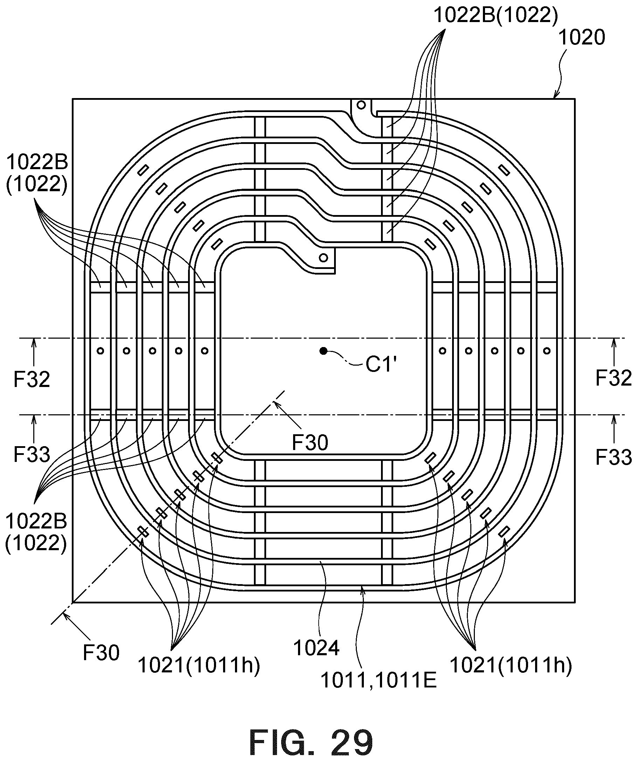

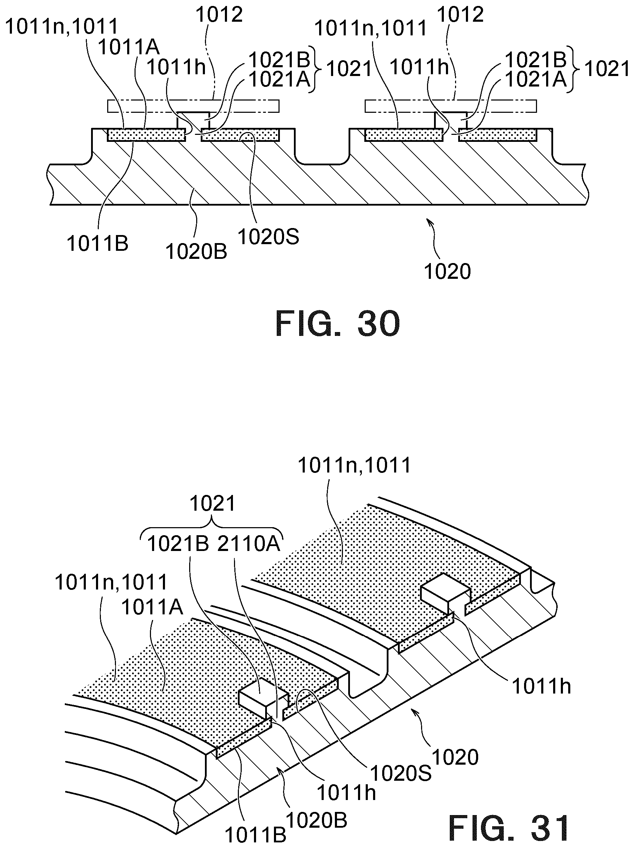

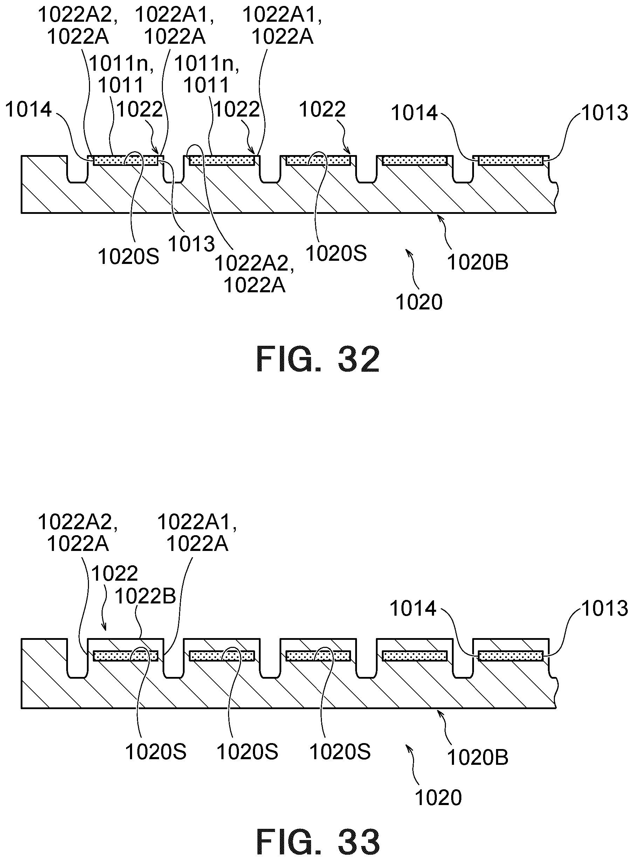

Fig. 29 is a plan view of the first planar coil 1011 and the first holding member 1020. Fig. 30 is a sectional view taken along a line F30-F30 in Fig. 29, and Fig. 31 is a perspective view of a section illustrated in Fig. 30. Fig. 30 and Fig. 31 illustrate a section of the first rib portions 1021. Fig. 32 is a sectional view taken along a line F32-F32 in Fig. 29, and Fig. 33 is a sectional view taken along a line F33-F33 in Fig. 29. Fig. 32 and Fig. 33 illustrate sections of the second rib portions 1022.

As illustrated in Fig. 29 to Fig. 31, path holes 1011h that extend from the first surface 1011A to the second surface 1011B are formed in the first planar coil 1011. As illustrated in Fig. 30 and Fig. 31, the first rib portions 1021 extend through the path holes 1011h that are formed in the first planar coil 1011 and are in contact with or close to inner circumferential surfaces of the path holes 1011h in the radial direction of the first planar coil 1011.

Specifically, the first rib portions 1021 according to the present embodiment include first raised portions 1021A that are in contact with or close to the path holes 1011h in the radial direction of the first planar coil 1011 and that cross the first planar coil 1011 in the axial direction and first overhang portions 1021B that extend in the radial direction from the first raised portions 1021A and that face the first surface 1011A of the first planar coil 1011, specifically, that are in contact therewith.

In the case where the first rib portions 1021 are formed, when the first planar coil 1011 tries leaving from the first holding member 1020, the inner circumferential surfaces of the path holes 1011h come into contact with the first raised portions 1021A, and movement of the first planar coil 1011 can be regulated. The first surface 1011A comes into contact with the first overhang portions 1021B, and consequently, movement of the first planar coil 1011 can be more effectively regulated.

A state in which the first rib portions 1021, specifically, the first raised portions 1021A are close to the inner circumferential surfaces of the path holes 1011h in the radial direction described above means a state in which distances between the first raised portions 1021A and the path holes 1011h in the radial direction described above are 1 mm or less, preferably 0.5 mm or less or 0.2 mm or less, and a state in which the first raised portions 1021A extend through the path holes 1011h.

Referring to Fig. 29, according to the present embodiment, the multiple path holes 1011h are formed in the first planar coil 1011, and the multiple path holes 1011h include groups of multiple path holes 1011h that are formed in the turn portions 1011n arranged in the radial direction of the first planar coil 1011 and that are arranged in the radial direction. The first rib portions 1021 extend through the path holes 1011h. That is, the first holding member 1020 includes the multiple first rib portions 1021, and the multiple first rib portions 1021 include groups of multiple first rib portions 1021 that are arranged at an interval in the radial direction of the first planar coil 1011.

More specifically, the turn portions 1011n of the first planar coil 1011 have a rectangular shape corners of which are rounded, and the path holes 1011h are formed at rounded four corner portions of the turn portions 1011n. The first rib portions 1021 are arranged at an interval in the radial direction of the first planar coil 1011 on two diagonals of the first planar coil 1011. The number and positions of the first rib portions 1021 are not particularly limited but may differ from those according to the present embodiment. For example, the multiple first rib portions 1021 may be arranged at an interval in a direction parallel with the radial direction of the first planar coil 1011.

Fig. 30 illustrates a portion of the second planar coil 1012 by using two-dot chain lines. As illustrated in Fig. 30, the second planar coil 1012 is in contact with the first rib portions 1021. The first planar coil 1011 and the second planar coil 1012 overlap at an interval as described above. The first rib portions 1021 function as spacers for maintaining the interval between the first planar coil 1011 and the second planar coil 1012. The first planar coil 1011 and the second planar coil 1012 overlap at the interval, and the interval may be 0.5 mm or more and 1.5 mm or less. In this case, the thickness of each first overhang portion 1021B is 0.5 mm or more and 1.5 mm or less. As for the first rib portions 1021, the first overhang portions 1021B may not be provided.

The second rib portions 1022 will be described. As illustrated in Fig. 32 and Fig. 33, the second rib portions 1022 project from the contact surface 1020S of the base portion 1020B of the first holding member 1020 and are in contact with or close to side surfaces of the first planar coil 1011 in the radial direction of the first planar coil 1011. Specifically, the second rib portions 1022 include second raised portions 1022A that are in contact with or close to the side surfaces of the first planar coil 1011 in the radial direction of the first planar coil 1011 and that cross the first planar coil 1011 in the axial direction described above and second overhang portions 1022B (see Fig. 33) that extend from the second raised portions 1022A in the radial direction and that face the first surface 1011A. The side surfaces of the first planar coil 1011 are located between the first surface 1011A and the second surface 1011B.

In the case where the second rib portions 1022 are formed, when the first planar coil 1011 tries leaving from the first holding member 1020, the side surfaces of the first planar coil 1011 come into contact with the second raised portions 1022A, and movement of the first planar coil 1011 can be regulated. The first surface 1011A comes into contact with the second overhang portions 1022B, and consequently, movement of the first planar coil 1011 can be more effectively regulated.

The second raised portions 1022A according to the present embodiment extend in a spiral shape along the first planar coil 1011 that has a spiral shape. According to the present embodiment, the second raised portions 1022A continuously extend from the inner end portion to the outer end portion in the radial direction of the first planar coil 1011 and are not disconnect, but the second raised portions 1022A may be intermittently formed in a direction in which the first planar coil 1011 extends in the spiral shape.

As illustrated in Fig. 32 and Fig. 33, the side surfaces of the first planar coil 1011 include inner circumferential side surfaces 1013 of side surfaces that face the first central axis C1' in the radial direction of the first planar coil 1011 and outer circumferential side surfaces 1014 opposite the inner circumferential side surfaces 1013. The second raised portions 1022A of the second rib portions 1022 include inner raised portions 1022A1 that are in contact with or close to the inner circumferential side surfaces 1013 and outer raised portions 1022A2 that are in contact with or close to the outer circumferential side surfaces 1014.

The inner raised portions 1022A1 and the outer raised portions 1022A2 are separated from each other in the radial direction of the first planar coil 1011 and project from the contact surface 1020S. More specifically, the first holding member 1020 has grooves 1024 at portions on the contact surface 1020S that are located between the turn portions 1011n adjacent to each other. The grooves 1024 extend in a spiral shape along the first planar coil 1011 that has a spiral shape. The inner raised portions 1022A1 and the outer raised portions 1022A2 adjacent to each other in the radial direction of the first planar coil 1011 are separated from each other in the radial direction described above with the turn portions 1011n interposed therebetween or are separated from each other in the radial direction described above with the grooves 1024 interposed therebetween. The grooves 1024 are formed such that bottom portions thereof are deeper than the contact surface 1020S.

A state in which the second rib portions 1022, specifically, the second raised portions 1022A are close to the side surfaces of the first planar coil 1011 in the radial direction of the first planar coil 1011 means a state in which distances between the second raised portions 1022A and the side surfaces in the radial direction described above are 1 mm or less, preferably 0.5 mm or less or 0.2 mm or less, and a state in which the second raised portions 1022A are adjacent to the side surface described above.

As illustrated in Fig. 33, the second rib portions 1022 include the multiple second overhang portions 1022B that extend from the second raised portions 1022A in the radial direction of the first planar coil 1011. As illustrated in Fig. 29, the multiple second overhang portions 1022B are provided at an interval in the direction in which the first planar coil 1011 extends in the spiral shape. More specifically, the multiple second overhang portions 1022B include groups of multiple second overhang portions 1022B that are arranged at an interval in a direction that is parallel with the radial direction of the first planar coil 1011 and that does not pass through the first central axis C1'. In an example in Fig. 29, the number of the groups is 8.

That is, the second overhang portions 1022B according to the present embodiment partly cover the first surface 1011A of the first planar coil 1011. The second holding member 1030 exerts magnetism and is partly in contact with the first planar coil 1011 as described later. The present inventor has found that as a portion of the second holding member 1030 in contact with the first planar coil 1011 becomes larger, the coil performance is further improved. The present inventor has also found that a range in which the second overhang portions 1022B cover the first surface 1011A is preferably 25% or less of the area of the first surface 1011A in the perspective that good coil performance is ensured, and good adhesion between the first planar coil 1011 and the first holding member 1020 is ensured. The present inventor has found in a simulation that the Q value of the coil component 1010 in the case where the second overhang portions 1022B cover the range of 25% or less of the area of the first surface 1011A is at most about 5% smaller than the Q value in the case where the second overhang portions 1022B is not provided. In the case where the adhesion is considered, the range in which the second overhang portions 1022B cover the first surface 1011A may be 5% or more of the area of the first surface 1011A.

According to the present embodiment, the groups of multiple second overhang portions 1022B are provided at the interval in the direction parallel with the radial direction of the first planar coil 1011 so as to avoid the first rib portions 1021. Specifically, according to the present embodiment, two sets of groups of multiple second overhang portions 1022B that are arranged at the interval in the direction parallel with the radial direction of the first planar coil 1011 are located between groups of multiple first rib portions 1021 that are adjacent to each other in the circumferential direction and that are arranged at the interval in the radial direction of the first planar coil 1011. However, the number and positions of the second overhang portions 1022B are not particularly limited, but the second overhang portions 1022B may be formed in an aspect that differs from the aspect according to the present embodiment.

As illustrated in Fig. 33, the second overhang portions 1022B are formed across the turn portions 1011n. That is, the second overhang portions 1022B straddle the inner raised portions 1022A1 and the outer raised portions 1022A2 adjacent to each other with the turn portions 1011n interposed therebetween. However, the second overhang portions 1022B may be formed such that the turn portions 1011n partly open when viewed in a section in the radial direction. The second overhang portions 1022B can function as spacers for maintaining the interval between the first planar coil 1011 and the second planar coil 1012. In this case, the thickness of the second overhang portions 1022B may be 0.5 mm or more and 1.5 mm or less.

### (Second Holding Member)

Returning to Fig. 28, the second holding member 1030 according to the present embodiment is formed into a single body together with the first planar coil 1011, the second planar coil 1012, and the first holding member 1020 such that the first planar coil 1011 and the second planar coil 1012 are sandwiched between the second holding member 1030 and the first holding member 1020. A portion of the second holding member 1030 is interposed between the second planar coil 1012 and the first magnetic shield member 1040, and another portion is interposed also between the first planar coil 1011 and the second planar coil 1012 as described above.

Specifically, the second holding member 1030 includes a first layer portion 1031, a second layer portion 1032, a third layer portion 1033, a fourth layer portion 1034, and a fifth layer portion 1035 that are stacked in a direction from the first magnetic shield member 1040 toward the first holding member 1020. In practice, the first layer portion 1031, the second layer portion 1032, the third layer portion 1033, the fourth layer portion 1034, and the fifth layer portion 1035 have no joints and are formed into a single body.

The first layer portion 1031, the second layer portion 1032, the third layer portion 1033, and the fourth layer portion 1034 are sized so as to encompass the whole of the first planar coil 1011 and the second planar coil 1012 when viewed in the axial direction of the first planar coil 1011 and the second planar coil 1012.

The first layer portion 1031 is a sheet portion that is interposed between the second planar coil 1012 and the first magnetic shield member 1040. The first layer portion 1031 is in contact with the first surface 1012A of the second planar coil 1012 and entirely covers the first surface 1012A. The second layer portion 1032 overlaps the first layer portion 1031 and covers side surfaces of the second planar coil 1012. In other words, the second layer portion 1032 covers the whole of the side surfaces of the second planar coil 1012 inward and outward in the radial direction. The side surfaces of the second planar coil 1012 are located between the first surface 1012A and the second surface 1012B.

The third layer portion 1033 is interposed between the first planar coil 1011 and the second planar coil 1012. That is, the third layer portion 1033 fills the interval between the first planar coil 1011 and the second planar coil 1012. The fourth layer portion 1034 covers the side surfaces of the first planar coil 1011. In other words, the fourth layer portion 1034 covers the whole of the side surfaces of the first planar coil 1011 inward and outward in the radial direction precisely with the second rib portions 1022 interposed therebetween. A surface of the fourth layer portion 1034 opposite a surface that is connected to the third layer portion 1033 is flush with the second surface 1011B of the first planar coil 1011. The fifth layer portion 1035 projects from the surface of the fourth layer portion 1034 that is flush with the second surface 1011B of the first planar coil 1011.

The fifth layer portion 1035 is filled in the grooves 1024 of the first holding member 1020. Accordingly, the fifth layer portion 1035 extends in a spiral shape along the first planar coil 1011 that has a spiral shape.

The second holding member 1030 exerts magnetism as a whole, that is, the first layer portion 1031, the second layer portion 1032, the third layer portion 1033, the fourth layer portion 1034, and the fifth layer portion 1035 exert magnetism. As for the second holding member 1030, the eddy current loss and leaking magnetic flux are decreased due to magnetism, the coupling coefficient is increased, and consequently, the coil performance is improved. The relative permeability of the second holding member 1030 is preferably 2.0 or more or may be 2.0 or more and 10.0 or less. The relative permeability of the second holding member 1030 is more preferably 5.0 or more or may be 5.0 or more and 10.0 or less. The relative permeability of the second holding member 1030 is not particularly limited, but when the relative permeability is too high, the flexibility and strength of the second holding member 1030 are undesirably decreased in some cases. Accordingly, the relative permeability of the second holding member 1030 may be 200 or less.

The second holding member 1030 includes the fifth layer portion 1035 and can consequently effectively improve the coil performance. The height of the fifth layer portion 1035 is not particularly limited but may be, for example, 0.5 mm or more or may be 1.0 mm or more. As the height of the fifth layer portion 1035 increases, the eddy current loss tends to be further decreased, and the coupling coefficient tends to increase. As the fifth layer portion 1035 becomes higher, the fifth layer portion 1035 tends to be broken from the root. In view of this, for example, the height of the fifth layer portion 1035 may be 10 mm or less. The fifth layer portion 1035 may not be provided.

For example, the second holding member 1030 according to the present embodiment contains multiple or innumerable magnetic material particles composed of a magnetic material and resin. The magnetic material particles are held by the resin that serves as a holding material.

The magnetic material particles may be composed of ferrite, particularly, ferrite of a soft magnetic material, a nanocrystal magnetic material, silicon steel, electromagnetic soft iron, or amorphous metal, or two or more kinds of these. The resin that serves as the holding material may be glass fiber reinforced polyamide. That is, the resin may be composed of a material that contains polyamide that is thermoplastic resin (a thermoplastic material) and glass fibers. However, the mold material of the second holding member 1030 is not particularly limited.

### (First Magnetic Shield Member)

The first magnetic shield member 1040 is provided to decrease magnetic permeability and/or a leaking magnetic field. The first magnetic shield member 1040 is a sheet member that differs from the first planar coil 1011, the second planar coil 1012, the first holding member 1020, and the second holding member 1030. The first magnetic shield member 1040 that differs from the first planar coil 1011, the second planar coil 1012, the first holding member 1020, and the second holding member 1030 means the first magnetic shield member 1040 that is not formed into a single body together with the first planar coil 1011, the second planar coil 1012, the first holding member 1020, and the second holding member 1030. However, the first magnetic shield member 1040 and the second holding member 1030 may be joined to each other with an adhesive layer, interposed therebetween. The first magnetic shield member 1040 is sized so as to encompass the first planar coil 1011, the second planar coil 1012, and the second holding member 1030 in plan view. The first magnetic shield member 1040 overlaps the first planar coil 1011, the second planar coil 1012, and the second holding member 1030 and is in direct contact with the second holding member 1030.

The first magnetic shield member 1040 according to the present embodiment exerts magnetism and contains a magnetic material or is composed of a magnetic material. As for the coil component 1010, a magnetic field is generated when the electric current is applied to the first planar coil 1011 and the second planar coil 1012. The magnetic field that is generated at the coil component 1010 spreads in all directions with respect to the central axes C1' and C2' of the first planar coil 1011 and the second planar coil 1012. At this time, the first magnetic shield member 1040 that exerts magnetism can direct lines of magnetic flux that tend to spread toward the central axes C1' and C2'. The coil component 1010 can be installed on a vehicle, and at this time, if the magnetic field that is generated at the coil component 1010 extends through another vehicle component, the vehicle component is adversely affected in some cases. In these cases, the first magnetic shield member 1040 can decrease the leaking magnetic field that does not contribute to the generation of the electric current.

The first magnetic shield member 1040 preferably contains a soft magnetic material or a nanocrystal magnetic material. More specifically, the first magnetic shield member 1040 contains ferrite or preferably contains soft ferrite. According to the present embodiment, the first magnetic shield member 1040 includes a ferrite plate that corresponds to a magnetic plate. More specifically, the first magnetic shield member 1040 includes multiple ferrite plates that are arranged into a sheet.

The relative permeability of the first magnetic shield member 1040 may be 500 or more or may be 1000 or more. The relative permeability of the first magnetic shield member 1040 may be 500 or more and 3000 or less or may be 1000 or more and 3000 or less. The relative permeability according to the present specification has a value that is measured at a frequency of 85 kHz and an environmental temperature of 23 degrees as described above.

### (Second Magnetic Shield Member)

The second magnetic shield member 1050 is provided so as to cover the first magnetic shield member 1040. According to the present embodiment, the second magnetic shield member 1050 is in contact with the first magnetic shield member 1040, but alternatively, the second magnetic shield member 1050 may be in contact with the first magnetic shield member 1040 with a spacer interposed therebetween. The second magnetic shield member 1050 is composed of a metal material and is conductive. Specifically, according to the present embodiment, the second magnetic shield member 1050 is composed of aluminum. In this case, magnetism is inhibited from leaking from the first planar coil 1011 and the second planar coil 1012 via the second magnetic shield member 1050. The second magnetic shield member 1050 may be composed of, for example, an aluminum alloy, copper, or stainless steel.

### (Connection Terminal)

As illustrated in Fig. 26 and Fig. 27, the first connection terminal 1061 is connected to the outer end portion in the radial direction of the turn portion 10115 of the first planar coil 1011. The second connection terminal 1062 is connected to the outer end portion in the radial direction of the turn portion 10125 of the second planar coil 1012. The first connection terminal 1061 and the second connection terminal 1062 can be used for, for example, connection to the high-frequency current applying unit 1A or the converter 2A. The first connection terminal 1061 and the turn portion 10115 may be connected to each other by ultrasonic joining, and the second connection terminal 1062 and the turn portion 10125 may be connected to each other by ultrasonic joining. However, a connection method is not limited but may be, for example, connection with a conductive adhesive.

### <Method of Manufacturing Coil Component 1010>

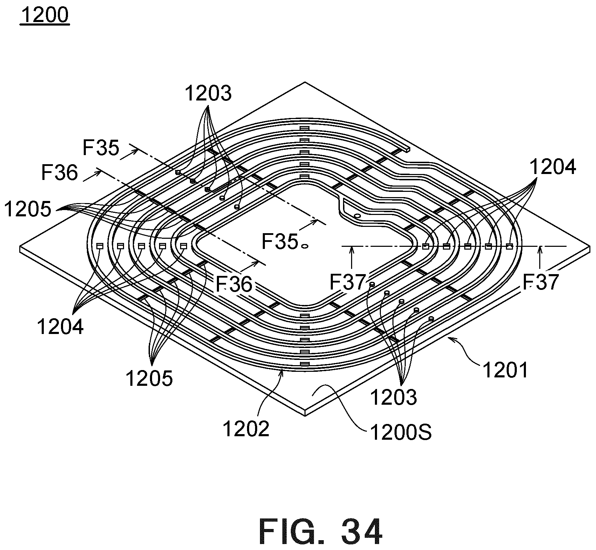

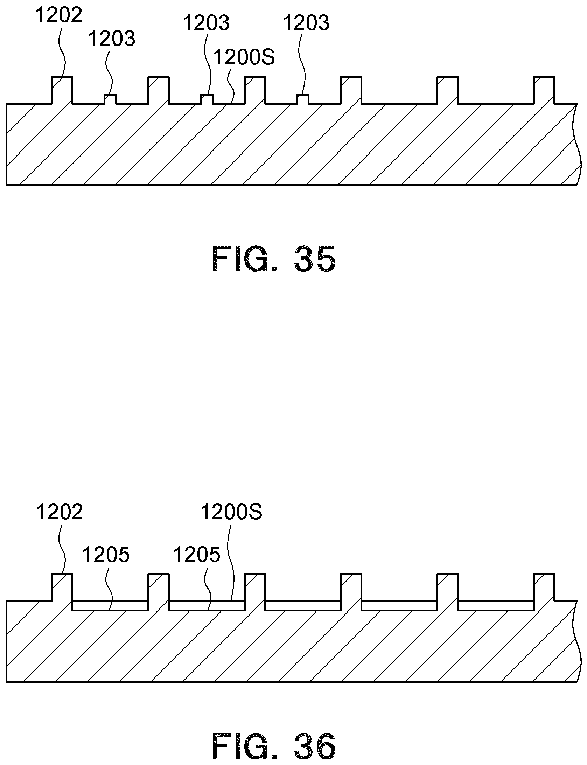

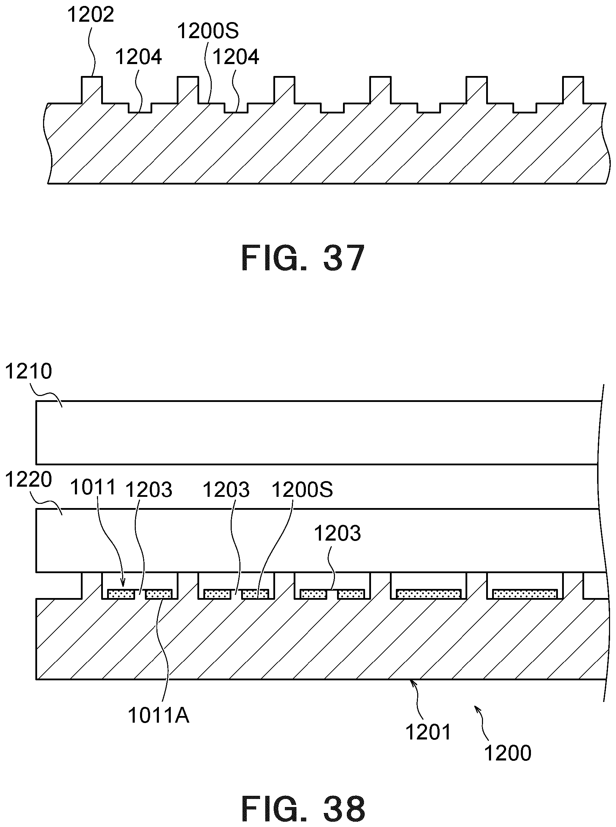

An example of a method of manufacturing the coil component 1010 will now be described. Fig. 34 is a perspective view of a mold 1200 for manufacturing the coil component 1010. Fig. 35 is a sectional view taken along a line F35-F35 in Fig. 34. Fig. 36 is a sectional view taken along a line F36-F36 in Fig. 34. Fig. 37 is a sectional view taken along a line F37-F37 in Fig. 34.

After the first planar coil 1011 and the mold material of the first holding member 1020 are placed in this order on the mold 1200, the first planar coil 1011 and the mold material of the first holding member 1020 are thermally pressed between the mold 1200 and another mold 1210 (see Fig. 38). Consequently, a coil intermediate material 1010M (see Fig. 27) that is a single body of the first planar coil 1011 and the first holding member 1020 is formed.

The mold 1200 includes a body portion 1201 that has a plate shape and that has a flat installation surface 1200S on which the first planar coil 1011 is placed. Protuberances 1202 that project from the installation surface 1200S and that extend in a spiral shape are formed on the body portion 1201. Referring to Fig. 28, the protuberances 1202 are portions at which the grooves 1024 of the first holding member 1020 are formed. The first planar coil 1011 is installed in a spiral region on the contact surface 1020S that extends along the protuberances 1202 that have the spiral shape.

As illustrated in Fig. 34, multiple positioning protrusions 1203 are formed in the region on the contact surface 1020S in which the first planar coil 1011 is installed. The first planar coil 1011 has holes through which the positioning protrusions 1203 extend. The positioning protrusions 1203 extend through the holes of the first planar coil 1011 and consequently adjust the position of the first planar coil 1011 to the desired position. Referring to Fig. 34 to Fig. 37, the mold 1200 includes multiple first recessed portions 1204 for forming the first overhang portions 1021B of the first rib portions 1021 and second recessed portions 1205 for forming the second overhang portions 1022B of the second rib portions 1022.

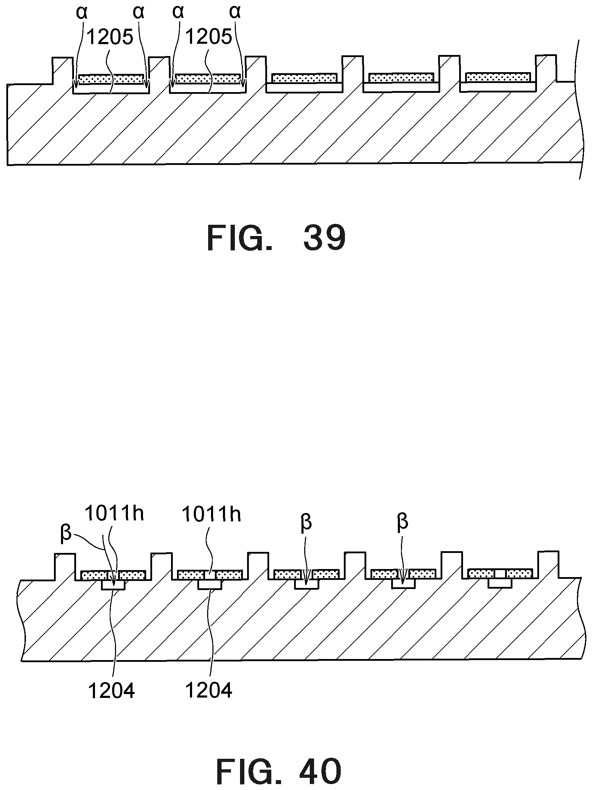

When the coil intermediate material 1010M is manufactured by using the mold 1200 described above, as illustrated in Fig. 38, the first planar coil 1011 is first installed in the spiral region on the installation surface 1200S of the body portion 1201. The first planar coil 1011 is installed on the mold 1200 with the first surface 1011A facing the installation surface 1200S. At this time, the multiple positioning protrusions 1203 extend through the holes of the first planar coil 1011 and consequently adjust the position of the first planar coil 1011. As illustrated in Fig. 38 and Fig. 39, portions of the protuberances 1202 adjacent to each other in the radial direction receive the first planar coil 1011 with an interval from the side surfaces of the first planar coil 1011 provided. That is, a distance between the portions of the protuberances 1202 adjacent to each other in the radial direction is more than the width of each turn portion 1011n that is disposed therebetween. A mold material 1220 is installed on the first planar coil 1011. The first planar coil 1011 and the mold material 1220 are thermally pressed between the mold 1200 and the other mold 1210.

The mold material is softened and melted due to thermal pressing. Consequently, the first holding member 1020 that includes the base portion 1020B, the first rib portions 1021, and the second rib portions 1022 and that is formed into a single body together with the first planar coil 1011 is formed.

Specifically, as illustrated in Fig. 38 and Fig. 39, the mold material 1220 is partly filed in the interval between the portions of the protuberances 1202 adjacent to each other in the radial direction and the turn portions 1011n, and consequently, the second raised portions 1022A of the second rib portions 1022 are formed. As illustrated by arrows α in Fig. 39, the mold material 1220 is partly filled in the second recessed portions 1205. The mold material 1220 is cured (solidified) in the second recessed portions 1205, and consequently, the second overhang portions 1022B of the second rib portions 1022 are formed. That is, the first planar coil 1011 is placed on the mold 1200 with the first planar coil 1011 partly covering the second recessed portions 1205, and the mold material 1220 is filled in the second recessed portions 1205 from parts of the second recessed portions 1205 that are not covered by the second planar coil 1012. Consequently, the second overhang portions 1022B are formed.

As illustrated in Fig. 40, the first planar coil 1011 is placed on the mold 1200 with the path holes 1011h that are formed in the turn portions 1011n overlapping the second recessed portions 1205. Consequently, as illustrated by arrows β, the mold material 1220 that is melted partly passes through the path holes 1011h and is filled in the second recessed portions 1205. The mold material 1220 is cured (solidified) in the path holes 1011h and in the second recessed portions 1205, and consequently, the first rib portions 1021 are formed. The mold material 1220 that partly remains on the second surface 1011B of the first planar coil 1011 is cured (solidified), and consequently, the base portion 1020B of the first holding member 1020 is formed.

The coil intermediate material 1010M that is the single body of the first planar coil 1011 and the first holding member 1020 is formed in the above manner. Subsequently, for example, the second planar coil 1012 and the second holding member 1030 are formed into a single body together with the coil intermediate material 1010M, and the coil component 1010 is manufactured. According to the present embodiment, the mold material 1220 is melted between the molds 1200 and 1210 due to thermal pressing, and the coil intermediate material 1010M that is the single body of the first planar coil 1011 and the first holding member 1020 is formed. However, the manufacturing method is an example. For example, the coil intermediate material 1010M may be formed in a manner in which the mold material is injected between the molds 1200 and 1210.

### <Use of Coil Component>

The coil component 1010 according to the present embodiment can be used as the power transmission coil of the power transmitter 1 of the wireless power transmission system S described above and can be used as the power reception coil of the power receiver 2.

In the case where the coil component 1010 is used as the power transmission coil, the first connection terminal 1061 and the second connection terminal 1062 are connected to the high-frequency current applying unit 1A illustrated in Fig. 1 or an alternating-current power source. After the high-frequency current is applied to the coil component 1010, the electric current flows from the first connection terminal 1061 to the first planar coil 1011 and the second planar coil 1012 and can subsequently flow from the second connection terminal 1062 to the high-frequency current applying unit 1A or the alternating-current power source. The electric current flows from the second connection terminal 1062 to the second planar coil 1012 and the first planar coil 1011 and can subsequently flow from the first connection terminal 1061 to the high-frequency current applying unit 1A or the alternating-current power source. This enables a magnetic field that includes a line of magnetic force parallel with the central axis of each planar coil to be generated.

In the case where the coil component 1010 is used as the power reception coil, the magnetic field that includes the line of magnetic force is received or is generated so as to pass inside the first planar coil 1011 and the second planar coil 1012, and consequently, the high-frequency current can be generated at the first planar coil 1011 and the second planar coil 1012. The high-frequency current can be applied from the first connection terminal 1061 or the second connection terminal 1062 to an external device.

The coil component 1010 can be used for a transformer or an antenna. For example, in the case where the coil component 1010 functions as a primary coil of the transformer, the first connection terminal 1061 and the second connection terminal 1062 are connected to the alternating-current power source. The supply of the high-frequency current enables magnetic flux to be applied from the center of each planar coil to an iron core.

The coil component 1010 according to the present embodiment described above includes the first planar coil 1011 that has a spiral shape and that has the first surface 1011A and the second surface 1011B opposite each other in the axial direction that extends along the first central axis C1' of the spiral shape and the first holding member 1020 that overlaps the first planar coil 1011 such that the first holding member 1020 faces the second surface 1011B of the first planar coil 1011 and that holds the first planar coil 1011. The first holding member 1020 includes the first rib portions 1021 and the second rib portions 1022. The first holding member 1020 includes the base portion 1020B that has the contact surface 1020S that is in contact with the second surface 1011B of the first planar coil 1011 and that extends along the second surface 1011B, and the first rib portions 1021 and the second rib portions 1022 project from the contact surface 1020S.

The first rib portions 1021 include the first raised portions 1021A that project from the contact surface 1020S of the base portion 1020B, that extend through the path holes 1011h formed in the first planar coil 1011, and that are in contact with or close to the inner circumferential surfaces of the path holes 1011h in the radial direction of the first planar coil 1011. The second rib portions 1022 include the second raised portions 1022A that are in contact with or close to the side surfaces of the first planar coil 1011 in the radial direction of the first planar coil 1011 and that cross the first planar coil 1011 in the axial direction and the second overhang portions 1022B that extend from the second raised portions 1022A in the radial direction and that face the first surface 1011A of the first planar coil 1011.

As for the coil component 1010 according to the present embodiment, when the first planar coil 1011 tries leaving from the first holding member 1020, the inner circumferential surfaces of the path holes 1011h of the first planar coil 1011 come into contact with the first raised portions 1021A, and movement of the first planar coil 1011 can be regulated. The first rib portions 1021 further include the first overhang portions 1021B that extend from the first raised portions 1021A in the radial direction and that face the first surface 1011A of the first planar coil 1011. Consequently, when the first planar coil 1011 tries leaving from the first holding member 1020, the first surface 1011A comes into contact with the first overhang portions 1021B, and consequently, movement of the first planar coil 1011 can be more effectively regulated.

When the first planar coil 1011 tries leaving from the first holding member 1020, the side surfaces of the first planar coil 1011 come into contact with the second raised portions 1022A, and movement of the first planar coil 1011 can be regulated. The first surface 1011A comes into contact with the second overhang portions 1022B, and consequently, movement of the first planar coil 1011 can be more effectively regulated.

Accordingly, the first planar coil 1011 can be inhibited from floating from the first holding member 1020 that serves as a sheet material that is formed into a single body together with the first planar coil 1011.

### <<Second Embodiment of Second Disclosure>>

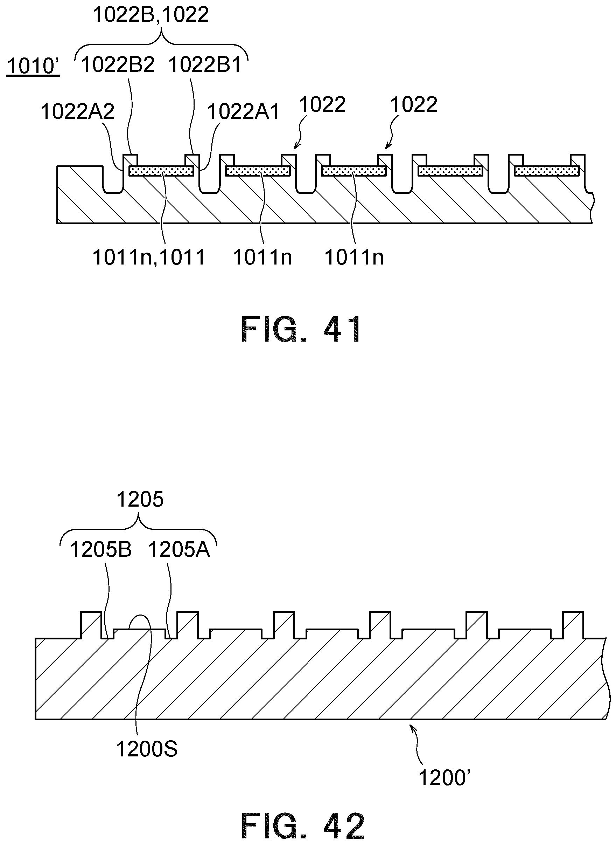

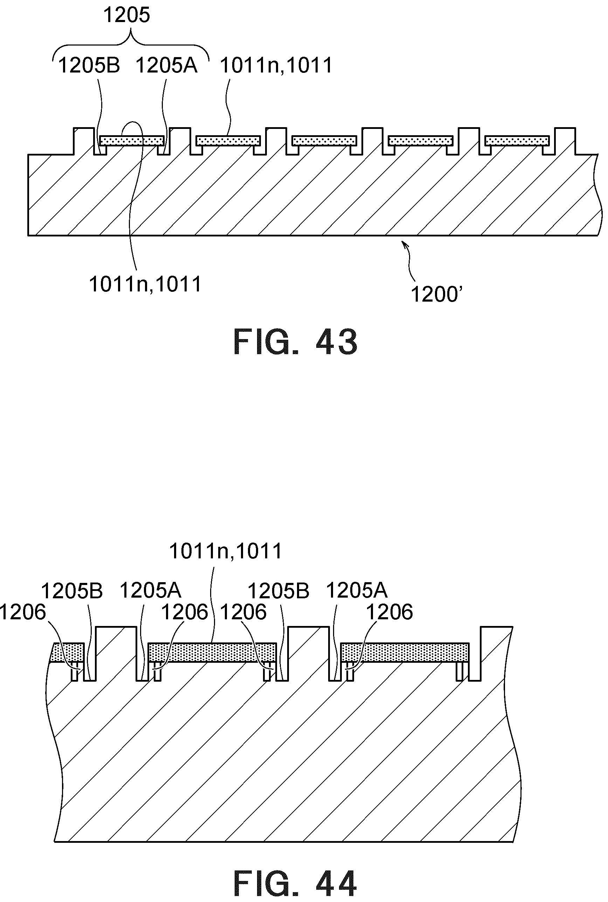

A coil component 1010' according to a second embodiment will now be described. Fig. 41 is a sectional view of a portion of the coil component 1010' according to the second embodiment. Fig. 42 is a sectional view of a mold 1200' for manufacturing the coil component 1010'. Fig. 43 illustrates an example of a method of manufacturing the coil component 1010'. Components according to the embodiment described later like or corresponding to those according to the first embodiment of the second disclosure are designated by using like reference signs. In the case of the like components, the detailed description thereof is omitted.

Fig. 41 illustrates the second rib portions 1022 that are provided on the first holding member 1020 of the coil component 1010'. According to the present embodiment, the second overhang portions 1022B of the second rib portions 1022 are formed such that the turn portions 1011n partly open when viewed in a section in the radial direction. Specifically, the second overhang portions 1022B include first portions 1022B1 that extend from the inner raised portions 1022A1, among the inner raised portions 1022A1 and the outer raised portions 1022A2 adjacent to each other with the turn portions 1011n interposed therebetween, and second portions 1022B2 that extend from the outer raised portions 1022A2.

Fig. 42 illustrates a section of the mold 1200' that corresponds to a section illustrated in Fig. 36. As for the mold 1200', the second recessed portions 1205 are divided into inner circumferential recessed portions 1205A that form the first portions 1022B1 of the second overhang portions 1022B and outer circumferential recessed portions 1205B that form the second portions 1022B2 of the second overhang portions 1022B. A portion of the contact surface 1020S on which the first planar coil 1011 is installed is located between the inner circumferential recessed portions 1205A and the outer circumferential recessed portions 1205B.

In the case where the first planar coil 1011 and the first holding member 1020 are formed into a single body, as illustrated in Fig. 43, the first planar coil 1011 is installed on the contact surface 1020S. At this time, the first planar coil 1011 is installed such that inner circumferential edges of the turn portions 1011n overlap the inner circumferential recessed portions 1205A, and outer circumferential edges of the turn portions 1011n overlap the outer circumferential recessed portions 1205B. The inner circumferential recessed portions 1205A and the outer circumferential recessed portions 1205B are partly covered by the first planar coil 1011 and partly open toward the outside. Consequently, the mold material is filled in the inner circumferential recessed portions 1205A and the outer circumferential recessed portions 1205B from opened portions, and the second rib portions 1022 that include the second overhang portions 1022B that include the first portions 1022B1 and the second portions 1022B2 are formed.

Fig. 44 is a sectional view of a modification to the mold 1200'. In Fig. 44, support portions 1206 that are formed so as to be located in the inner circumferential recessed portions 1205A and the outer circumferential recessed portions 1205B are provided. Specifically, the support portions 1206 have surfaces that project from bottom surfaces of the inner circumferential recessed portions 1205A and the outer circumferential recessed portions 1205B and that are flush with the contact surface 1020S. According to the modification, when the first planar coil 1011 is placed on the mold such that the inner circumferential edges of the turn portions 1011n overlap the inner circumferential recessed portions 1205A, and the outer circumferential edges of the turn portions 1011n overlap the outer circumferential recessed portions 1205B, portions near the outer circumferential edges of the turn portions 1011n and portions near the inner circumferential edges face the support portions 1206. That is, the first planar coil 1011 is placed on the mold such that the portions of the first planar coil 1011 that cover the inner circumferential recessed portions 1205A and the outer circumferential recessed portions 1205B overlap the support portions 1206. Consequently, when the mold material flows toward the inner circumferential recessed portions 1205A and the outer circumferential recessed portions 1205B, the turn portions 1011n are inhibited from deforming due to pressure. Consequently, the flow of the mold material is inhibited from being impeded due to a narrow passage, the first planar coil 1011 is inhibited from deforming, and consequently, the coil component 1010' can be appropriately and stably obtained.

### <<Third Embodiment of Second Disclosure>>

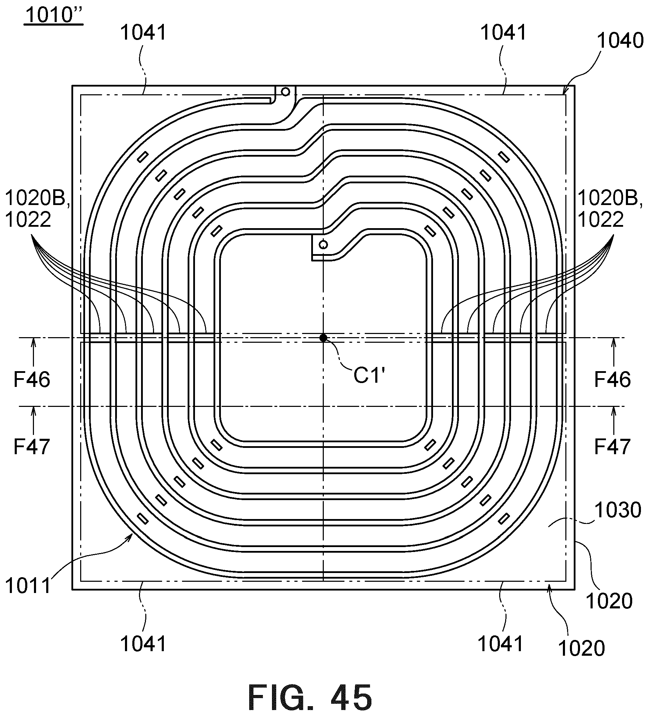

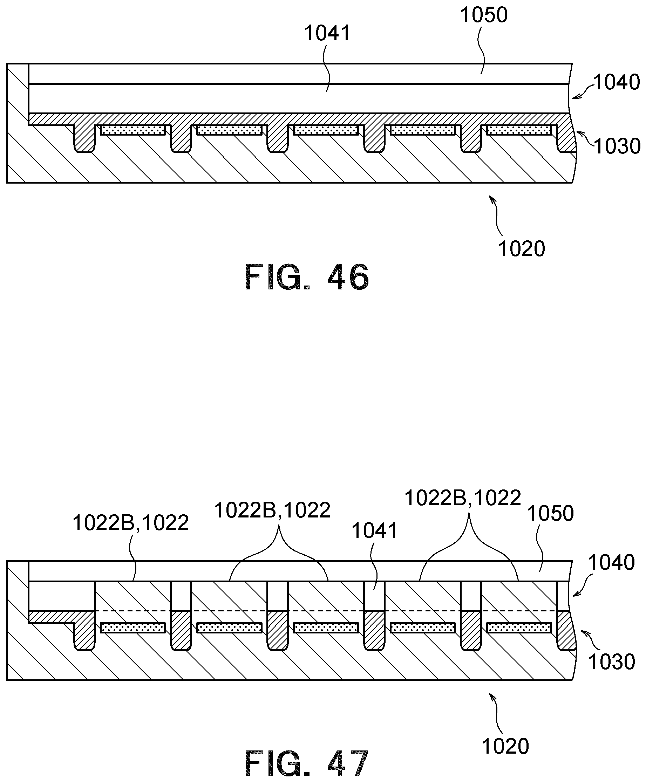

A coil component 1010" according to a third embodiment will now be described. Fig. 45 is a plan view of the coil component 1010" according to the third embodiment. Fig. 46 is a sectional view taken along a line F46-F46 in Fig. 45. Fig. 47 is a sectional view taken along a line F47-F47 in Fig. 45.

According to the present embodiment, as illustrated in Fig. 45, the first magnetic shield member 1040 includes multiple ferrite plates 1041 that correspond to magnetic plates. More specifically, the first magnetic shield member 1040 includes four ferrite plates 1041 that are arranged in a sheet shape. For convenience of description, the ferrite plates 1041 are illustrated by using two-dot chain lines. The ferrite plates 1041 have a rectangular shape, are arranged so as to spread all over, and consequently form the first magnetic shield member 1040 that has a rectangular shape.

According to the present embodiment, as illustrated in Fig. 46 and Fig. 47, the second planar coil 1012 is not provided, and the second holding member 1030 is provided so as to cover the first planar coil 1011. The first magnetic shield member 1040 is stacked with the second holding member 1030. The second holding member 1030 may not be provided, and the first magnetic shield member 1040 may be provided so as to be in contact with the first planar coil 1011.

The positions of the second overhang portions 1022B of the second rib portions 1022 of the first holding member 1020 differ from those according to the first embodiment. That is, as illustrated in Fig. 45, the multiple second overhang portions 1022B are arranged at an interval in the radial direction of the first planar coil 1011. That is, a direction in which the multiple second overhang portions 1022B are arranged extends through the first central axis C1' of the first planar coil 1011. As illustrated in Fig. 47, the second overhang portions 1022B of the second rib portions 1022 are not covered by the second holding member 1030 and project from the second holding member 1030. The dimension (the thickness) of each second overhang portion 1022B that projects from the second holding member 1030 may be 1.5 mm or more and 5 mm or less.

In an illustrated example, surfaces of the second overhang portions 1022B that face the second magnetic shield member 1050 are flush with a surface of the first magnetic shield member 1040. In this case, the second magnetic shield member 1050 is installed with the second magnetic shield member 1050 being in contact with the second overhang portions 1022B and the first magnetic shield member 1040, and accordingly, the state of installation is stable.

The multiple ferrite plates 1041 are stacked with the second holding member 1030 so as to avoid the second overhang portions 1022B that project from the second holding member 1030. Specifically, as illustrated in Fig. 45, two ferrite plates 1041 sandwich multiple second overhang portions 1022B that are arranged at an interval in the radial direction of the first planar coil 1011. According to the present embodiment, the two ferrite plates 1041 are in contact with the multiple second overhang portions 1022B. In the illustrated example, groups of second overhang portions 1022B that are arranged in the interval in the radial direction of the first planar coil 1011 are located in one direction from the first central axis C1' and in another direction. Pairs of two ferrite plates 1041 that sandwich multiple second overhang portions 1022B that are arranged at the interval in the radial direction of the first planar coil 1011 are located in one direction from the first central axis C1' and in another direction. Two ferrite plates 1041 that do not sandwich the multiple second overhang portions 1022B and that are adjacent to each other are in contact with each other.

According to the embodiment described above, in the case where the interval is to be provided between the ferrite plates 1041, the ferrite plates 1041 can be disposed in the desired state by using the second overhang portions 1022B.

### <<Other Embodiments of Second Disclosure>>

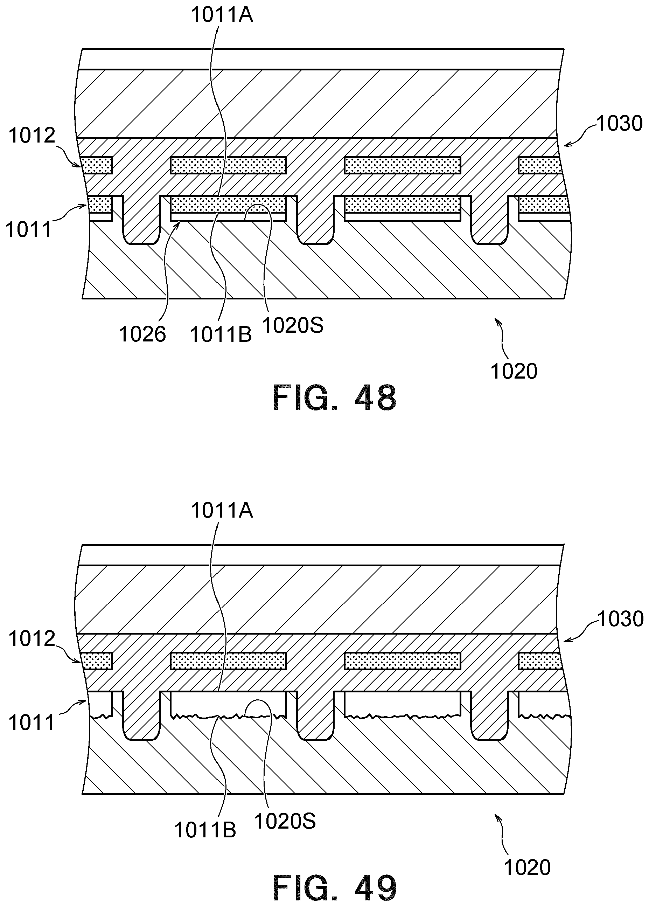

Fig. 48 is a sectional view of a coil component according to another embodiment. The coil component illustrated in Fig. 48 further includes an adhesive layer 1026 that joins the second surface 1011B of the first planar coil 1011 and the contact surface 1020S of the first holding member 1020 to each other and that contains thermoplastic resin. An example of the thermoplastic resin that is contained in the adhesive layer 1026 may be polyethylene and may be specifically low-density polyethylene, middle-density polyethylene, or high-density polyethylene but is not particularly limited.

For example, the adhesive layer 1026 may be composed of a heat seal film. In this case, the heat seal film that is heated and melted is cured (solidified) by being cooled, and consequently, the adhesive layer 1026 is formed. In this case, the heat seal film is bonded to the first planar coil 1011, the mold material of which the first holding member 1020 is composed is placed on the heat seal film and is thermally pressed, and consequently, the heat seal film is heated. During thermal pressing, the heat seal film is preferably melted at 140°C to 160°C. In this perspective, the thermoplastic resin described above may be polyethylene the melting point is typically about 120°C.

According to the embodiment illustrated in Fig. 48 described above, adhesion between the first planar coil 1011 and the first holding member 1020 can be improved.

Fig. 49 is a sectional view of a coil component according to another embodiment. As for the coil component illustrated in Fig. 49, the surface roughness of the second surface 1011B of the first planar coil 1011 is more than the surface roughness of the first surface 1011A. This enables the adhesion between the first planar coil 1011 and the first holding member 1020 to be improved. The surface roughness of the first surface 1011A may have the same degree as the surface roughness of the second surface 1011B. The surface roughness described herein is arithmetic average roughness defined as JIS B0601 (2013). The first surface 1011A may be adjusted so as to have the desired surface roughness by a roughening process such as etching.

The embodiments of the present disclosure are described above, and the embodiments described above may be modified in various ways. Such modifications can be included in the technical range of the present disclosure.

### <<<Embodiments of Third Disclosure>>>

Embodiments of the third disclosure will now be described with reference to the drawings.

### <Coil Component>

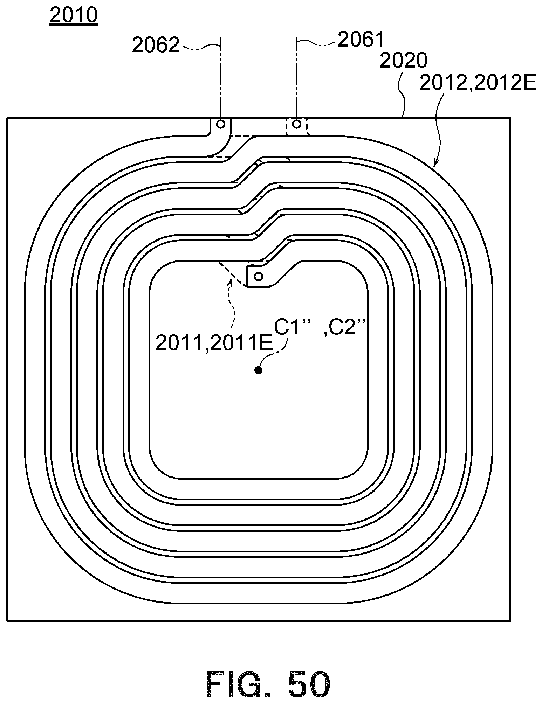

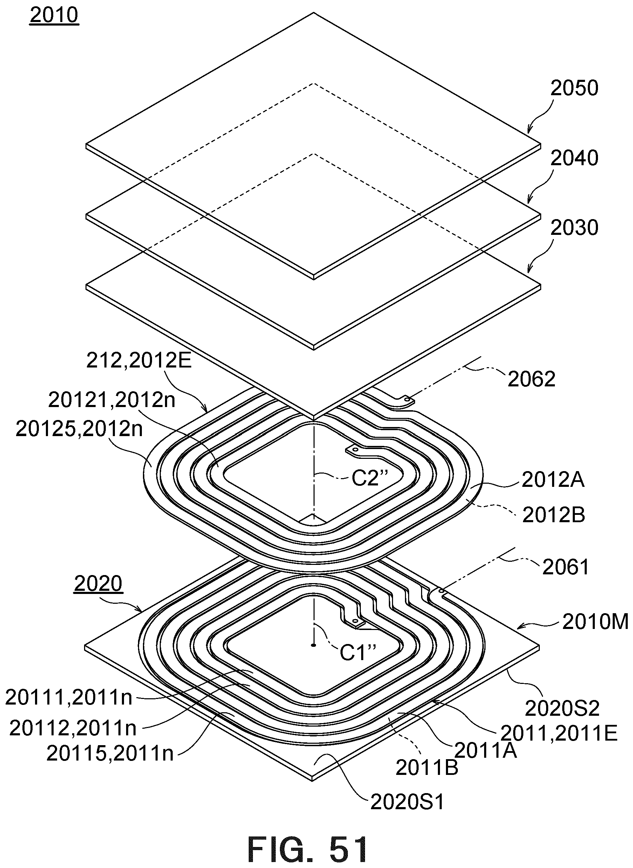

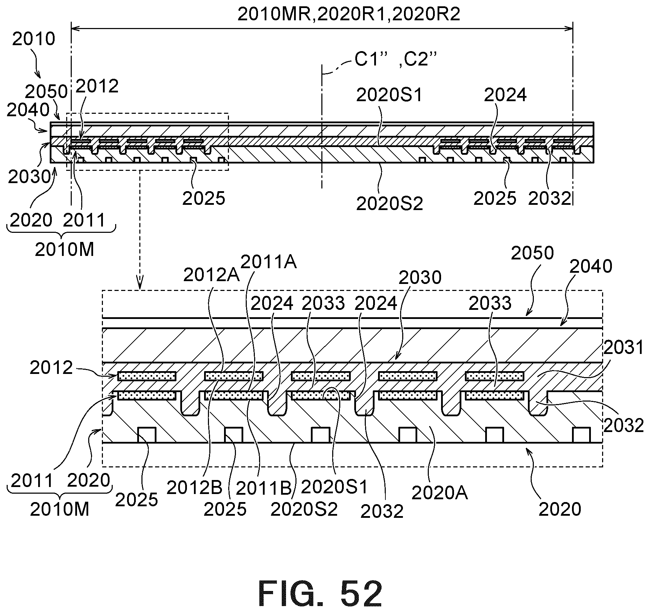

The coil component 2010 according to an embodiment will now be described. Fig. 50 is a plan view of the coil component 2010. Fig. 51 is an exploded perspective view of the coil component 2010. Fig. 52 is a sectional view of the coil component 2010 taken along the central axes C1" and C2" of planar coils 2011 and 2012 described later.

As illustrated in Fig. 50 to Fig. 52, the coil component 2010 includes the first planar coil 2011, the second planar coil 2012, a first holding member 2020, a second holding member 2030, a first magnetic shield member 2040, a second magnetic shield member 2050, a first connection terminal 2061, and a second connection terminal 2062.

As for the coil component 2010, as illustrated in Fig. 51, the first planar coil 2011, the second planar coil 2012, the second holding member 2030, the first magnetic shield member 2040, and the second magnetic shield member 2050 overlap the first holding member 2020 in this order. In Fig. 50, for convenience of description, an illustration for the second holding member 2030, the first magnetic shield member 2040, and the second magnetic shield member 2050 is omitted, but in practice, the second holding member 2030, the first magnetic shield member 2040, and the second magnetic shield member 2050 overlap the second planar coil 2012 illustrated by using solid lines. In Fig. 50, for convenience of description, the first planar coil 2011 is illustrated by using dashed lines. In Fig. 50 and Fig. 51, the first connection terminal 2061 and the second connection terminal 2062 are simply illustrated by using two-dot chain lines. Components of the coil component 2010 will now be described in detail.

### (First Planar Coil and Second Planar Coil)

The first planar coil 2011 has a spiral shape and is composed of a conductive material. According to the present embodiment, the first planar coil 2011 contains copper. Specifically, the first planar coil 2011 is composed of copper. However, the first planar coil 2011 may be composed of, for example, a copper alloy, aluminum, or an aluminum alloy.

As illustrated in Fig. 51, the first planar coil 2011 has a plate shape, and as illustrated in Fig. 52, a sectional shape of the first planar coil 2011 in a direction in which the first planar coil 2011 turns in the spiral shape, in other words, in a direction perpendicular to a direction in which the first planar coil 2011 extends in the spiral shape is a rectangular shape.

A reference sign C1" illustrated in Fig. 50 to Fig. 52 represents a first central axis of the first planar coil 2011 that passes through the center of the spiral shape of the first planar coil 2011. In the case where the axial direction of the first planar coil 2011 is mentioned below, the direction means a direction that extends along the first central axis C1" or a direction parallel with the first central axis C1". The radial direction of a circle that is drawn on a plane perpendicular to the first central axis C1" with a freely selected point on the first central axis C1" being centered is referred to as a radial direction of the first planar coil 2011. The first planar coil 2011 has a first surface 2011A and a second surface 2011B opposite each other in the axial direction. As for the first planar coil 2011, the second planar coil 2012, for example, is stacked with respect to the first surface 2011A, and the second surface 2011B faces the first holding member 2020.

As illustrated in Fig. 51, the first planar coil 2011 includes a conductor 2011E that has a spiral shape formed by multiple turn portions 2011n. The multiple turn portions 2011n of the first planar coil 2011 are arranged in the direction perpendicular to the first central axis C1" of the spiral shape. Specifically, the multiple turn portions 2011n are connected so as to be increasingly far away from the first central axis C1" outward in the radial direction of the first planar coil 2011 from the first central axis C1" of the spiral shape. Consequently, the spiral shape is formed.

The turn portions 2011n are basically formed so as to turn 360 degrees around the first central axis C1" such that linear conductive portions do not form an annular shape. In the case of a so-called planar coil, both end portions of each the turn portion 2011n are shifted in the radial direction of the first planar coil 2011. As for the multiple turn portions 2011n, an outer end portion in the radial direction of one of the turn portions 2011n is connected to an inner end portion in the radial direction of another turn portion 2011n, and the other turn portion 2011n extends so as to be far away from the first central axis C1".

In some cases below, one nearest to the first central axis C1" among the multiple turn portions 2011n is referred to as a turn portion 20111. In some cases, a turn portion that is connected to the turn portion 20111 is referred to as a turn portion 20112. According to the present embodiment, the multiple turn portions 2011n include five turn portions 20111 to 20115. In the following description for common matters among the multiple turn portions 2011n, these are basically referred to as the turn portions 2011n.

According to the present embodiment, the turn portions 2011n turn so as to form a rectangular shape. However, the turn portions 2011n may turn so as to form a polygonal shape other than a rectangular shape. For example, the turn portions 2011n may turn so as to form an octagonal shape, a regular octagonal shape, a dodecagonal shape, or a regular dodecagonal shape. The turn portions 2011n may turn so as to form a circular shape. The spiral shape described in the present specification and the present disclosure means a shape of a planar curve that is helically wound as described above. The planar curve described herein includes a planar pattern that repeatedly turns while curving as in a polyline as illustrated. In other words, the spiral shape means a shape of a planar curve that turns such that a distance from the center increases (or turns such that the distance from the center decreases).

An inner end portion (an end portion near the first central axis C1") in the radial direction of the turn portion 20111 nearest to the first central axis C1" is electrically connected to the second planar coil 2012. An outer end portion (an end portion that is distal from the first central axis C1") in the radial direction of the turn portion 20115 farthest from the first central axis C1" among the multiple turn portions 2011n is connected to the first connection terminal 2061.

The phrase "inner in the radial direction of the first planar coil 2011 (the turn portions 2011n)" described herein means a radial direction toward the first central axis C1". The phrase "outer in the radial direction of the first planar coil 2011 (the turn portions 2011n)" described herein means a radial direction away from the first central axis C1". According to the present embodiment, the first central axis C1" is determined as follows. Linear imaginary turn portions each of which has a shape similar to that of the turn portion 20112 are sequentially drawn from an inner end portion in the radial direction of the turn portion 20112 adjacent to the innermost turn portion 20111 so as to form a spiral shape inward in the radial direction. Drawing continues until an imaginary turn portion can be drawn within a diameter of 1 cm. A line that passes through an inner region in the radial direction of the imaginary turn portion that is drawn within a diameter of 1 cm in a direction perpendicular to the radial direction and to the circumferential direction of the spiral shape is determined as the first central axis C1".

For example, the first planar coil 2011 according to the present embodiment is formed into the spiral shape by being punched from a copper plate. The first planar coil 2011 can be formed by etching copper foil into the spiral shape.

For example, the thickness (the thickness of the conductor 2011E) of the first planar coil 2011 may be 0.1 mm or more and 1.0 mm or less. The radius (a distance to a portion farthest from the first central axis C1" in the radial direction) of the first planar coil 2011 may be 80 mm or more or may be 80 mm or more and 450 mm or less. The aspect ratio of the first planar coil 2011 (the conductor 2011E) a sectional shape of which is a rectangular shape is determined by dividing the line width (the width in the radial direction of each turn portion 2011n) of the first planar coil 2011 (the conductor 2011E) by the thickness of the first planar coil 2011 (the conductor 2011E). The aspect ratio of the first planar coil 2011 (the conductor 2011E) may be 2 or more and 12 or less or may be 3 or more and 10 or less.

In the case where power is transmitted to the electric vehicle by using the magnetic resonance method, a power of 1 kW or more, preferably, 5 kW or more can be preferably transmissive in the frequency band of the high-frequency current at 10 kHz to 200 kHz, particularly, at 75 kHz or more and 100 kHz or less, or at 79 kHz to 90 kHz. In this case, the thickness of the first planar coil 2011 composed of copper is preferably 0.2 mm or more. In this perspective, the lower limit of the thickness of the first planar coil 2011 may be set at 0.2 mm. In the case where power is transmitted to the electric vehicle, an excessive size is not preferable, and restriction on size is imposed in some cases. In this perspective, the first planar coil 2011 and the second planar coil 2012 described later, specifically, the conductor 2011E of the first planar coil 2011 and a conductor 2012E of the second planar coil 2012 are preferably formed so as to be within a squire a side of which is 800 mm in size.

The line width (the line width of the conductor 2011E) of the first planar coil 2011, that is, the radial width (the width in the radial direction) of each turn portion 2011n is not particularly limited. In consideration that a power of 1 kW or more, preferably, 5 kW or more is made transmissive in the frequency band of the high-frequency current at, for example, 79 kHz to 90 kHz, the radial width of each turn portion 2011n may be 2 mm or more and 20 mm or less, or may be 2 mm or more and 16 mm or less, 2 mm or more and 12 mm or less, or 2 mm or more and 8 mm or less. The number of turns of the first planar coil 2011 may be 4 or more and 12 or less but is not particularly limited.

Also, the second planar coil 2012 has a spiral shape, and the second planar coil 2012 contains copper according to the present embodiment. Specifically, the second planar coil 2012 is composed of copper. The material of the second planar coil 2012 is not particularly limited, but examples may include a copper alloy, aluminum, and an aluminum alloy. Also, the second planar coil 2012 has a plate shape, and as illustrated in Fig. 52, a sectional shape of the second planar coil 2012 in a direction perpendicular to a direction in which the second planar coil 2012 turns in the spiral shape is a rectangular shape.

A reference sign C2" illustrated in Fig. 50 to Fig. 52 represents a second central axis of the second planar coil 2012 that passes through the center of the spiral shape of the second planar coil 2012. In the case where the axial direction of the second planar coil 2012 is mentioned below, the direction means a direction that extends along the second central axis C2" or a direction parallel with the second central axis C2". The radial direction of a circle that is drawn on a plane perpendicular to the second central axis C2" with a freely selected point on the second central axis C2" being centered is referred to as a radial direction of the second planar coil 2012. The second planar coil 2012 has a first surface 2012A and a second surface 2012B opposite each other in the axial direction. As for the second planar coil 2012, the second holding member 2030, the first magnetic shield member 2040, and the second magnetic shield member 2050 are stacked with respect to the first surface 2012A, and the second surface 2012B faces the first planar coil 2011 (the first surface 2011A).

According to the present embodiment, the second planar coil 2012 is disposed coaxially with the first planar coil 2011. That is, the first central axis C1" of the first planar coil 2011 and the second central axis C2" of the second planar coil 2012 match each other, in other words, are along the same line. However, the first planar coil 2011 and the second planar coil 2012 may overlap such that the first central axis C1" of the first planar coil 2011 and the second central axis C2" of the second planar coil 2012 are parallel with each other. That is, the first planar coil 2011 and the second planar coil 2012 may not be coaxial with each other.

The second planar coil 2012 includes the conductor 2012E that has a spiral shape formed by multiple turn portions 2012n. The multiple turn portions 2012n of the second planar coil 2012 are arranged in the direction perpendicular to the second central axis C2" of the spiral shape.

The names (such as a turn portion 20121) depending on positions and the connection form of the multiple turn portions 2012n are similar to those of the turn portions 2011n of the first planar coil 2011. According to the present embodiment, the number of turns of the first planar coil 2011 and the number of turns of the second planar coil 2012 are equal to each other, and the multiple turn portions 2012n include five turn portions 20121 to 20125. The turn portions 2012n turn so as to form a rectangular shape as in the turn portions 2011n. The turn portions 2012n may turn so as to form a polygonal shape other than a rectangular shape. For example, the turn portions 2012n may turn so as to form an octagonal shape, a regular octagonal shape, a dodecagonal shape, or a regular dodecagonal shape. The turn portions 2012n may turn so as to form a circular shape. The number of turns of the first planar coil 2011 and the number of turns of the second planar coil 2012 may differ from each other. For example, the turn portions 2012n may have a rectangular shape, and the turn portions 2011n may have a circular shape.

The inner end portion in the radial direction of the turn portion 20111 nearest to the first central axis C1" is electrically connected to the second planar coil 2012 as described above. Specifically, the inner end portion in the radial direction of the turn portion 20111 is connected to an inner end portion in the radial direction of the turn portion 20121 of the second planar coil 2012. With the first planar coil 2011 and the second planar coil 2012 connected to each other, a direction in which the first planar coil 2011 turns from an end portion (the outer end portion in the radial direction of the turn portion 20115) that is not connected to the second planar coil 2012 to an end portion that is connected to the second planar coil 2012 is the same as a direction in which the second planar coil 2012 turns from an end portion that is connected to the first planar coil 2011 to an end portion (an outer end portion in the radial direction of the turn portion 20125) that is not connected to the first planar coil 2011.

The outer end portion in the radial direction of the turn portion 20125 farthest from the second central axis C2" among the multiple turn portions 2012n is connected to the second connection terminal 2062. Directions that are represented by the phrase "inner and outer in the radial direction of the second planar coil 2012 (the turn portions 2012n)" are determined as in the case of the phrase "inner and outer in the radial direction of the first planar coil 2011" described above. A method of determining the position of the second central axis C2" is determined in the same manner as in the case of the first central axis C1". For example, the second planar coil 2012 according to the present embodiment is formed into the spiral shape by being punched from a copper plate. However, the second planar coil 2012 can be formed by etching copper foil into the spiral shape.

According to the present embodiment, for example, the thickness (the thickness of the conductor 2012E) of the second planar coil 2012 may be 0.1 mm or more and 1.0 mm or less. The radius (a distance to a portion farthest from the second central axis C2" in the radial direction) of the second planar coil 2012 may be 80 mm or more or may be 80 mm or more and 450 mm or less as in the case of the first planar coil 2011. The aspect ratio of the second planar coil 2012 (the conductor 2012E) a sectional shape of which is a rectangular shape may be 2 or more and 12 or less or may be 3 or more and 10 or less as in the case of the first planar coil 2011. The line width (the line width of the conductor 2012E) of the second planar coil 2012, that is, the radial width (the width in the radial direction) of each turn portion 2012n may be 2 mm or more and 20 mm or less, or may be 2 mm or more and 16 mm or less, 2 mm or more and 12 mm or less, or 2 mm or more and 8 mm or less. The number of turns of the second planar coil 2012 may be 4 or more and 12 or less but is not particularly limited.

As illustrated in Fig. 52, the first planar coil 2011 and the second planar coil 2012 overlap at an interval in the axial direction thereof. The interval may be 0.5 mm or more and 1.5 mm or less. The dimensions of the interval are not particularly limited, but when the interval is too small, an eddy current loss that is made at the first planar coil 2011 and the second planar coil 2012 when the electric current is applied tends to increase. When the interval is too large, a decrease in the thickness of the coil component 2010 is lessened. The interval between the first planar coil 2011 and the second planar coil 2012 is maintained by the second holding member 2030 that is interposed between the planar coils 2011 and 2012 as described later.

### (First Holding Member)

The first holding member 2020 overlaps the first planar coil 2011 so as to face the second surface 2011B of the first planar coil 2011 and holds the first planar coil 2011. For example, in the case where power is transmitted, the coil component 2010 causes the magnetic field that is generated at the first planar coil 2011 and the second planar coil 2012 to pass through the first holding member 2020. Accordingly, the first holding member 2020 preferably has no conductivity (insulation properties) and exerts no magnetism so as not to impede the magnetic field and so as not to generate an eddy current.

In consideration that non-conductivity (insulation properties) and non-magnetism are preferable, an example of the material of the first holding member 2020 is resin or may be fiber reinforced plastic. More specifically, the material of the first holding member 2020 may be glass fiber reinforced polyamide. However, the material of the first holding member 2020 is not particularly limited. For example, glass fibers may not be contained. Thermoplastic resin or thermosetting resin other than polyamide may be used. The insulation properties mean that the volume resistivity is 10¹⁰ Ω · m or more as described above. The non-magnetism means that magnetism is not exerted.

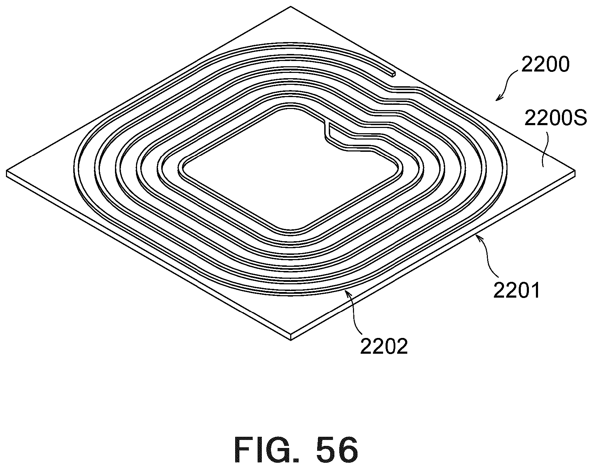

The first holding member 2020 is formed into a single body together with the first planar coil 2011 and consequently holds the first planar coil 2011. According to the present embodiment, the first planar coil 2011 and the first holding member 2020 are formed into a single body in a manner in which the first planar coil 2011 is disposed on a mold 2200 (see Fig. 56) for forming the first holding member, a material for forming the first holding member is subsequently pressed in the mold 2200 described above by thermal pressing and is molded, and this is cooled and solidified. In the present specification, the single body of the first holding member 2020 and the first planar coil 2011 is also referred to as a coil intermediate material 2010M.

According to the present embodiment, the first planar coil 2011 and the second planar coil 2012 are sandwiched between the first holding member 2020 and the second holding member 2030. The first holding member 2020 has a contact surface 2020S1 in contact with the second surface 2011B of the first planar coil 2011. The contact surface 2020S1 forms an inner surface of the first holding member 2020. The first holding member 2020 has an outer surface 2020S2 opposite the contact surface 202051.

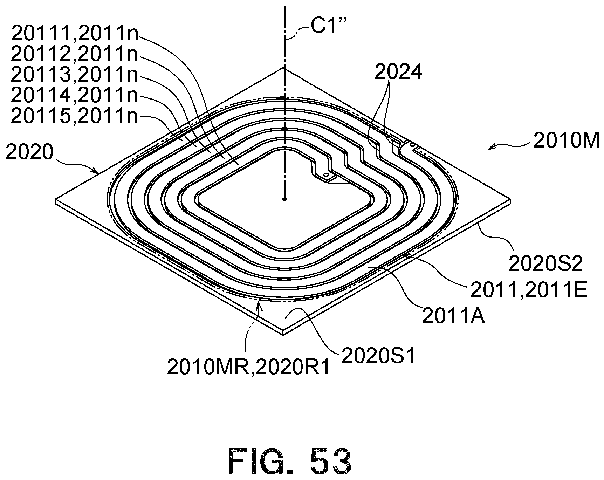

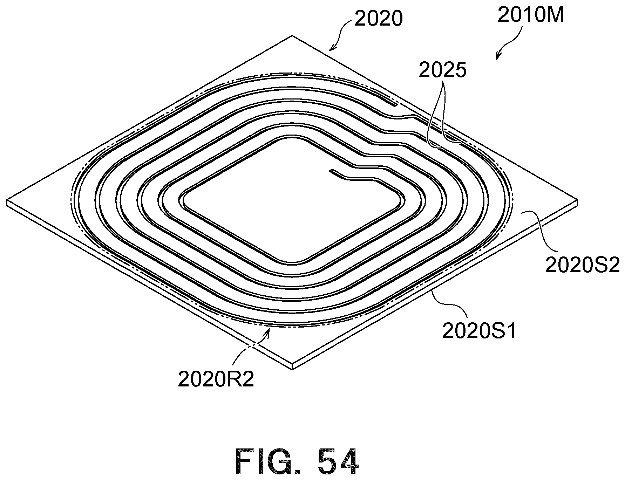

As illustrated in Fig. 52 and Fig. 53, first grooves 2024 that receive projecting portions 2032 of the second holding member 2030 described later are formed on the contact surface 2020S1. As illustrated in Fig. 52 and Fig. 54, second grooves 2025 are formed on the outer surface 2020S2. The first grooves 2024 and the second grooves 2025 will be described in detail later.

### (Second Holding Member)

As illustrated in Fig. 52, the second holding member 2030 according to the present embodiment is formed into a single body together with the first planar coil 2011, the second planar coil 2012, and the first holding member 2020 such that the first planar coil 2011 and the second planar coil 2012 are sandwiched between the second holding member 2030 and the first holding member 2020. A portion of the second holding member 2030 is interposed between the second planar coil 2012 and the first magnetic shield member 2040, and another portion is interposed also between the first planar coil 2011 and the second planar coil 2012 as described above.

Specifically, the second holding member 2030 includes a foundation portion 2031 that is interposed between the second planar coil 2012 and the first magnetic shield member 2040 and the projecting portions 2032 that project from the foundation portion 2031 toward the first holding member 2020. The foundation portion 2031 entirely covers the first surface 2012A of the second planar coil 2012. The foundation portion 2031 is sized so as to encompass the whole of the first planar coil 2011 and the second planar coil 2012 when viewed in the axial direction of the first planar coil 2011 and the second planar coil 2012. The foundation portion 2031 and the first holding member 2020 sandwich the first planar coil 2011 and the second planar coil 2012 therebetween.

The projecting portions 2032 extend between turn portions of the first planar coil 2011 adjacent to each other in the axial direction of the first planar coil 2011. Accordingly, the projecting portions 2032 are formed along the first planar coil 2011 that has a spiral shape. In an illustrated example, the projecting portions 2032 have a spiral shape that corresponds to the spiral shape of the first planar coil 2011. The projecting portions 2032 are received by the first grooves 2024 of the first holding member 2020 as described above. In other words, the projecting portions 2032 are filled in the first grooves 2024 of the first holding member 2020.

In the illustrated example, the second holding member 2030 further includes spacer portions 2033 that are disposed between the first planar coil 2011 and the second planar coil 2012. The spacer portions 2033 maintain the interval between the first planar coil 2011 and the second planar coil 2012. In other words, the second planar coil 2012 is embedded in the second holding member 2030. The spacer portions 2033 are portions of the second holding member 2030 that cover the second surface 2012B of the second planar coil 2012. The spacer portions 2033 are in contact with the first surface 2011A of the first planar coil 2011.

The second holding member 2030 exerts magnetism as a whole, that is, the foundation portion 2031, the projecting portions 2032, and the spacer portions 2033 exert magnetism. As for the second holding member 2030, the eddy current loss and the leaking magnetic flux are decreased due to magnetism, the coupling coefficient is increased, and consequently, the coil performance is improved. The relative permeability of the second holding member 2030 is preferably 2.0 or more or may be 2.0 or more and 10.0 or less. The relative permeability of the second holding member 2030 is more preferably 5.0 or more or may be 5.0 or more and 10.0 or less. The relative permeability of the second holding member 2030 is not particularly limited, but when the relative permeability is too high, the flexibility and strength of the second holding member 2030 are undesirably decreased in some cases. Accordingly, the relative permeability of the second holding member 2030 may be 200 or less.

The second holding member 2030 includes the projecting portions 2032 and can consequently effectively improve the coil performance. The height of each projecting portion 2032 (a distance between the top portion of each projecting portion 2032 and the second surface 2011B of the first planar coil 2011 in the axial direction of the first planar coil 2011) is not particularly limited but may be, for example, 0.5 mm or more or may be 1.0 mm or more. As the height of each projecting portion 2032 increases, the eddy current loss tends to be further decreased, and the coupling coefficient tends to increase. As the projecting portions 2032 become higher, the projecting portions 2032 tend to be broken from the root. In view of this, for example, the height of each projecting portion 2032 may be 10 mm or less.

For example, the second holding member 2030 according to the present embodiment contains multiple or innumerable magnetic material particles composed of a magnetic material and resin. The magnetic material particles are held by the resin that serves as a holding material.

The magnetic material particles may be composed of ferrite, particularly, ferrite of a soft magnetic material, a nanocrystal magnetic material, silicon steel, electromagnetic soft iron, or amorphous metal, or two or more kinds of these. The resin that serves as the holding material may be glass fiber reinforced polyamide. That is, the resin may be composed of a material that contains polyamide that is thermoplastic resin (a thermoplastic material) and glass fibers. However, the mold material of the second holding member 2030 is not particularly limited.

### (First Groove)

The first grooves 2024 of the first holding member 2020 receive the projecting portions 2032 of the second holding member 2030 as described above. As illustrated in Fig. 52, the projecting portions 2032 are formed in a region on the second holding member 2030 that overlaps a region 2010MR on the coil intermediate material 2010M that contains the first planar coil 2011 and the central axis C1" when viewed in the axial direction of the first planar coil 2011. For this reason, the first grooves 2024 are formed in a region 2020R1 on the contact surface 2020S1 that corresponds to the region 2010MR described above. In the illustrated example, the region 2010MR described above on the coil intermediate material 2010M and the region 2020R1 described above on the contact surface 2020S1 overlap when viewed in the axial direction of the first planar coil 2011.

In the illustrated example, the projecting portions 2032 are formed along the spiral shape of the first planar coil 2011. For this reason, the first grooves 2024 are formed along the spiral shape of the first planar coil 2011 (see Fig. 53). In the illustrated example, the projecting portions 2032 have a spiral shape that corresponds to the spiral shape of the first planar coil 2011. For this reason, the first grooves 2024 have a spiral shape that corresponds to the spiral shape of the first planar coil 2011.

### (Second Groove)

The second grooves 2025 are formed to inhibit the first holding member 2020 from warping. According to the knowledge obtained by the present inventor, the first holding member 2020 warps when the first holding member 2020 that is heated and molded in the mold 2200 described above is cooled and solidified. It is thought that the reason is that when the first holding member 2020 is cooled, the degree of contraction of the first holding member 2020 at the contact surface 2020S1 differs from that at the outer surface 2020S2. It is also thought that the degree of contraction of the first holding member 2020 at the contact surface 2020S1 differs from that at the outer surface 2020S2, because the amount of the material of which the first holding member 2020 is composed at the contact surface 2020S1 of the first holding member 2020 differs from that at the outer surface 2020S2. That is, the first grooves 2024 are formed on the contact surface 2020S1 of the first holding member 2020. For this reason, in the case where no grooves are formed on the outer surface 2020S2 of the first holding member 2020, the amount of the material described above at the contact surface 2020S1 of the first holding member 2020 is smaller than the amount of the material described above at the outer surface 2020S2 at least by the volumes of the first grooves 2024. Accordingly, according to the present embodiment, it is thought that the difference between the amount of the material described above at the contact surface 2020S1 and the amount of the material described above at the outer surface 2020S2 is decreased in a manner in which the second grooves 2025 are formed on the outer surface 2020S2 and that the first holding member 2020 can be inhibited from warping.

The second grooves 2025 are preferably formed in a region 2020R2 on the outer surface 2020S2 that corresponds to the region 2020R1 on the contact surface 2020S1 in which the first grooves 2024 are formed. This enables the difference between the degree of contraction of the first holding member 2020 in the region on the contact surface 2020S1 and the degree of contraction of the first holding member 2020 in the region on the outer surface 2020S2 that corresponds to the region to be decreased and enables the first holding member 2020 to be effectively inhibited from warping. In the illustrated example, the region 2020R1 described above on the contact surface 2020S1 and the region 2020R2 described above on the outer surface 2020S2 overlap when viewed in the axial direction of the first planar coil 2011 (see Fig. 52). That is, the second grooves 2025 are formed in the region 2020R2 on the outer surface 2020S2 that overlaps the region 2020R1 on the contact surface 2020S1 that contains the central axis C1" and the first grooves 2024 when viewed in the axial direction of the first planar coil 2011 (see Fig. 52 and Fig. 54).

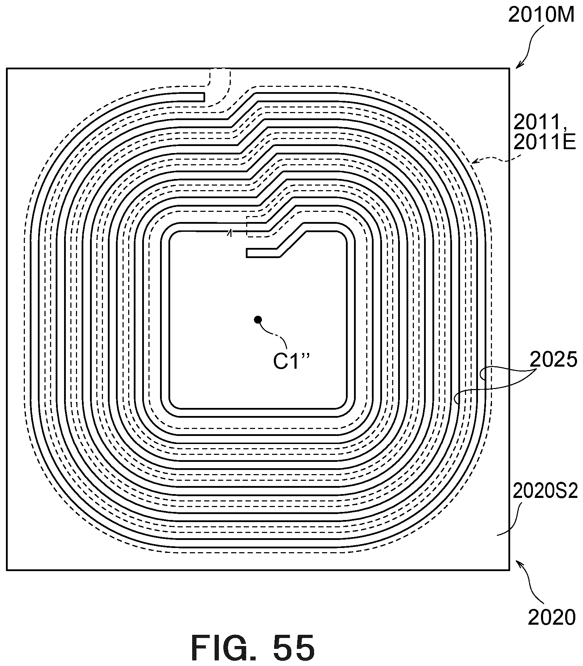

In the illustrated example, the second grooves 2025 are formed along the spiral shape of the first planar coil 2011 when viewed in the axial direction of the first planar coil 2011 (see Fig. 54 and Fig. 55). This enables the difference between the degree of contraction of the first holding member 2020 in the region on the contact surface 2020S1 and the degree of contraction of the first holding member 2020 in the region on the outer surface 2020S2 that corresponds to the region to be effectively decreased. In the illustrated example, the first grooves 2024 have a spiral shape that corresponds to the spiral shape of the first planar coil 2011, and accordingly, the second grooves 2025 have a spiral shape that corresponds to the spiral shape of the first planar coil 2011.

The width of each second groove 2025 is not particularly limited, but may be, for example, 0.2 times to 1.1 times the width of each first groove 2024. This enables the first holding member 2020 to be effectively inhibited from warping. In the illustrated example, the width of each second groove 2025 is substantially equal to the width of each first groove 2024. Specifically, the width of each second groove 2025 is 0.9 times to 1.1 times the width of each first groove 2024. This enables the first holding member 2020 to be effectively inhibited from warping.

The depth of each second groove 2025 is not particularly limited but may be, for example, 0.2 times to 1.1 times the depth of each first groove 2024. This enables the first holding member 2020 to be effectively inhibited from warping. In the illustrated example, the depth of each second groove 2025 is substantially equal to the depth of each first groove 2024. Specifically, the depth of each second groove 2025 is 0.9 times to 1.1 times the depth of each first groove 2024. Also this enables the first holding member 2020 to be more effectively inhibited from warping.

The volume of each second groove 2025 is not particularly limited but may be, for example, 0.2 times to 1.1 times the volume of each first groove 2024. This enables the first holding member 2020 to be effectively inhibited from warping. In the illustrated example, the volume of each second groove 2025 is substantially equal to the volume of each first groove 2024. Specifically, the volume of each second groove 2025 is 0.9 times to 1.1 times the volume of each first groove 2024. Also this enables the first holding member 2020 to be more effectively inhibited from warping.

In the illustrated example, the second grooves 2025 do not overlap the first grooves 2024 when viewed in the axial direction of the first planar coil 2011. This facilitates adjustments in the depths of the first grooves 2024 and the second grooves 2025 to the desired depths. In other words, the first grooves 2024 and the second grooves 2025 can be prevented from being in communication with each other, and through-holes can be prevented from being formed in the first holding member 2020. Alternatively, the possibility that distances between the bottom surfaces of the first grooves 2024 and the outer surface 2020S2, and/or distances between the bottom surfaces of the second grooves 2025 and the contact surface 2020S1 are too short and that the strength of the first holding member 2020 is less than the desired strength can be decreased.

In addition, forming the second grooves 2025 on the outer surface 2020S2 of the first holding member 2020 enables the heat dissipation performance of the coil component 2010 to be improved.

### (First Magnetic Shield Member)

The first magnetic shield member 2040 is provided to decrease the magnetic permeability and/or the leaking magnetic field. The first magnetic shield member 2040 is a sheet member that differs from the first planar coil 2011, the second planar coil 2012, the first holding member 2020, and the second holding member 2030. The first magnetic shield member 2040 that differs from the first planar coil 2011, the second planar coil 2012, the first holding member 2020, and the second holding member 2030 means the first magnetic shield member 2040 that is not formed into a single body together with the first planar coil 2011, the second planar coil 2012, the first holding member 2020, and the second holding member 2030. However, the first magnetic shield member 2040 and the second holding member 2030 may be joined to each other with an adhesive layer, for example, interposed therebetween. The first magnetic shield member 2040 is sized so as to encompass the first planar coil 2011, the second planar coil 2012, and the second holding member 2030 in plan view. The first magnetic shield member 2040 overlaps the first planar coil 2011, the second planar coil 2012, and the second holding member 2030 and is in direct contact with the second holding member 2030.

The first magnetic shield member 2040 according to the present embodiment exerts magnetism and contains a magnetic material or is composed of a magnetic material. As for the coil component 2010, a magnetic field is generated when the electric current is applied to the first planar coil 2011 and the second planar coil 2012. The magnetic field that is generated at the coil component 2010 spreads in all directions with respect to the central axes C1" and C2" of the first planar coil 2011 and the second planar coil 2012. At this time, the first magnetic shield member 2040 that exerts magnetism can direct lines of magnetic flux that tend to spread toward the central axes C1" and C2". The coil component 2010 can be installed on a vehicle, and at this time, if the magnetic field that is generated at the coil component 2010 extends through another vehicle component, the vehicle component is adversely affected in some cases. In these cases, the first magnetic shield member 2040 can decrease the leaking magnetic field that does not contribute to the generation of the electric current.

The first magnetic shield member 2040 preferably contains a soft magnetic material or a nanocrystal magnetic material. More specifically, the first magnetic shield member 2040 contains ferrite or preferably contains soft ferrite.

The relative permeability of the first magnetic shield member 2040 may be 500 or more or may be 1000 or more. The relative permeability of the first magnetic shield member 2040 may be 500 or more and 3000 or less or may be 1000 or more and 3000 or less. The relative permeability according to the present specification has a value that is measured at a frequency of 85 kHz and an environmental temperature of 23 degrees as described above.

### (Second Magnetic Shield Member)

The second magnetic shield member 2050 is provided so as to cover the first magnetic shield member 2040. The second magnetic shield member 2050 according to the present embodiment is in contact with the first magnetic shield member 2040, but alternatively, the second magnetic shield member 2050 may be in contact with the first magnetic shield member 2040 with a spacer interposed therebetween. The second magnetic shield member 2050 is composed of a metal material and is conductive. Specifically, according to the present embodiment, the second magnetic shield member 2050 is composed of aluminum. In this case, magnetism is inhibited from leaking from the first planar coil 2011 and the second planar coil 2012 via the second magnetic shield member 2050. The second magnetic shield member 2050 may be composed of, for example, an aluminum alloy, copper, or stainless steel.

### (Connection Terminal)

As illustrated in Fig. 50 and Fig. 51, the first connection terminal 2061 is connected to the outer end portion in the radial direction of the turn portion 20115 of the first planar coil 2011. The second connection terminal 2062 is connected to the outer end portion in the radial direction of the turn portion 20125 of the second planar coil 2012. The first connection terminal 2061 and the second connection terminal 2062 can be used for, for example, connection to the high-frequency current applying unit 1A or the converter 2A. The first connection terminal 2061 and the turn portion 20115 may be connected to each other by ultrasonic joining, and the second connection terminal 2062 and the turn portion 20125 may be connected to each other by ultrasonic joining. However, a connection method is not limited but may be, for example, connection with a conductive adhesive.

### <Method of Manufacturing Coil Component 2010>

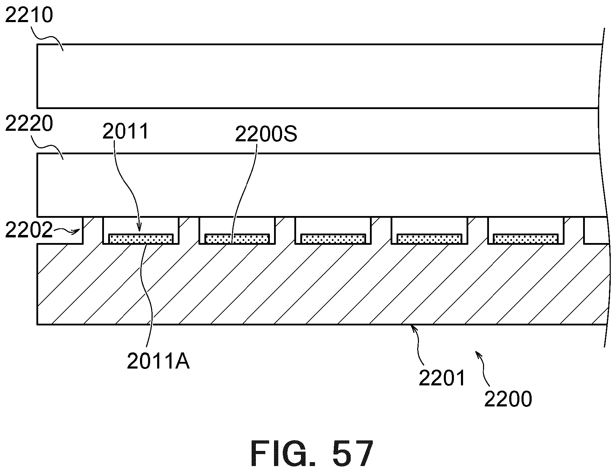

An example of a method of manufacturing the coil component 2010 will now be described. Fig. 56 is a perspective view of the mold 2200 for manufacturing the coil component 2010. Fig. 57 is a sectional view with the first planar coil 2011 and a mold material 2220 described later being disposed in or on the mold 2200 illustrated in Fig. 56.

The mold 2200 illustrated in Fig. 56 is first prepared, and as illustrated in Fig. 57, the first planar coil 2011 is disposed in the mold 2200. The mold 2200 has unevenness that corresponds to the unevenness of the contact surface 2020S1 of the first holding member 2020. Specifically, the mold 2200 includes a body portion 2201 that has a plate shape and that has a flat installation surface 2200S on which the first planar coil 2011 is placed. Protuberances 2202 that project from the installation surface 2200S and that extend in a spiral shape are formed on the body portion 2201. The protuberances 2202 are portions at which the first grooves 2024 of the first holding member 2020 are formed. The first planar coil 2011 is installed in a spiral region on the installation surface 2200S that extends along the protuberances 2202 that have the spiral shape. The protuberances 2202 are located between turn portions of the first planar coil 2011 adjacent to each other when viewed in the axial direction of the first planar coil 2011.

The material 2220 for manufacturing the first holding member 2020 illustrated in Fig. 54 and Fig. 55 is prepared. In an illustrated example, the material 2220 is a mold material that is molded in a plate shape as a whole. The second grooves 2025 are formed on a surface of the mold material 2220. Subsequently, as illustrated in Fig. 57, the mold material 2220 is placed on the mold 2200 and the first planar coil 2011. At this time, the mold material 2220 is placed on the mold 2200 and the first planar coil 2011 such that another surface (a surface opposite the surface on which the second grooves 2025 are formed) of the mold material 2220 faces the mold 2200 and the first planar coil 2011. Subsequently, the first planar coil 2011 and the mold material 2220 are thermally pressed between the mold 2200 and another mold 2210.

The mold material 2220 is softened and melted due to thermal pressing. Consequently, grooves that correspond to the protuberances 2202 of the mold 2200 are formed on the other surface of the mold material 2220. In this way, the first holding member 2020 that has the first grooves 2024 is formed. The first grooves 2024 are formed between turn portions of the first planar coil 2011 adjacent to each other when viewed in the axial direction of the first planar coil 2011. The first holding member 2020 is cooled and solidified, and consequently, the first holding member 2020 and the first planar coil 2011 are formed into a single body. In this way, the coil intermediate material 2010M illustrated in Fig. 53 is manufactured.

Subsequently, for example, the second planar coil 2012 and the second holding member 2030 are formed into a single body together with the coil intermediate material 2010M, and the coil component 2010 is manufactured. According to the present embodiment, the mold material 2220 is melted between the molds 2200 and 2210 due to thermal pressing, and the coil intermediate material 2010M that is the single body of the first planar coil 2011 and the first holding member 2020 is formed. However, the manufacturing method is an example. For example, the coil intermediate material 2010M may be formed in a manner in which the mold material is injected between the molds 2200 and 2210. When the mold material of the first holding member 2020 is thermally pressed by using the mold 2210, the second grooves 2025 may be formed on the first holding member 2020 by using the mold 2210.

### <Use of Coil Component>

The coil component 2010 according to the present embodiment can be used as the power transmission coil of the power transmitter 1 of the wireless power transmission system S described above and can be used as the power reception coil of the power receiver 2.

In the case where the coil component 2010 is used as the power transmission coil, the first connection terminal 2061 and the second connection terminal 2062 are connected to the high-frequency current applying unit 1A illustrated in Fig. 1 or an alternating-current power source. After the high-frequency current is applied to the coil component 2010, the electric current flows from the first connection terminal 2061 to the first planar coil 2011 and the second planar coil 2012 and can subsequently flow from the second connection terminal 2062 to the high-frequency current applying unit 1A or the alternating-current power source. The electric current flows from the second connection terminal 2062 to the second planar coil 2012 and the first planar coil 2011 and can subsequently flow from the first connection terminal 2061 to the high-frequency current applying unit 1A or the alternating-current power source. This enables a magnetic field that includes a line of magnetic force parallel with the central axis of each planar coil to be generated.

In the case where the coil component 2010 is used as the power reception coil, the magnetic field that includes the line of magnetic force is received or is generated so as to pass inside the first planar coil 2011 and the second planar coil 2012, and consequently, the high-frequency current can be generated at the first planar coil 2011 and the second planar coil 2012. The high-frequency current can be applied from the first connection terminal 2061 or the second connection terminal 2062 to an external device.

The coil component 2010 can be used for a transformer or an antenna. For example, in the case where the coil component 2010 functions as a primary coil of the transformer, the first connection terminal 2061 and the second connection terminal 2062 are connected to the alternating-current power source. The supply of the high-frequency current enables magnetic flux to be applied from the center of each planar coil to an iron core.

### <Modification>

An embodiment described above can be modified in various ways. For example, the coil component 2010 includes the two planar coils 2011 and 2012 but is not limited thereto. The number of the planar coils that are included in the coil component 2010 may be 1 or may be 3 or more.

The coil component 2010 includes the planar coils 2011 and 2012 that have a plate shape where a sectional shape in a direction in which the planar coils 2011 and 2012 turn in a spiral shape is a rectangular shape but is not limited thereto. The planar coils 2011 and 2012 may not have a plate shape. The coil component 2010 may include a planar coil composed of Litz wire. The Litz wire is composed of multiple conductive wires that are twisted together. In this case, a sectional shape of each planar coil in the direction in which the planar coil turns in the spiral shape may be a circular shape.

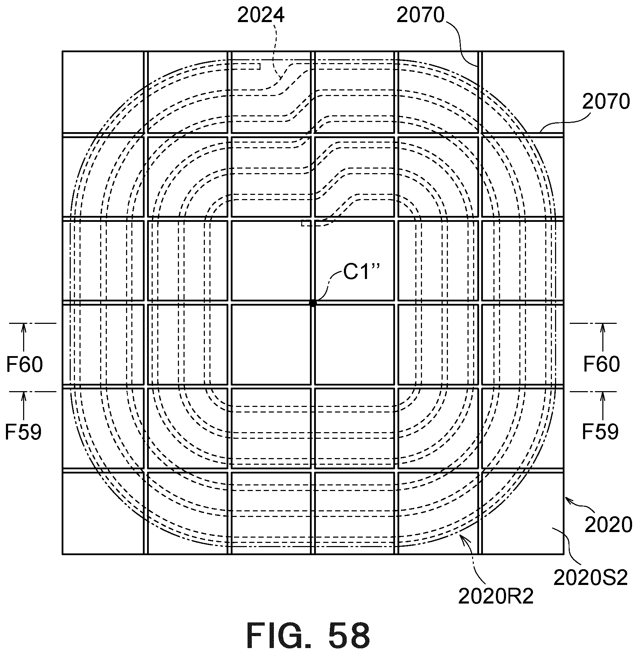

According to an embodiment described above, the second grooves 2025 are formed on the outer surface 2020S2 of the first holding member 2020, and consequently, the first holding member 2020 is inhibited from warping, but this is not a limitation. For example, as illustrated in Fig. 58 to Fig. 60, the first holding member 2020 may be inhibited from warping in a manner in which at least one rib 2070 is formed on the outer surface 2020S2. The rib 2070 is formed on the outer surface 2020S2, the rigidity of the outer surface 2020S2 of the first holding member 2020 consequently increases, and the first holding member 2020 can be inhibited from warping.

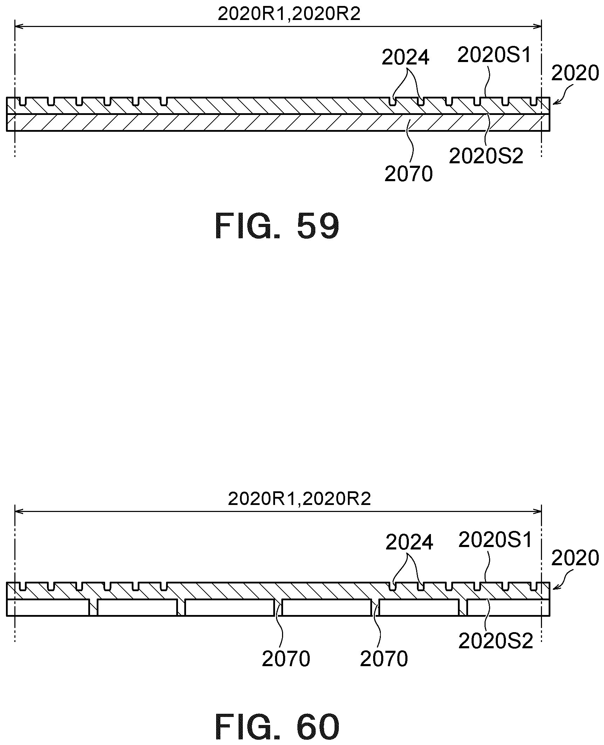

In an illustrated example, ribs 2070 are formed in the region 2020R2 on the outer surface 2020S2 that overlaps the region 2020R1 on the contact surface 2020S1 that contains the central axis C1" of the first planar coil 2011 and the first grooves 2024 when viewed in the axial direction (see Fig. 59 and Fig. 60). This enables the rigidity of the outer surface 2020S2 of the first holding member 2020 to be increased at a portion at which the first holding member 2020 is likely to warp and enables the first holding member 2020 to be effectively inhibited from warping.

In the illustrated example, the multiple ribs 2070 that extend in directions in which these intersect with each other are formed on the outer surface 2020S2. This enables the first holding member 2020 to be inhibited from warping in multiple directions.

In the illustrated example, the multiple ribs 2070 are formed in a lattice shape on the outer surface 2020S2 when viewed in the axial direction of the first planar coil 2011. This enables the first holding member 2020 to be effectively inhibited from warping in multiple directions.

The ribs 2070 are formed on the outer surface 2020S2 of the first holding member 2020, and consequently, the heat dissipation performance of the coil component 2010 can be improved.

The coil component 2010 according to an embodiment described above includes the planar coil 2011, the first holding member 2020, and the second holding member 2030. The planar coil 2011 has a spiral shape and has the first surface 2011A and the second surface 2011B opposite each other in the axial direction that extends along the central axis C1" of the spiral shape. The first holding member 2020 overlaps the planar coil 2011 so as to face the second surface 2011B of the planar coil 2011 and holds the planar coil 2011. The second holding member 2030 is formed into a single body together with the planar coil 2011 and the first holding member 2020 such that the planar coil 2011 is sandwiched between the second holding member 2030 and the first holding member 2020. The planar coil 2011 includes the multiple turn portions 2011n that are arranged in the radial direction of the planar coil 2011. The second holding member 2030 includes the projecting portions 2032 that extend in the axial direction described above between turn portions of the planar coil 2011 adjacent to each other. The first holding member 2020 has the contact surface 2020S1 in contact with the second surface 2011B and the outer surface 2020S2 opposite the contact surface 2020S1. The first grooves 2024 that receive the projecting portions 2032 are formed on the contact surface 2020S1. The second grooves 2025 are formed on the outer surface 2020S2. The second grooves 2025 are formed in the region 2020R2 on the outer surface 2020S2 that overlaps the region 2020R1 on the contact surface 2020S1 that contains the central axis C1" and the first grooves 2024 when viewed in the axial direction described above. The coil component 2010 enables the difference between the degree of contraction of the first holding member 2020 in the region on the contact surface 2020S1 and the degree of contraction of the first holding member 2020 in the region on the outer surface 2020S2 that corresponds to the region to be decreased and enables the first holding member 2020 to be effectively inhibited from warping.

According to an embodiment described above, the second grooves 2025 are formed along the spiral shape of the first planar coil 2011 when viewed in the axial direction described above. Consequently, the difference between the degree of contraction of the first holding member 2020 in the region on the contact surface 2020S1 and the degree of contraction of the first holding member 2020 in the region on the outer surface 2020S2 that corresponds to the region can be effectively decreased.

According to an embodiment described above, the width of each second groove 2025 is 0.2 times to 1.1 times the width of each first groove 2024. This enables the first holding member 2020 to be effectively inhibited from warping.

According to an embodiment described above, the depth of each second groove 2025 is 0.2 times to 1.1 times the depth of each first groove 2024. This enables the first holding member 2020 to be effectively inhibited from warping.

According to an embodiment described above, the total volume of the second grooves 2025 is 0.2 times to 1.1 times the total volume of the first grooves 2024. This enables the first holding member 2020 to be effectively inhibited from warping.

According to an embodiment described above, the second grooves 2025 do not overlap the first grooves 2024 when viewed in the axial direction described above. This facilitates adjustments in the depths of the first grooves 2024 and the second grooves 2025 to the desired depths.

The coil component 2010 according to a modification described above includes the planar coil 2011, the first holding member 2020, and the second holding member 2030. The planar coil 2011 has a spiral shape and has the first surface 2011A and the second surface 2011B opposite each other in the axial direction that extends along the central axis C1" of the spiral shape. The first holding member 2020 overlaps the planar coil 2011 so as to face the second surface 2011B and holds the planar coil 2011. The second holding member 2030 is formed into a single body together with the planar coil 2011 and the first holding member 2020 such that the planar coil 2011 is sandwiched between the second holding member 2030 and the first holding member 2020. The planar coil 2011 includes the multiple turn portions 2011n that are arranged in the radial direction of the planar coil 2011. The second holding member 2030 includes the projecting portions 2032 that extend in the axial direction described above between turn portions of the planar coil 2011 adjacent to each other. The first holding member 2020 has the contact surface 2020S1 in contact with the second surface 2011B and the outer surface 2020S2 opposite the contact surface 2020S1. The first grooves 2024 that receive the projecting portions 2032 are formed on the contact surface 2020S1. At least one rib 2070 is formed on the outer surface 2020S2. The at least one rib 2070 is formed in the region 2020R2 on the outer surface 2020S2 that overlaps the region 2020R1 on the contact surface 2020S1 that contains the central axis C1" and the first grooves 2024 when viewed in the axial direction described above. As for the coil component 2010, the rigidity of the outer surface 2020S2 of the first holding member 2020 can be increased at the portion at which the first holding member 2020 is likely to warp, and the first holding member 2020 can be effectively inhibited from warping.

According to the modification described above, the at least one rib 2070 includes the multiple ribs 2070 that extend in the directions in which these intersect with each other. This enables the first holding member 2020 to be inhibited from warping in multiple directions.

According to the modification described above, the at least one rib 2070 includes the multiple ribs 2070, and the multiple ribs 2070 are formed in a lattice shape when viewed in the axial direction described above. This enables the first holding member 2020 to be effectively inhibited from warping in multiple directions.

According to an embodiment described above and the modification, the first holding member 2020 exerts no magnetism and has insulation properties.

According to an embodiment described above and the modification, the second holding member 2030 exerts magnetism.

According to an embodiment described above and the modification, the planar coil 2011 has a plate shape.

According to the modification described above, the planar coil 2011 is composed of Litz wire.

The coil intermediate material 2010M according to an embodiment described above includes the planar coil 2011 and the first holding member 2020. The planar coil 2011 has a spiral shape and has the first surface 2011A and the second surface 2011B opposite each other in the axial direction that extends along the central axis C1" of the spiral shape. The first holding member 2020 overlaps the planar coil 2011 so as to face the second surface 2011B and holds the planar coil 2011. The planar coil 2011 includes the multiple turn portions 2011n that are arranged in the radial direction of the planar coil 2011. The first holding member 2020 has the contact surface 2020S1 in contact with the second surface 2011B and the outer surface 2020S2 opposite the contact surface 2020S1. The first grooves 2024 are formed on the contact surface 2020S1. The second grooves 2025 are formed on the outer surface 2020S2. The first grooves 2024 are formed along the spiral shape of the planar coil 2011 between turn portions of the planar coil 2011 adjacent to each other when viewed in the axial direction described above. The second grooves 2025 are formed in the region 2020R2 on the outer surface 2020S2 that overlaps the region 2020R1 on the contact surface 2020S1 that contains the central axis C1" and the first grooves 2024 when viewed in the axial direction described above. The coil intermediate material 2010M enables the difference between the degree of contraction of the first holding member 2020 in the region on the contact surface 2020S1 and the degree of contraction of the first holding member 2020 in the region on the outer surface 2020S2 that corresponds to the region to be decreased and enables the first holding member 2020 to be effectively inhibited from warping.

According to the modification described above, the second grooves 2025 are formed along the spiral shape of the planar coil 2011 when viewed in the axial direction described above. This enables the difference between the degree of contraction of the first holding member 2020 in the region on the contact surface 2020S1 and the degree of contraction of the first holding member 2020 in the region on the outer surface 2020S2 that corresponds to the region to be effectively decreased.

The coil intermediate material 2010M according to the modification described above includes the planar coil 2011 and the first holding member 2020. The planar coil 2011 has a spiral shape and has the first surface 2011A and the second surface 2011B opposite each other in the axial direction that extends along the central axis C1" of the spiral shape. The first holding member 2020 overlaps the planar coil 2011 so as to face the second surface 2011B and holds the planar coil 2011. The planar coil 2011 includes the multiple turn portions 2011n that are arranged in the radial direction of the planar coil. The first holding member 2020 has the contact surface 2020S1 in contact with the second surface 2011B and the outer surface 2020S2 opposite the contact surface 2020S1. The first grooves 2024 are formed on the contact surface 2020S1. The at least one rib 2070 is formed on the outer surface 2020S2. The first grooves 2024 are formed along the spiral shape of the planar coil 2011 between turn portions of the planar coil 2011 adjacent to each other when viewed in the axial direction described above. The at least one rib 2070 is formed in the region 2020R2 on the outer surface 2020S2 that overlaps the region 2020R1 on the contact surface 2020S1 that contains the central axis C1" and the first grooves 2024 when viewed in the axial direction described above. The coil intermediate material 2010M enables the rigidity of the outer surface 2020S2 of the first holding member 2020 to be increased at the portion at which the first holding member 2020 is likely to warp and enables the first holding member 2020 to be effectively inhibited from warping.

According to the modification described above, the at least one rib 2070 includes the multiple ribs 2070 that extend in the directions in which these intersect with each other. This enables the first holding member 2020 to be inhibited from warping in multiple directions.

The power transmitter 1 and/or the power receiver 2 according to an embodiment described above and a modification thereto includes the coil component 2010 described above.

The power transmission system S according to an embodiment described above and a modification thereto includes the power transmitter 1 and the power receiver 2. At least the power transmitter 1 or the power receiver 2 includes the coil component 2010 described above.

The modifications to the embodiments described above are described above, and naturally, multiple modifications can be appropriately combined and used.

### <<<Embodiments of Fourth Disclosure>>>

Embodiments of the fourth disclosure will now be described with reference to the drawings.

### <Coil Component>

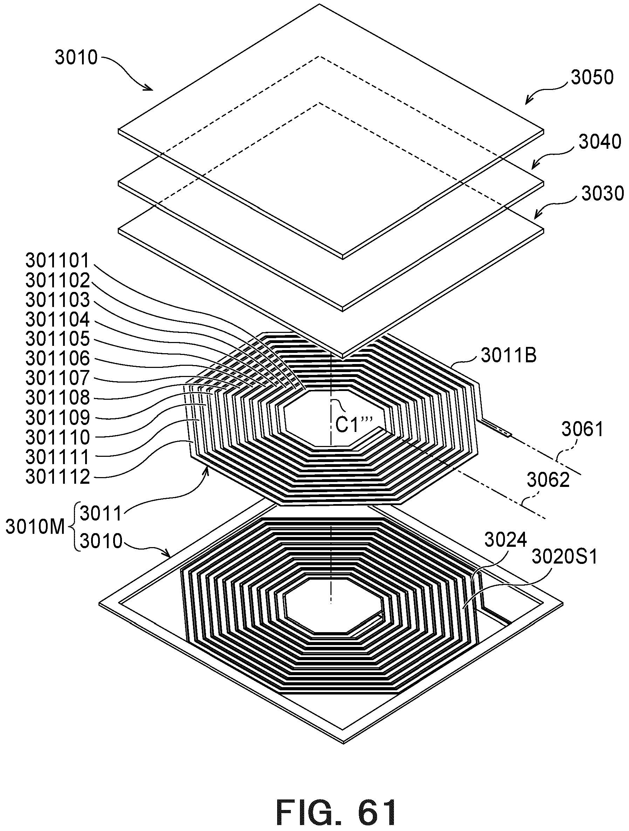

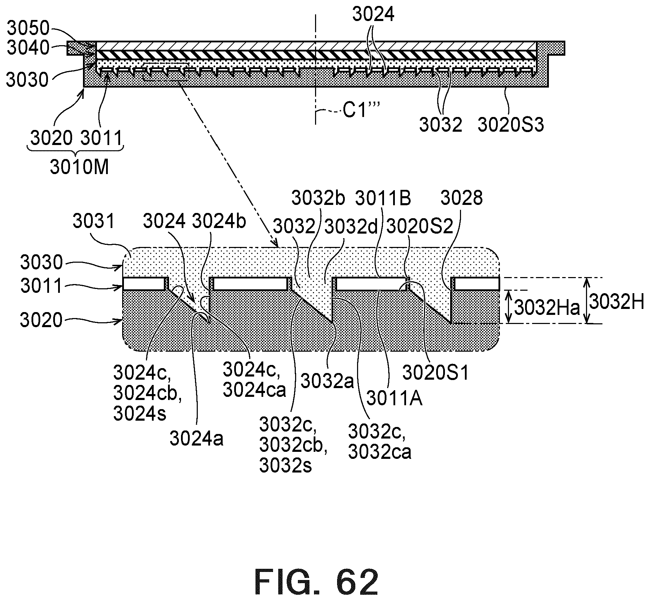

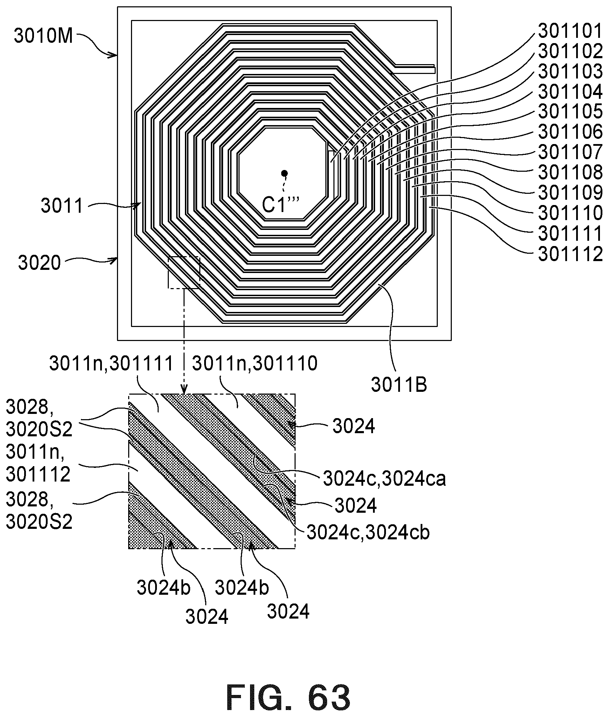

The coil component 3010 according to an embodiment will now be described. Fig. 61 is an exploded perspective view of the coil component 3010. Fig. 62 is a sectional view of the coil component 3010 taken along the central axis C‴ of a planar coil 3011 described later. Fig. 63 is a plan view of a coil intermediate material 3010M described later. Hatching illustrated in an enlarged view of a portion in Fig. 63 makes the coil intermediate material 3010M easy to be recognized but does not represent a section of a component of the coil intermediate material 3010M.

As illustrated in Fig. 61 and Fig. 62, the coil component 3010 includes the planar coil 3011, a first holding member 3020, and a second holding member 3030. In an illustrated example, the coil component 3010 further includes a first magnetic shield member 3040, a second magnetic shield member 3050, a first connection terminal 3061, and a second connection terminal 3062. The first holding member 3020, the planar coil 3011, the second holding member 3030, the first magnetic shield member 3040, and the second magnetic shield member 3050 overlap in this order. In Fig. 61, the first connection terminal 3061 and the second connection terminal 3062 are simply illustrated by using two-dot chain lines. The planar coil 3011 and the first holding member 3020 form the coil intermediate material 3010M illustrated in Fig. 63 as described later. Components of the coil component 3010 will now be described in detail.

### (Planar Coil)

The planar coil 3011 has a spiral shape and is composed of a conductive material. According to the present embodiment, the planar coil 3011 contains copper. Specifically, the planar coil 3011 is composed of copper. However, the planar coil 3011 may be composed of, for example, a copper alloy, aluminum, and an aluminum alloy.

As illustrated in Fig. 61, the planar coil 3011 has a plate shape, and as illustrated in Fig. 62, a sectional shape of the planar coil 3011 in a direction perpendicular to a direction in which the planar coil 3011 turns in the spiral shape, in other words, a direction in which the spiral shape extends is a rectangular shape.

A reference sign C‴ illustrated in Fig. 61 to Fig. 63 represents a central axis (also referred to below as a coil central axis C‴) that passes through the center of the spiral shape of the planar coil 3011. The axial direction (also referred to below as the "coil axial direction") of the planar coil 3011 described below means a direction that extends along the coil central axis C‴ or a direction parallel with the coil central axis C‴. The radial direction (also referred to below as the "coil radial direction") of the planar coil 3011 means the radial direction of a circle that is drawn on a plane perpendicular to the coil central axis C‴ with a freely selected point on the coil central axis C‴ being centered. The planar coil 3011 has a first surface 3011A and a second surface 3011B. The first surface 3011A faces the first holding member 3020. The second surface 3011B is opposite the first surface 3011A and faces the second holding member 3030.

As illustrated in Fig. 61, the planar coil 3011 includes a conductor 3011E that has a spiral shape formed by multiple turn portions 3011n. The multiple turn portions 3011n of the planar coil 3011 are arranged in a direction perpendicular to the coil central axis C"'. Specifically, the multiple turn portions 3011n are connected so as to be increasingly far away from the coil central axis C‴ outward in the coil radial direction from the coil central axis C"'. Consequently, the spiral shape is formed.

The turn portions 3011n are basically formed so as to turn 360 degrees around the coil central axis C‴ such that linear conductive portions do not form an annular shape. In the case of a so-called planar coil, both end portions of each the turn portion 3011n are shifted in the coil radial direction. As for the multiple turn portions 3011n, an outer end portion in the coil radial direction of one of the turn portions 3011n is connected to an inner end portion in the coil radial direction of another turn portion 3011n, and the other turn portion 3011n extends so as to be far away from the coil central axis C‴.

In some cases below, one nearest to the coil central axis C‴ among the multiple turn portions 3011n is referred to as a turn portion 301101. In some cases, a turn portion that is connected to the turn portion 301101 is referred to as a turn portion 301102. According to the present embodiment, the multiple turn portions 3011n include twelve turn portions 301101 to 301112. In the following description for common matters among the multiple turn portions 3011n, these are basically referred to as the turn portions 3011n.

According to the present embodiment, the turn portions 3011n turn so as to form an octagonal shape. More specifically, the turn portions 3011n turn so as to form a regular octagonal shape. However, the turn portions 3011n may turn so as to form a polygonal shape other than an octagonal shape. For example, the turn portions 3011n may turn so as to form a dodecagonal shape or a regular dodecagonal shape. The turn portions 3011n may turn so as to form a circular shape. The spiral shape described in the present specification and the present disclosure means a shape of a planar curve that is helically wound as described above. The planar curve described herein includes a planar pattern that repeatedly turns while curving as in a polyline as illustrated. In other words, the spiral shape means a shape of a planar curve that turns such that a distance from the center increases (or turns such that the distance from the center decreases).

An inner end portion (an end portion near the coil central axis C‴) in the coil radial direction of the turn portion 301101 nearest to the coil central axis C‴ is electrically connected to the second connection terminal 3062. An outer end portion (an end portion that is distal from the coil central axis C"') in the coil radial direction of the turn portion 301112 farthest from the coil central axis C‴ among the multiple turn portions 3011n is connected to the first connection terminal 3061.

The phrase "inner in the radial direction (the coil radial direction) of the planar coil 3011 (the turn portions 3011n)" described herein means a radial direction toward the coil central axis C"'. The phrase "outer in the radial direction (the coil radial direction) of the planar coil 3011 (the turn portions 3011n)" described herein means a radial direction away from the coil central axis C"'. According to the present embodiment, the coil central axis C‴ is determined as follows. Linear imaginary turn portions each of which has a shape similar to that of the turn portion 301102 are sequentially drawn from an inner end portion in the coil radial direction of the turn portion 301102 adjacent to the innermost turn portion 301101 so as to form a spiral shape inward in the radial direction. Drawing continues until an imaginary turn portion can be drawn within a diameter of 1 cm. A line that passes through an inner region in the coil radial direction of the imaginary turn portion that is drawn within a diameter of 1 cm in a direction perpendicular to the radial direction and to the circumferential direction of the spiral shape is determined as the coil central axis C‴.

For example, the planar coil 3011 described above is formed into the spiral shape by being punched from a metal plate such as a copper plate or an aluminum plate. The planar coil 3011 can be formed by etching metal foil such as copper foil or aluminum foil into the spiral shape.

For example, the thickness (the thickness of the conductor 3011E) of the planar coil 3011 may be 0.1 mm or more and 1.0 mm or less. The radius (a distance to a portion farthest from the coil central axis C‴ in the radial direction) of the planar coil 3011 may be 80 mm or more or may be 80 mm or more and 450 mm or less. The aspect ratio of the planar coil 3011 (the conductor 3011E) a sectional shape of which is a rectangular shape is determined by dividing the line width (the width in the radial direction of each turn portion 3011n) of the planar coil 3011 (the conductor 3011E) by the thickness of the planar coil 3011 (the conductor 3011E). The aspect ratio of the planar coil 3011 (the conductor 3011E) may be 2 or more and 12 or less or may be 3 or more and 10 or less.

In the case where power is transmitted to the electric vehicle by using the magnetic resonance method, a power of 1 kW or more, preferably, 5 kW or more can be preferably transmissive in the frequency band of the high-frequency current at 10 kHz to 200 kHz, particularly, at 75 kHz or more and 100 kHz or less, or at 79 kHz to 90 kHz. In this case, the thickness of the planar coil 3011 composed of copper is preferably 0.2 mm or more. In this perspective, the lower limit of the thickness of the planar coil 3011 may be set at 0.2 mm. In the case where power is transmitted to the electric vehicle, an excessive size is not preferable, and restriction on size is imposed in some cases. In this perspective, the planar coil 3011 (the conductor 3011E) is preferably formed so as to be within a squire a side of which is 800 mm in size.

The line width (the line width of the conductor 3011E) of the planar coil 3011, that is, the coil radial width (the width in the coil radial direction) of each turn portion 3011n is not particularly limited. In consideration that a power of 1 kW or more, preferably, 5 kW or more is made transmissive in the frequency band of the high-frequency current at, for example, 79 kHz to 90 kHz, the coil radial width of each turn portion 3011n may be 2 mm or more and 20 mm or less, or may be 2 mm or more and 16 mm or less, 2 mm or more and 12 mm or less, or 2 mm or more and 8 mm or less. The number of turns of the planar coil 3011 is not particularly limited but may be 11 or less or may be 13 or more.

### (First Holding Member)

The first holding member 3020 overlaps the planar coil 3011 so as to face the first surface 3011A of the planar coil 3011 and holds the planar coil 3011. For example, in the case where power is transmitted, the coil component 3010 causes the magnetic field that is generated at the planar coil 3011 to pass through the first holding member 3020. Accordingly, the first holding member 3020 preferably has no conductivity (insulation properties) and exerts no magnetism so as not to impede the magnetic field and so as not to generate an eddy current.

In consideration that non-conductivity (insulation properties) and non-magnetism are preferable, an example of the material of the first holding member 3020 is resin or may be fiber reinforced plastic. More specifically, the material of the first holding member 3020 may be glass fiber reinforced polyamide. However, the material of the first holding member 3020 is not particularly limited. For example, glass fibers may not be contained. Thermoplastic resin or thermosetting resin other than polyamide may be used. The insulation properties mean that the volume resistivity is 10¹⁰ Ω · m or more as described above. The non-magnetism means that magnetism is not exerted.

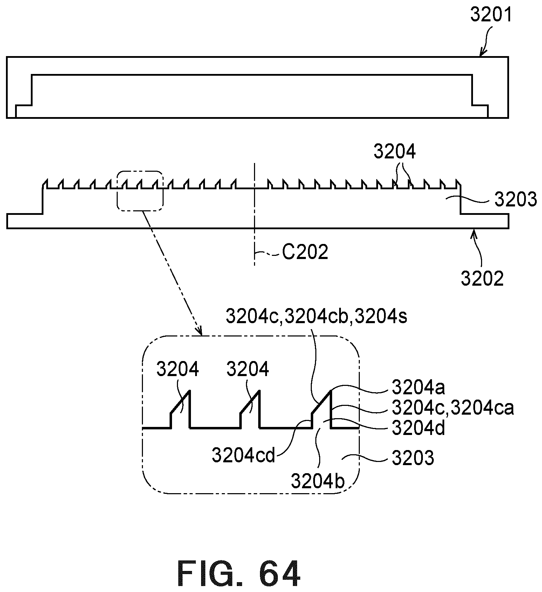

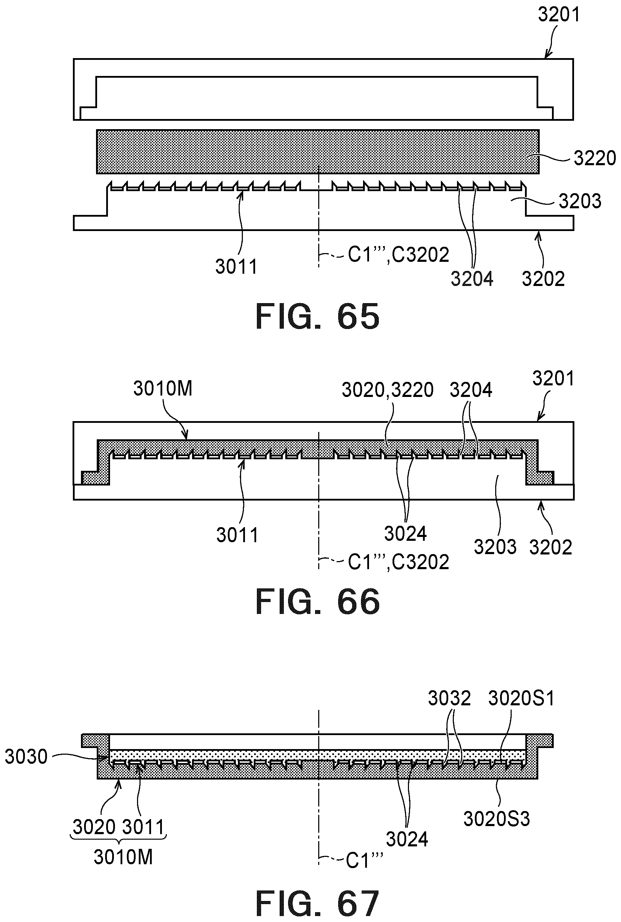

The first holding member 3020 is formed into a single body together with the planar coil 3011 and consequently holds the planar coil 3011. According to the present embodiment, the planar coil 3011 and the first holding member 3020 are formed into a single body in a manner in which the planar coil 3011 is disposed on molds 3201 and 3202 (see Fig. 64) for forming the first holding member (see Fig. 65), a material 3220 for forming the first holding member is subsequently pressed in the molds 3201 and 3202 described above by thermal pressing and is molded (see Fig. 66), and this is cooled and solidified. In the present specification, the single body of the first holding member 3020 and the planar coil 3011 is also referred to as the coil intermediate material 3010M.

According to the present embodiment, the planar coil 3011 is sandwiched between the first holding member 3020 and the second holding member 3030. In the illustrated example, the first holding member 3020 has a first contact surface 3020S1 in contact with the first surface 3011A of the planar coil 3011 and a second contact surface 3020S2 in contact with a foundation portion 3031 of the second holding member 3030 described later. The height position (the position in the coil axial direction) of the first contact surface 3020S1 is the same as the height position of the first surface 3011A of the planar coil 3011. The height position (the position in the coil axial direction) of the second contact surface 3020S2 is the same as the height position of the second surface 3011B of the planar coil 3011. The contact surfaces 3020S1 and 3020S2 form portions of the inner surface of the first holding member 3020. The first holding member 3020 has an outer surface 3020S3 opposite the contact surfaces 3020S1 and 3020S2.

As illustrated in Fig. 63 and Fig. 64, grooves 3024 that receive wall portions 3032 of the second holding member 3030 described later are formed on the first holding member 3020. The grooves 3024 will be described in detail later.

In the illustrated example, a portion of the first holding member 3020 forms covering portions 3028 that cover the side surfaces of the turn portions 3011n of the planar coil 3011. The covering portions 3028 are portions of the first holding member 3020 between the first contact surface 3020S1 and the second contact surface 3020S2. The covering portions 3028 extend in the coil axial direction from the first contact surface 3020S1 on both sides of opening portions 3024b of the grooves 3024. The covering portions 3028 form the second contact surface 3020S2. Spaces that are surrounded by the covering portions 3028 are in communication with interior spaces of the grooves 3024.

### (Second Holding Member)

As illustrated in Fig. 62, the planar coil 3011 is sandwiched between the second holding member 3030 according to the present embodiment and the first holding member 3020. In the illustrated example, the second holding member 3030 is formed into a single body together with the planar coil 3011 and the first holding member 3020.

Specifically, the second holding member 3030 includes the foundation portion 3031 that is interposed between the planar coil 3011 and the first magnetic shield member 3040 and the wall portions 3032 that project from the foundation portion 3031 toward the first holding member 3020 in the coil axial direction. The foundation portion 3031 faces the second surface 3011B of the planar coil 3011. The foundation portion 3031 entirely covers the second surface 3011B of the planar coil 3011. The foundation portion 3031 is sized so as to encompass the whole of the planar coil 3011 when viewed in the axial direction of the planar coil 3011. The foundation portion 3031 and the first holding member 3020 sandwich the planar coil 3011 therebetween. In the illustrated example, the foundation portion 3031 is in contact with the second surface 3011B of the planar coil 3011. However, another layer may be disposed between the foundation portion 3031 and the second surface 3011B of the planar coil 3011.

The wall portions 3032 extend between turn portions of the planar coil 3011 adjacent to each other. Accordingly, the wall portions 3032 are formed along the planar coil 3011 that has a spiral shape. In the illustrated example, the wall portions 3032 has a spiral shape that corresponds to the spiral shape of the planar coil 3011. The grooves 3024 of the first holding member 3020 as described above receive the wall portions 3032. In other words, the wall portions 3032 are filled in the grooves 3024 of the first holding member 3020.

The second holding member 3030 exerts magnetism as a whole. That is, the foundation portion 3031 and the wall portions 3032 exert magnetism. As for the second holding member 3030, the eddy current loss and the leaking magnetic flux are decreased due to magnetism, the coupling coefficient is increased, and consequently, the coil performance is improved. The relative permeability of the second holding member 3030 is preferably 2.0 or more or may be 2.0 or more and 10.0 or less. The relative permeability of the second holding member 3030 is more preferably 5.0 or more or may be 5.0 or more and 10.0 or less. The relative permeability of the second holding member 3030 is not particularly limited, but when the relative permeability is too high, the flexibility and strength of the second holding member 3030 are undesirably decreased in some cases. Accordingly, the relative permeability of the second holding member 3030 may be 200 or less.

The second holding member 3030 includes the wall portions 3032 and can consequently effectively improve the coil performance. The height of each wall portion 3032 (a distance between a top portion 3032a of each wall portion 3032 and the second surface 3011B of the planar coil 3011 in the axial direction of the planar coil 3011) 3032H is not particularly limited but may be, for example, 0.5 mm or more or may be 1.0 mm or more. As the height 3032H of each wall portion 3032 increases, more specifically, as a height 3032Ha at which each wall portion 3032 projects from the planar coil 3011 increases, the eddy current loss tends to be further decreased, and the coupling coefficient tends to increase. As the wall portions 3032 become higher, the wall portions 3032 tend to be broken from the root. In view of this, for example, the height 3032Ha described above at which each wall portion 3032 projects may be 10 mm or less. The height 3032Ha at which each wall portion 3032 projects from the planar coil 3011 means a distance between the top portion 3032a of the wall portion 3032 and the first surface 3011A. The wall portions 3032 will be described in more detail later.

For example, the second holding member 3030 according to the present embodiment contains multiple or innumerable magnetic material particles composed of a magnetic material and resin. The magnetic material particles are held by the resin that serves as a holding material.

The magnetic material particles may be composed of ferrite, particularly, ferrite of a soft magnetic material, a nanocrystal magnetic material, silicon steel, electromagnetic soft iron, or amorphous metal, or two or more kinds of these. The resin that serves as the holding material may be glass fiber reinforced polyamide. That is, the resin may be composed of a material that contains polyamide that is thermoplastic resin (a thermoplastic material) and glass fibers. However, the mold material of the second holding member 3030 is not particularly limited.

### (First Magnetic Shield Member)

The first magnetic shield member 3040 is provided to decrease the magnetic permeability and/or the leaking magnetic field. The first magnetic shield member 3040 is a sheet member that differs from the planar coil 3011, the first holding member 3020, and the second holding member 3030. The first magnetic shield member 3040 that differs from the planar coil 3011, the first holding member 3020, and the second holding member 3030 means the first magnetic shield member 3040 that is not formed into a single body together with the planar coil 3011, the first holding member 3020, and the second holding member 3030. However, the first magnetic shield member 3040 and the second holding member 3030 may be joined to each other with an adhesive layer, for example, interposed therebetween. The first magnetic shield member 3040 is sized so as to encompass the planar coil 3011 and the second holding member 3030 in plan view. The first magnetic shield member 3040 overlaps the planar coil 3011 and the second holding member 3030. The first magnetic shield member 3040 may be in direct contact with the second holding member 3030. Alternatively, another layer composed of, for example, a heat dissipation material may be disposed between the first magnetic shield member 3040 and the second holding member 3030.

The first magnetic shield member 3040 according to the present embodiment exerts magnetism and contains a magnetic material or is composed of a magnetic material. As for the coil component 3010, a magnetic field is generated when the electric current is applied to the planar coil 3011. The magnetic field that is generated at the coil component 3010 spreads in all directions with respect to the coil central axis C"'. At this time, the first magnetic shield member 3040 that exerts magnetism can direct lines of magnetic flux that tend to spread toward the coil central axis C"'. The coil component 3010 can be installed on a vehicle, and at this time, if the magnetic field that is generated at the coil component 3010 extends through another vehicle component, the vehicle component is adversely affected in some cases. In these cases, the first magnetic shield member 3040 can decrease the leaking magnetic field that does not contribute to the generation of the electric current.

The first magnetic shield member 3040 preferably contains a soft magnetic material or a nanocrystal magnetic material. More specifically, the first magnetic shield member 3040 contains ferrite or preferably contains soft ferrite.

The relative permeability of the first magnetic shield member 3040 may be 500 or more or may be 1000 or more. The relative permeability of the first magnetic shield member 3040 may be 500 or more and 3000 or less or may be 1000 or more and 3000 or less. The relative permeability according to the present specification has a value that is measured at a frequency of 85 kHz and an environmental temperature of 23 degrees as described above.

### (Second Magnetic Shield Member)

The second magnetic shield member 3050 is provided so as to cover the first magnetic shield member 3040. The second magnetic shield member 3050 may be in direct contact with the first magnetic shield member 3040. Alternatively, another layer composed of, for example, a heat dissipation material or a spacer may be disposed between the second magnetic shield member 3050 and the first magnetic shield member 3040. The second magnetic shield member 3050 is composed of a metal material and is conductive. Specifically, according to the present embodiment, the second magnetic shield member 3050 is composed of aluminum. In this case, magnetism is inhibited from leaking from the planar coil 3011 via the second magnetic shield member 3050. The second magnetic shield member 3050 may be composed of, for example, an aluminum alloy, copper, or stainless steel. In the case where the coil component 3010 is mounted on an automobile, the second magnetic shield member 3050 may be a metal plate that is included in a body of the automobile.

### (Connection Terminal)

As illustrated in Fig. 61, the first connection terminal 3061 is connected to the outer end portion in the radial direction of the turn portion 301112 of the planar coil 3011. The second connection terminal 3062 is connected to the inner end portion in the radial direction of the turn portion 301101 of the planar coil 3011. The first connection terminal 3061 and the second connection terminal 3062 can be used for, for example, connection to the high-frequency current applying unit 1A or the converter 2A. The first connection terminal 3061 and the turn portion 301112 may be connected to each other by ultrasonic joining, and the second connection terminal 3062 and the turn portion 301101 may be connected to each other by ultrasonic joining. However, a connection method is not limited but may be, for example, connection with a conductive adhesive.

### (Groove and Wall Portion)

The grooves 3024 of the first holding member 3020 receive the wall portions 3032 of the second holding member 3030 as described above. The wall portions 3032 extend between turn portions of the planar coil 3011 adjacent to each other. Correspondingly, the grooves 3024 are formed between turn portions of the planar coil 3011 adjacent to each other when viewed in the coil axial direction. In the illustrated example, the wall portions 3032 are formed also outside the outermost turn portion 301112 in the coil radial direction. Correspondingly, the grooves 3024 are formed also outside the outermost turn portion 301112 in the coil radial direction. In the illustrated example, the wall portions 3032 are formed also inside the innermost turn portion 301101 in the coil radial direction. Correspondingly, the grooves 3024 are formed also inside the innermost turn portion 301101 in the coil radial direction.

In the illustrated example, the wall portions 3032 are formed along the spiral shape of the planar coil 3011. For this reason, the grooves 3024 are formed along the spiral shape of the planar coil 3011. In the illustrated example, the wall portions 3032 are formed in a spiral shape that corresponds to the spiral shape of the planar coil 3011. For this reason, the grooves 3024 are formed in a spiral shape that corresponds to the spiral shape of the planar coil 3011.

The grooves 3024 open at the first contact surface 3020S1. In other words, the grooves 3024 include the opening portions 3024b that are formed on the first contact surface 3020S1. The wall portions 3032 extend through the opening portions 3024b into the grooves 3024. The grooves 3024 have bottom portions 3024a. Surfaces that define the grooves 3024 include side surfaces 3024c (also referred to below as "groove side surfaces 3024c") between the opening portions 3024b and the bottom portions 3024a. The groove side surfaces 3024c include pairs of groove side surfaces 3024ca and 3024cb that face each other in the coil radial direction. The pairs of groove side surfaces 3024ca and 3024cb include inner groove side surfaces 3024ca that are located inside in the coil radial direction and outer groove side surfaces 3024cb that are located outside in the coil radial direction.

The wall portions 3032 include the top portions 3032a and base ends 3032b. The wall portions 3032 are connected to the foundation portion 3031 at the base ends 3032b. The wall portions 3032 have side surfaces 3032c (also referred to below as "wall side surfaces 3032c") between the top portions 3032a and the base ends 3032b. The top portions 3032a face the bottom portions 3024a of the grooves 3024. In the illustrated example, the top portions 3032a are in contact with the bottom portions 3024a. The wall side surfaces 3032c include inner wall side surfaces 3032ca that face inward in the coil radial direction and outer wall side surfaces 3032cb that face outward in the coil radial direction. The inner wall side surfaces 3032ca and the outer wall side surfaces 3032cb of the wall portions 3032 face the inner groove side surfaces 3024ca and the outer groove side surfaces 3024cb of the grooves 3024. In the illustrated example, the inner wall side surfaces 3032ca and the outer wall side surfaces 3032cb of the wall portions 3032 are in contact with the inner groove side surfaces 3024ca and the outer groove side surfaces 3024cb of the grooves 3024.

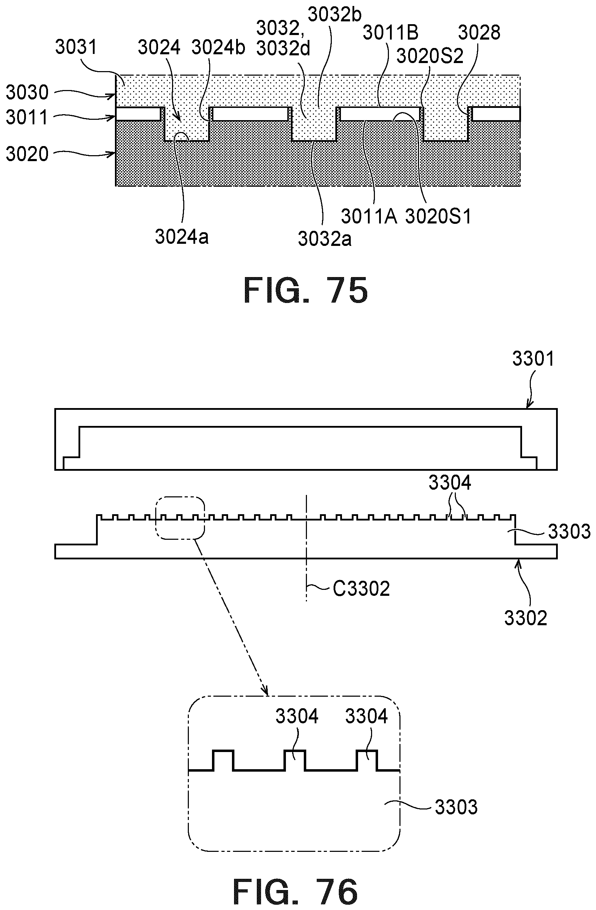

In the case where the width (the dimension in the coil radial direction) of each wall portion 3032 is uniform in the projecting direction thereof (the coil axial direction) as in the wall of a magnetic material disclosed in JP2023-88728A, as illustrated in Fig. 75, the width (the dimension in the coil radial direction) of each groove 3024 of the first holding member 3020 needs to be uniform in the depth direction thereof (the coil axial direction). The first holding member 3020 is formed in a manner in which the material 3220 for manufacturing the first holding member is pressed in molds 3301 and 3302 illustrated in Fig. 76. The mold 3302 includes a body part 3303 and protuberances 3304 that extend from the body part 3303. The protuberances 3304 have a spiral shape so as to correspond to the grooves 3024. The width (the dimension in the radial direction of each protuberance 3304) of each protuberance 3304 is uniform in the projecting direction of the protuberance 3304. The radial direction of the protuberances 3304 means the radial direction of a circle that is drawn on a plane perpendicular to a central axis C3302 with a freely selected point on the central axis C3302 of the protuberances 3304 being centered. The central axis C3302 of the protuberances 3304 is a line that passes through the center of the spiral shape.

As the height of each wall portion 3032 increases, the eddy current loss tends to be further decreased, and the coupling coefficient tends to increase as described above. As the height of each wall portion 3032 increases, the grooves 3024 of the first holding member 3020 need to be deeper. As the depth of each groove 3024 increases, it is more difficult to form the groove 3024 that has a uniform width in the depth direction on the first holding member 3020. Specifically, as the protuberances 3304 of the mold 3302 are more deeply pressed into the material 3220, the material 3220 at portions at which the protuberances 3304 are pressed is more unlikely to move. In the case where the material 3220 contains glass fibers, when the mold 3302 is pressed into the material 3220, the glass fibers in the material 3220 come into contact with the top surfaces of the protuberances 3304, and entry of the mold 3302 into the material 3220 is impeded. If the mold 3302 is forcefully pressed into the material 3220, the mold 3302 can be broken. Accordingly, it is difficult to form the grooves 3024 that are deep on the first holding member 3020 by using the mold 3302 illustrated in Fig. 76. The depth of each groove 3024 that can be formed on the first holding member 3020 by using the mold 3302 is at most 2 mm.

As the height of each wall portion 3032 increases, the amount of the material 3220 that remains between the outer surface 3020S3 and the bottom portions 3024a of the grooves 3024 of the first holding member 3020 decreases, and accordingly, there is a concern that the strength of the first holding member 3020 decreases. If the strength of the first holding member 3020 decreases, the strength of the coil component 3010 decreases.

In consideration of the above points, the width (the dimension in the coil radial direction) of the bottom portion 3024a of each groove 3024 of the first holding member 3020 according to the present embodiment is less than the width (the dimension in the coil radial direction) of the groove 3024 at the height position of the first contact surface 3020S1. Correspondingly, the width (the dimension in the coil radial direction) of the top portion 3032a of each wall portion 3032 of the second holding member 3030 is less than the width (the dimension in the coil radial direction) of the wall portion 3032 at the height position of the first contact surface 302051.

The first holding member 3020 that have the grooves 3024 can be formed by using the mold 3202 illustrated in Fig. 64. That is, the mold 3202 includes a body part 3203 and protuberances 3204 that extend from the body part 3203. The protuberances 3204 have a spiral shape that corresponds to the spiral shape of the grooves 3024. Accordingly, the protuberances 3204 are fitted into the interval between turn portions of the planar coil 3011 adjacent to each other. The protuberances 3204 include top portions 3204a and base ends 3204b. The protuberances 3204 are connected to the body part 3203 at the base ends 3204b.

A reference sign C3202 illustrated in Fig. 64 represents a central axis (also referred to below as a "mold central axis C3202") that passes through the center of the spiral shape of the protuberances 3204. The axial direction (also referred to below as the "mold axial direction") of the protuberances 3204 described below means a direction that extends along the mold central axis C3202 or a direction parallel with the mold central axis C3202. The radial direction (also referred to below as the "mold radial direction") of the protuberances 3204 means the radial direction of a circle that is drawn on a plane perpendicular to the mold central axis C3202 with a freely selected point on the mold central axis C3202 being centered.

According to the present embodiment, the width (the dimension in the mold radial direction) of each top portion 3204a is less than the width (the dimension in the mold radial direction) of each base end 3204b. The protuberances 3204 of the mold 3202 have such a shape, and consequently, when the protuberances 3204 are pressed into the material 3220, the material 3220 at portions at which the protuberances 3204 are pressed can be guided in the width direction of the protuberances 3204. In other words, the shapes of the protuberances 3204 enable the flow of the material 3220 at the portions at which the protuberances 3204 are pressed to be facilitated. Accordingly, the protuberances 3204 can be easily pressed deeply into the material 3220. In the case where the material 3220 contains glass fibers, the width of the top portion 3204a of each protuberance 3204 is less than the width of each base end 3204b, and consequently, the areas of portions of the protuberance 3204 (the top portion 3204a) in contact with the glass fibers are smaller than those in the case illustrated in Fig. 76. As a result, even when the protuberances 3204 are pressed deeply into the material 3220, the possibility that the protuberances 3204 are broken is decreased. The mold 3202 according to the present embodiment enables the grooves 3024 that are deep to be easily formed on the first holding member 3020 as described above. This makes the first holding member 3020 easy to mold. When the grooves 3024 of the first holding member 3020 are deep, the height 3032H of each wall portion 3032 can be increased, and the performance of the coil component 3010 is improved.

The width of each top portion 3204a is preferably 1/2 or less, more preferably 1/3 or less of each base end 3204b from the perspective that pressing force that is applied to the mold 3202 is effectively focused on the top portion 3204a.

Even when the grooves 3024 that are deep are formed on the first holding member 3020, the bottom portions 3024a are narrow, and accordingly, the amount of the material 3220 that remains between the grooves 3024 of the first holding member 3020 and the outer surface 3020S3 can be increased. Consequently, the strength of the first holding member 3020 can be inhibited from decreasing, and the strength of the coil component 3010 can be inhibited from decreasing.

In an example illustrated in Fig. 64, the protuberances 3204 also form the spaces that are surrounded by the covering portions 3028 in the first holding member 3020. The width of each of portions 3204d (also referred to below as "base end portions 3204d") that are continuous with the base ends 3204b of the protuberances 3204 is uniform in the mold axial direction such that the width (the dimension in the coil radial direction) of each space is uniform in the coil axial direction.

The spaces that are surrounded by the covering portions 3028 are uniform in the coil axial direction, and correspondingly, the width of each of portions 3032d (also referred to below as "base end portions 3032d") that are continuous with the base ends 3032b of the wall portions 3032 is uniform in the coil axial direction. In the illustrated example, the base end portions 3032d are continuous up to the height position of the first surface 3011A of the planar coil 3011.

In the illustrated example, at least the groove side surfaces 3024ca or 3024cb of the paired groove side surfaces that define the grooves 3024 include inclined surfaces 3024s that are inclined with respect to the coil axial direction (accordingly, with respect to the coil central axis C"). Correspondingly, at least the wall side surfaces 3032ca or 3032cb of the paired wall side surfaces of the wall portions 3032 include inclined surfaces 3032s that are inclined with respect to the coil axial direction (accordingly, with respect to the coil central axis C"). The first holding member 3020 that has the grooves 3024 can be molded by using the mold 3202 described below. That is, as illustrated in Fig. 64, the protuberances 3204 of the mold 3202 have side surfaces 3204c (also referred to below as "mold side surfaces 3204c") between the top portions 3204a and the base ends 3204b. The mold side surfaces 3204c include pairs of mold side surfaces 3204ca and 3204cb that face in the mold radial direction. The pairs of mold side surfaces 3204ca and 3204cb include inner mold side surfaces 3204ca that are located inside in the mold radial direction and outer mold side surfaces 3204cb that are located outside in the mold radial direction. At least the mold side surfaces 3204ca or 3204cb of the paired mold side surfaces include inclined surfaces 3204s that are inclined with respect to the mold axial direction (accordingly, with respect to the mold central axis C3202).

In an example illustrated in Fig. 62, the outer groove side surfaces 3024cb of the grooves 3024 include the inclined surfaces 3024s. Correspondingly, the outer wall side surfaces 3032cb of the wall portions 3032 include the inclined surfaces 3032s. The outer mold side surfaces 3204cb of the mold 3202 include the inclined surfaces 3204s (see Fig. 64). More specifically, as illustrated in Fig. 62, the inclined surfaces 3024s of the outer groove side surfaces 3024cb are inclined with respect to the coil axial direction so as to approach the bottom portions 3024a from the opening portions 3024b in the coil central axis C"'. Similarly, the inclined surfaces 3032s of the outer wall side surfaces 3032cb are inclined with respect to the coil axial direction so as to approach the top portions 3032a from the base ends 3032b in the coil central axis C"'. As illustrated in Fig. 64, the inclined surfaces 3204s of the outer mold side surfaces 3204cb are inclined with respect to the mold axial direction so as to approach the mold central axis C3202 from the base ends 3204b toward the top portions 3204a.

In the example illustrated in Fig. 62, the inner groove side surfaces 3024ca are parallel with the coil axial direction over the region from the opening portions 3024b to the bottom portions 3024a. The inclined surfaces 3024s of the outer groove side surfaces 3024cb are continuous from the opening portions 3024b to the bottom portions 3024a.

In the example illustrated in Fig. 62, the inner wall side surfaces 3032ca of the wall portions 3032 are parallel with the coil axial direction over the region from the base ends 3032b to the top portions 3032a. Regions of the outer wall side surfaces 3032cb of the wall portions 3032 between the base ends 3032b and the inclined surfaces 3032s are parallel with the coil axial direction. The regions correspond to the base end portions 3032d described above. In the example illustrated in Fig. 62, the inclined surfaces 3032s are continuous from the outer wall side surfaces 3032cb at the height position of the first surface 3011A described above to the top portions 3032a. Accordingly, the outer wall side surfaces 3032cb are parallel with the coil axial direction from the base ends 3032b to the height position of the first surface 3011A. That is, in the example illustrated in Fig. 62, the dimensions in the coil axial direction of the base end portions 3032d (the portions that are connected to the base ends 3032b and that have a uniform width in the coil axial direction) of the wall portions 3032 are equal to the thickness of the planar coil 3011. Accordingly, the base end portions 3032d do not project from the first surface 3011A of the planar coil 3011.

In this example, as illustrated in Fig. 64, the inner mold side surfaces 3204ca of the protuberances 3204 are parallel with the mold axial direction over the region from the base ends 3204b to the top portions 3204a. Regions 3204cd of the outer mold side surfaces 3204cb of the protuberances 3204 between the base ends 3204b and the inclined surfaces 3204s are parallel with the mold axial direction. The regions correspond to the base end portions 3204d described above. The dimensions in the mold axial direction of the regions 3204cd are equal to the thickness of the planar coil 3011. The inclined surfaces 3204s are continuous from end edges of the regions 3204cd opposite the base ends 3204b to the top portions 3032a.

### <Method of Manufacturing Coil Component 3010>

An example of a method of manufacturing the coil component 3010 will now be described.

The molds 3201 and 3202 illustrated in Fig. 64 are first prepared, and as illustrated in Fig. 65, the planar coil 3011 is disposed on the body part 3203 of the mold 3202. At this time, the planar coil 3011 is disposed on the body part 3203 such that the protuberances 3204 of the mold 3202 extend from between turn portions of the planar coil 3011 adjacent to each other.

The material 3220 for manufacturing the first holding member is prepared. In an illustrated example, the material 3220 is a mold material that is molded in a plate shape as a whole. Subsequently, the mold material 3220 is heated, and as illustrated in Fig. 65, the mold material 3220 is placed on the mold 3202 and the planar coil 3011. Subsequently, as illustrated in Fig. 66, the planar coil 3011 and the mold material 3220 are thermally pressed between the mold 3202 and the other mold 3201.

The mold material 3220 is softened and melted between the molds 3201 and 3202. Consequently, the grooves 3024 that correspond to the protuberances 3204 of the mold 3202 are formed on a surface of the mold material 3220. In this way, the first holding member 3020 that has the grooves 3024 are formed. The grooves 3024 are formed between turn portions of the planar coil 3011 adjacent to each other when viewed in the coil axial direction. The first holding member 3020 is cooled and solidified, and consequently, the first holding member 3020 and the planar coil 3011 are formed into a single body. In this way, the coil intermediate material 3010M illustrated in Fig. 63 is manufactured.

After the mold 3202 is removed from the coil intermediate material 3010M, as illustrated in Fig. 67, the second holding member 3030 is formed on the coil intermediate material 3010M (more specifically, on the second surface 3011B of the planar coil 3011). At this time, the second holding member 3030 fills the grooves 3024. The second holding member 3030 is formed into a single body together with the coil intermediate material 3010M. Subsequently, the first magnetic shield member 3040 and the second magnetic shield member 3050 are disposed on the second holding member 3030. In the above manner, the coil component 3010 is manufactured.

### <Use of Coil Component>

The coil component 3010 according to the present embodiment can be used as the power transmission coil of the power transmitter 1 of the wireless power transmission system S described above and can be used as the power reception coil of the power receiver 2.

In the case where the coil component 3010 is used as the power transmission coil, the first connection terminal 3061 and the second connection terminal 3062 are connected to the high-frequency current applying unit 1A illustrated in Fig. 1 or an alternating-current power source. After the high-frequency current is applied to the coil component 3010, the electric current flows from the first connection terminal 3061 to the planar coil 3011 and can subsequently flow from the second connection terminal 3062 to the high-frequency current applying unit 1A or the alternating-current power source. The electric current flows from the second connection terminal 3062 to the planar coil 3011 and can subsequently flow from the first connection terminal 3061 to the high-frequency current applying unit 1A or the alternating-current power source. This enables a magnetic field that includes a line of magnetic force parallel with the coil central axis C‴ to be generated.

In the case where the coil component 3010 is used as the power reception coil, the magnetic field that includes the line of magnetic force is received or is generated so as to pass inside the planar coil 3011, and consequently, the high-frequency current can be generated at the planar coil 3011. The high-frequency current can be applied from the first connection terminal 3061 or the second connection terminal 3062 to an external device.

The coil component 3010 can be used for a transformer or an antenna. For example, in the case where the coil component 3010 functions as a primary coil of the transformer, the first connection terminal 3061 and the second connection terminal 3062 are connected to the alternating-current power source. The supply of the high-frequency current enables magnetic flux to be applied from the center of the planar coil 3011 to an iron core.

### <Modification>

An embodiment described above can be modified in various ways. For example, the coil component 3010 may include multiple planar coils. More specifically, the coil component 3010 may include another planar coil between the planar coil 3011 and the first magnetic shield member 3040. The number of the planar coils that are included in the coil component 3010 is not particularly limited. In the case where the coil component 3010 includes the other planar coil described above, the planar coil 3011 and the other planar coil may be stacked in the coil axial direction of the planar coil 3011. In this case, the other planar coil may be embedded in the foundation portion 3031 of the second holding member 3030. In this case, the connection terminal 3061 or 3062 may be connected to the planar coil 3011, and the other of the connection terminal 3061 or 3062 may be connected to the other planar coil. In this case, the planar coil 3011 and the other planar coil may be electrically connected to each other.

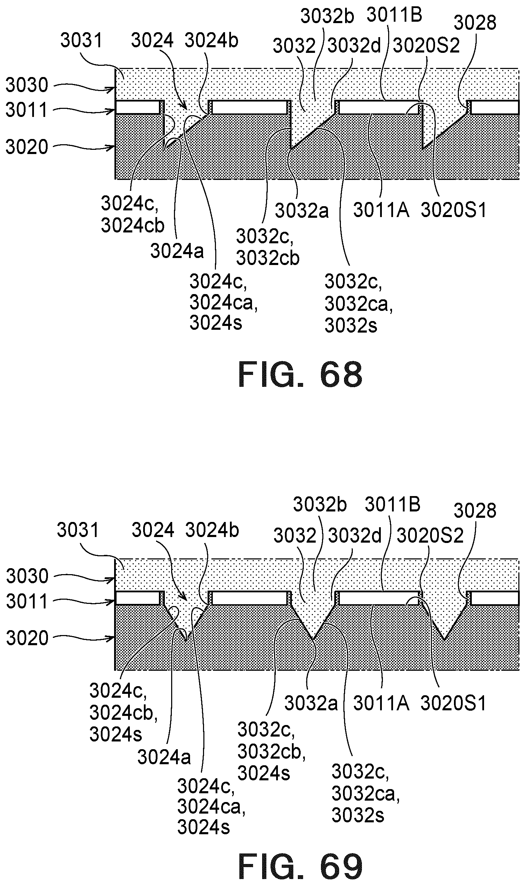

The shapes of the grooves 3024, the wall portions 3032, and the protuberances 3204 are not particularly limited to the shapes described above. For example, as illustrated in Fig. 68, the inner groove side surfaces 3024ca of the grooves 3024 may include the inclined surfaces 3024s that are inclined with respect to the coil axial direction. Correspondingly, the inner wall side surfaces 3032ca of the wall portions 3032 may include the inclined surfaces 3032s that are inclined with respect to the coil axial direction. The inner mold side surfaces 3204ca of the mold 3202 may include the inclined surfaces 3204s that are inclined with respect to the mold axial direction although this is not illustrated.

In this case, the inclined surfaces 3024s of the inner groove side surfaces 3024ca are inclined with respect to the coil axial direction from the opening portions 3024b toward the bottom portions 3024a so as to be far away from the coil central axis C"'. Similarly, the inclined surfaces 3032s of the inner wall side surfaces 3032cb are inclined with respect to the coil axial direction from the base ends 3032b toward the top portions 3032a so as to be far away from the coil central axis C"'. The inclined surfaces 3204s of the inner mold side surfaces 3204ca are inclined with respect to the mold axial direction from the base ends 3204b toward the top portions 3204a so as to be far away from the mold central axis C3202.

According to the knowledge obtained by the inventor, the performance of the coil component 3010 in the case where the inner wall side surfaces 3032ca include the inclined surfaces 3032s, and the outer wall side surfaces 3032cb do not include the inclined surfaces 3032s as illustrated in Fig. 68 is improved more than the case where the outer wall side surfaces 3032cb include the inclined surfaces 3032s, and the inner wall side surfaces 3032ca do not include the inclined surfaces 3032s as illustrated in Fig. 62.

As illustrated in Fig. 69, both of the inner wall side surfaces 3032ca and the outer wall side surfaces 3032cb of the wall portions 3032 may naturally include the inclined surfaces 3032s. In this case, both of the inner groove side surfaces 3024ca and the outer groove side surfaces 3024cb of the grooves 3024 may include the inclined surfaces 3024s. Both of the inner mold side surfaces 3204ca and the outer mold side surfaces 3204cb of the mold 3202 may include the inclined surfaces 3204s although this is not illustrated.

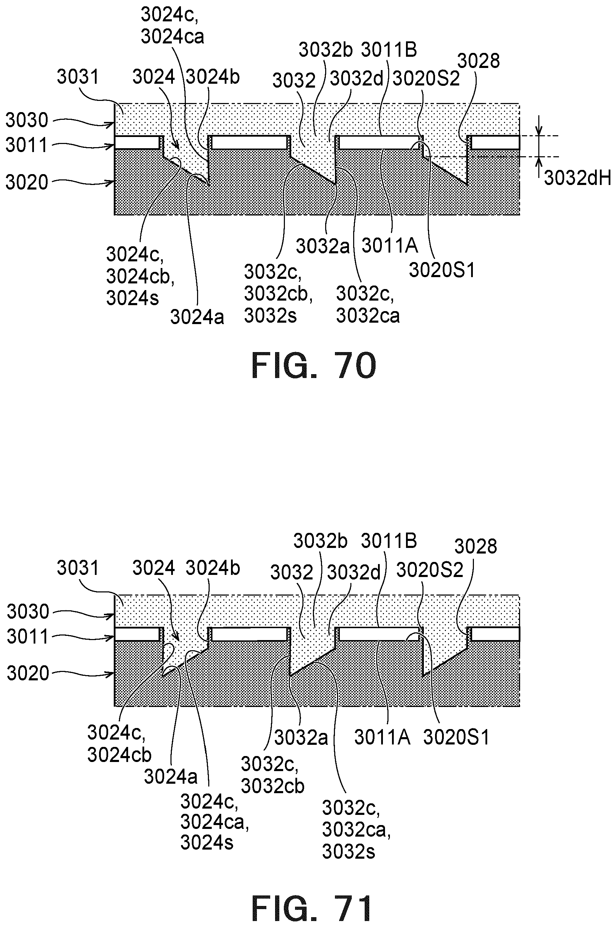

In the example described above, the inclined surfaces 3024s and 3032s of the grooves 3024 and the wall portions 3032 extend from the height position of the first surface 3011A of the planar coil 3011 to the bottom portions 3024a or the top portions 3032a but are not limited thereto. In the example illustrated in Fig. 70 to Fig. 72, the inclined surfaces 3024s and 3032s of the grooves 3024 and the wall portions 3032 extend from a height position that differs from the height position of the first surface 3011A of the planar coil 3011 to the bottom portions 3024a or the top portions 3032a.

More specifically, in the example illustrated in Fig. 70 to Fig. 72, the dimensions in the coil axial direction of the base end portions 3032d of the wall portions 3032 are more than the thickness of the planar coil 3011. That is, the base end portions 3032d extend from the first surface 3011A of the planar coil 3011 toward the outer surface 3020S3 of the first holding member 3020. According to the knowledge obtained by the inventor, the performance of the coil component 3010 is further improved as a degree 3032dH (also referred to below as a "height 3032dH at which the base end portions 3032d project from the planar coil 3011 ") at which the base end portions 3032d extend from the first surface 3011A of the planar coil 3011 toward the outer surface 3020S3 increases. In the example illustrated in Fig. 61 to Fig. 67, the height 3032dH at which the base end portions 3032d project from the planar coil 3011 is 0 mm. In the example illustrated in Fig. 70 to Fig. 72, however, the height 3032dH at which the base end portions 3032d project from the planar coil 3011 is more than 0 mm. The height 3032dH of projection described above in the example illustrated in Fig. 70 to Fig. 72 is not particularly limited but may be 1 mm or more in the perspective that the performance of the coil component 3010 is effectively improved.

### <Simulation of Evaluation of Performance of Coil Component>

Simulation that is run to evaluate the performance of coil components in first to ninth examples and first to fifth comparative examples will now be described. The simulation is run by using Femtet (registered trademark) made by Murata Software Co., Ltd.

Common conditions of the simulation in the first to ninth examples and the first to fifth comparative examples are as follows.
· The coil component 3010 includes the planar coil 3011 that is formed in a spiral shape, the first holding member 3020, the second holding member 3030, the first magnetic shield member 3040, the second magnetic shield member 3050, the first connection terminal 3061, and the second connection terminal 3062 as in the example illustrated in Fig. 61 to Fig. 64.
· The coil component 3010 includes the single planar coil 3011.
· The planar coil 3011 is wound in a substantially regular octagonal shape.
· The planar coil 3011 includes the first to twelfth turn portions 301101 to 301112.
· Distances between the turn portions 301101 and 301102, ···, the turn portions 301111 and 301112 are 3 mm. A distance between the inner end portion in the coil radial direction of the first turn portion 301101 and the inner end portion in the coil radial direction of the second turn portion 301102 is 6 mm.
· The planar coil 3011 is composed of copper.
· The line width of the planar coil 3011 is 7.5 mm, and the thickness thereof is 1.0 mm.
· The diameter of the planar coil 3011 is 295 mm.
· The first holding member 3020 is composed of glass fiber reinforced polyamide.
· The width of the opening portion 3024b of each groove 3024 is 2.5 mm.
· The second holding member 3030 is composed of resin that contains a magnetic material.
· The relative permeability of the second holding member 3030 is 10.
· The first magnetic shield member 3040 includes a ferrite plate.
· The relative permeability of the first magnetic shield member 3040 is 3000.
· The second magnetic shield member 3050 is composed of aluminum.
· The first connection terminal 3061 and the second connection terminal 3062 are connected to the inner end portion and the outer end portion in the coil radial direction of the planar coil 3011.
· The high-frequency current that is applied to the planar coil 3011 is 40A, and frequency is 85 kHz.

Common conditions of the simulation in the first to ninth examples are as follows. At least the wall side surfaces 3032ca or 3032cb of the paired wall side surfaces of the wall portions 3032 include the inclined surfaces 3032s.

Individual conditions of the simulation in the first to ninth examples are as follows.

### <First Example>

· The shapes of the wall portions 3032 and the grooves 3024 are the shapes illustrated in Fig. 62.
· The height 3032Ha at which the wall portions 3032 project from the planar coil 3011 is 2 mm.
· The height 3032dH at which the base end portions 3032d project from the planar coil 3011 is 0 mm.

### <Second Example>

· The height 3032Ha at which the wall portions 3032 project from the planar coil 3011 is 4 mm.
· The other conditions are the same as those in the first example.

### <Third Example>

· The shapes of the wall portions 3032 and the grooves 3024 are the shapes illustrated in Fig. 68.
· The height 3032Ha at which the wall portions 3032 project from the planar coil 3011 is 2 mm.
· The height 3032dH at which the base end portions 3032d project from the planar coil 3011 is 0 mm.

### <Fourth Example>

· The height 3032Ha at which the wall portions 3032 project from the planar coil 3011 is 4 mm.
· The other conditions are the same as those in the third example.

### <Fifth Example>

· The shapes of the wall portions 3032 and the grooves 3024 are the shapes illustrated in Fig. 69.
· The height 3032Ha at which the wall portions 3032 project from the planar coil 3011 is 2 mm.
· The height 3032dH at which the base end portions 3032d project from the planar coil 3011 is 0 mm.

### <Sixth Example>

· The height 3032Ha at which the wall portions 3032 project from the planar coil 3011 is 4 mm.
· The other conditions are the same as those in the fifth example.

### <Seventh Example>

· The shapes of the wall portions 3032 and the grooves 3024 are the shapes illustrated in Fig. 70.
· The height 3032Ha at which the wall portions 3032 project from the planar coil 3011 is 4 mm.
· The height 3032dH at which the base end portions 3032d project from the planar coil 3011 is 2 mm.

### <Eighth Example>

· The shapes of the wall portions 3032 and the grooves 3024 are the shapes illustrated in Fig. 71.
· The height 3032Ha at which the wall portions 3032 project from the planar coil 3011 is 4 mm.
· The height 3032dH at which the base end portions 3032d project from the planar coil 3011 is 2 mm.

### <Ninth Example>

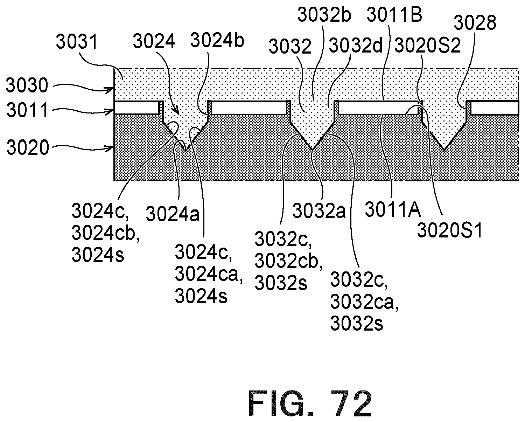

· The shapes of the wall portions 3032 and the grooves 3024 are the shapes illustrated in Fig. 72.
· The height 3032Ha at which the wall portions 3032 project from the planar coil 3011 is 4 mm.
· The height 3032dH at which the base end portions 3032d project from the planar coil 3011 is 2 mm.

Common conditions of the simulation in the first to fifth comparative examples are as follows. · Neither the wall side surfaces 3032ca nor 3032cb of the paired wall side surfaces of the wall portions 3032 include the inclined surfaces 3032s. In other words, the wall portions 3032 include only the base end portions 3032d of the wall portions 3032 in the first to ninth examples.

Individual conditions of the simulation in the first to fifth comparative examples are as follows.

### <First Comparative Example>

· The shapes of the wall portions 3032 and the grooves 3024 are the shapes illustrated in Fig. 75.
· The height 3032Ha at which the wall portions 3032 project from the planar coil 3011 is 0 mm.

### <Second Comparative Example>

· The height 3032Ha at which the wall portions 3032 project from the planar coil 3011 is 1 mm.
· The other conditions are the same as those in the first comparative example.

### <Third Comparative Example>

· The height 3032Ha at which the wall portions 3032 project from the planar coil 3011 is 2 mm.
· The other conditions are the same as those in the first comparative example.

### <Fourth Comparative Example>

· The height 3032Ha at which the wall portions 3032 project from the planar coil 3011 is 3 mm.
· The other conditions are the same as those in the first comparative example.

### <Fifth Comparative Example>

· The height 3032Ha at which the wall portions 3032 project from the planar coil 3011 is 4 mm.
· The other conditions are the same as those in the first comparative example.

### <Evaluation>

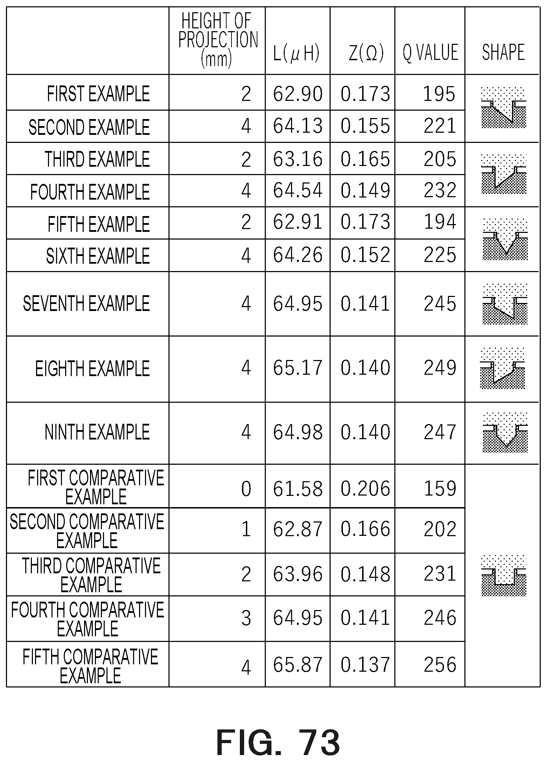

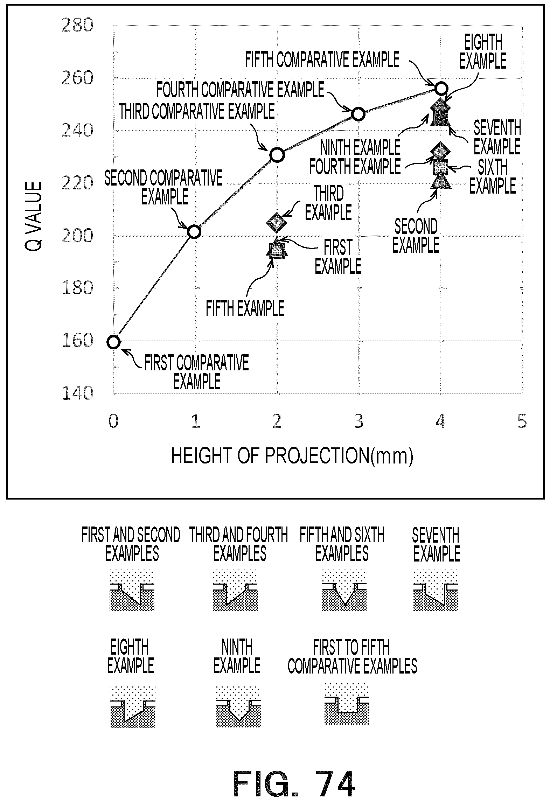

Fig. 73 and Fig. 74 illustrate the result of simulation. In Fig. 73 and Fig. 74, "Q VALUE", "L", and "Z" mean the Q value, inductance, and impedance of the coil component 3010.

It is understood from Fig. 73 and Fig. 74 that the Q values of the coil components 3010 in the first, third, and fifth examples have the same level as the Q value of the coil component in the second comparative example. In the first, third, and fifth examples, the height 3032dH at which the base end portions 3032d project from the planar coil 3011 is 0 mm. In the second comparative example, however, the height 3032Ha at which the wall portions 3032 project from the planar coil 3011 is 1 mm.

It is understood from Fig. 73 and Fig. 74 that the Q values of the coil components 3010 in the second, fourth, and sixth examples have the same level as the Q value of the coil component in the third comparative example. In the second, fourth, and sixth examples, the height 3032dH at which the base end portions 3032d project from the planar coil 3011 is 0 mm. In the third comparative example, however, the height 3032Ha at which the wall portions 3032 project from the planar coil 3011 is 2 mm.

It is understood from Fig. 73 and Fig. 74 that the Q values of the coil components 3010 in the seventh to ninth examples have the same level as the Q value of the coil component in the fourth comparative example or the fifth comparative example. In the seventh to ninth examples, the height 3032dH at which the base end portions 3032d project from the planar coil 3011 is 2 mm. In the fourth comparative example and the fifth comparative example, however, the heights 3032Ha at which the wall portions 3032 project from the planar coils 3011 are 3 mm and 4 mm. In the fourth comparative example and the fifth comparative example, the widths of the wall portions 3032 are uniform in the projecting direction thereof, and the heights 3032H of projection from the planar coils 3011 are more than 2 mm. For this reason, it is difficult to form the grooves 3024 that receive the wall portions 3032 in the fourth comparative example and the fifth comparative example on the first holding member 3020 in practice as described above.

It is understood from comparisons between the second example and the seventh example, between the fourth example and the eighth example, and between the sixth example and the ninth example that increasing the heights 3032dH at which the base end portions 3032d project from the planar coils 3011 enables the Q value of the coil component 3010 to be improved.

It is understood from comparisons between the first example and the third example, between the second example and the fourth example, and between the seventh example and the eighth example that in the case where only the wall side surfaces 3032ca or 3032cb of the paired wall side surfaces of the wall portions 3032 include the inclined surfaces 3032s, the coil component 3010 in which the inner wall side surfaces 3032ca of the wall portions 3032 include the inclined surfaces 3032s tends to improve the Q value of the coil component 3010 more than the coil component 3010 in which the outer wall side surfaces 3032cb of the wall portions 3032 include the inclined surfaces 3032s.

The coil component 3010 according to an embodiment described above includes the planar coil 3011, the first holding member 3020, and the second holding member 3030. The planar coil 3011 has a spiral shape and has the first surface 3011A and the second surface 3011B opposite the first surface 3011A. The first holding member 3020 overlaps the planar coil 3011 so as to face the first surface 3011A and holds the planar coil 3011. The planar coil 3011 is sandwiched between the second holding member 3030 and the first holding member 3020. The planar coil 3011 includes the multiple turn portions 3011n that are arranged in the coil radial direction that is the radial direction of the planar coil 3011. The first holding member 3020 has the contact surface 3020S1 in contact with the first surface 3011A. The grooves 3024 are formed on the contact surface 3020S1. The grooves 3024 extend between turn portions of the planar coil 3011 adjacent to each other when viewed in the coil axial direction that is the axial direction of the planar coil 3011. The second holding member 3030 includes the foundation portion 3031 and the wall portions 3032. The foundation portion 3031 is in contact with the second surface 3011B of the planar coil 3011. The wall portions 3032 extend from the foundation portion 3031 into the grooves 3024 of the first holding member 3020 between turn portions of the planar coil 3011 adjacent to each other. The width of the bottom portion 3024a of each groove 3024 is less than the width of the groove 3024 at the height position (the position in the coil axial direction) of the contact surface 3020S1. As for the coil component 3010, the depths of the grooves 3024 are easily deepened, and accordingly, it is easy to increase the height of each wall portion 3032 and to improve the performance of the coil component 3010. As for the coil component 3010, the amount of the material 3220 that remains between the grooves 3024 of the first holding member 3020 and the outer surface 3020S3 of the first holding member 3020 can be increased. For this reason, the strength of the first holding member 3020 is inhibited from decreasing due to formation of the grooves 3024, and the strength of the coil component 3010 is inhibited from decreasing.

A method of manufacturing the coil component 3010 according to an embodiment described above includes a step of preparing the mold 3202, a step of disposing the planar coil 3011 on the mold 3202, a step of manufacturing the coil intermediate material 3010M, a step of removing the mold 3202 from the coil intermediate material 3010M, and a step of forming the second holding member 3030. The mold 3202 includes the body part 3203 and the protuberances 3204 that extend from the body part 3203 and that have a spiral shape. The planar coil 3011 has a spiral shape that corresponds to the spiral shape of the protuberances 3204. The planar coil 3011 is disposed on the body part 3203 such that the protuberances 3204 extend from between turn portions of the planar coil 3011 adjacent to each other. At the step of manufacturing the coil intermediate material 3010M, the material 3220 for manufacturing the first holding member is pressed against the mold 3202 on which the planar coil 3011 is disposed, the first holding member 3020 is consequently molded, and the first holding member 3020 and the planar coil 3011 are formed into a single body. The width of the top portion 3204a of each protuberance 3204 of the mold 3202 is less than the width (that is, the width of each base end 3204b) of the protuberance 3204 at the position of connection with the body part 3203. In the method of manufacturing the coil component 3010, the grooves 3024 that are deep are easily formed on the first holding member 3020, and as a result, the coil component 3010 that includes the wall portions 3032 that have a great height can be easily manufactured. Accordingly, the coil component 3010 that has excellent performance can be easily manufactured. The coil component 3010 that is manufactured by using the manufacturing method enables the amount of the material 3220 that remains between the grooves 3024 of the first holding member 3020 and the outer surface 3020S3 of the first holding member 3020 to be increased. For this reason, the strength of the first holding member 3020 is inhibited from decreasing due to formation of the grooves 3024, and the strength of the coil component 3010 is inhibited from decreasing.

The modifications to the embodiments described above are described above, and naturally, multiple modifications can be appropriately combined and used.

### Reference Signs List

S: power transmission system, 1: power transmitter, 1A: high-frequency current applying unit, 2: power receiver, 2A: converter, 10, 10a, 10b, 10c, 10d: coil component, 10P: pre-coil component, 11: first planar coil, 11A: first surface, 11B: second surface, 11n: turn portion, 11T: projecting piece, 11T1: first portion, 11T2: second portion, 11H: through-hole, 11M: coil intermediate material, 11S: connection portion, 11F: frame portion, 12: second planar coil, 12A: first surface, 12B: second surface, 12n: turn portion, 12T: projecting piece, 12M: second coil intermediate material, 12S: connection portion, 20: first holding member, 20A: first surface, 20B: second surface, 22: groove, 22A: bottom surface, 22B: side surface, 23: recessed location, 24: hollow portion, 26: protruding portion, 27: base portion, 28: spacer portion, 30: second holding member, 200: mold, 200S: installation surface, 201: body portion, 202: protuberance, 204: positioning protrusion, 220: mold material, 230: second mold material, 240: facing mold, 241: cutting assist protruding portion, C1: central axis, 1010, 1010', 1010": coil component, 1010M: coil intermediate material, 1011: first planar coil, 1011A: first surface, 1011B: second surface, 1011n: turn portion, 1011E: conductor, 1011h: path hole, 1012: second planar coil, 1012A: first surface, 1012B: second surface, 1012n: turn portion, 1012E: conductor, 1013: inner circumferential side surface, 1014: outer circumferential side surface, 1020: first holding member, 1020B: base portion, 1020S: contact surface, 1021: first rib portion, 1021A: first raised portion, 1021B: first overhang portion, 1022: second rib portion, 1022A: second raised portion, 1022A1: inner raised portion, 1022A2: outer raised portion, 1022B: second overhang portion, 1022B1: first portion, 1022B2: second portion, 1024: groove, 1026: adhesive layer, 1030: second holding member, 1031: first layer portion, 1032: second layer portion, 1033: third layer portion, 1034: fourth layer portion, 1035: fifth layer portion, 1040: first magnetic shield member, 1050: second magnetic shield member, 1061: first connection terminal, 1062: second connection terminal, 1200: mold, 1200S: installation surface, 1201: body portion, 1202: protuberance, 1203: positioning protrusion, 1204: first recessed portion, 1205: second recessed portion, 1205A: inner circumferential recessed portion, 1205B: outer circumferential recessed portion, 1210: another mold, 1220: mold material, C1' : first central axis, C2' : second central axis, 2010: coil component, 2010M: coil intermediate material, 2011: first planar coil, 2011A: first surface, 2011B: second surface, 2011n: turn portion, 2011E: conductor, 2012: second planar coil, 2012A: first surface, 2012B: second surface, 2012n: turn portion, 2012E: conductor, 2020: first holding member, 2024: first groove, 2025: second groove, 2030: second holding member, 2031: foundation portion, 2032: projecting portion, 2040: first magnetic shield member, 2050: second magnetic shield member, 2061: first connection terminal, 2062: second connection terminal, 2070: rib, 2200: mold, 2200S: installation surface, 2201: body portion, 2202: protuberance, 2210: another mold, 2220: mold material, C1": first central axis, C2": second central axis, 3010: coil component, 3010M: coil intermediate material, 3011: planar coil, 3011A: first surface, 3011B: second surface, 3011n: turn portion, 3011E: conductor, 3020: first holding member, 3024: groove, 3024s: inclined surface, 3030: second holding member, 3031: foundation portion, 3032: wall portion, 3032s: inclined surface, 3040: first magnetic shield member, 3050: second magnetic shield member, 3061: first connection terminal, 3062: second connection terminal, 3202: mold, 3203: body part, 3204: protuberance, 3204s: inclined surface, 3220: mold material, C‴: coil central axis, C3202: mold central axis

## Claims

1. A coil component comprising: a first planar coil that includes turn portions that are arranged in a radial direction and a projecting piece that extends from an inner circumferential edge and/or an outer circumferential edge of at least one turn portion among the turn portions and that bends such that the projecting piece leaves from the turn portion; and
a first holding member that is in contact with the turn portions and that overlaps the first planar coil,
wherein the first holding member includes a groove on a surface on which the first planar coil is stacked, and
wherein the projecting piece is in contact with an inner surface of the groove in the radial direction.

2. The coil component according to claim 1, wherein the turn portion is located outside the groove.

3. The coil component according to claim 2, further comprising: a second holding member that exerts magnetism and that is formed into a single body together with the first planar coil and the first holding member such that the first planar coil is sandwiched between the second holding member and the first holding member, and
wherein the groove is filled with a portion of the second holding member.

4. The coil component according to claim 3, wherein a second planar coil is embedded in the second holding member, and the second planar coil overlaps the first planar coil,
wherein the second planar coil includes turn portions that are arranged in a radial direction and a projecting piece that extends from an inner circumferential edge and/or an outer circumferential edge of at least one turn portion among the turn portions and that bends such that the projecting piece leaves from the turn portion of the second planar coil, and
wherein the projecting piece of the second planar coil is in contact with the second holding member in the radial direction.

5. The coil component according to claim 4, wherein the first holding member further includes a protruding portion that projects from the groove and that is embedded in the second holding member, and
wherein the protruding portion faces the projecting piece of the second planar coil in the radial direction.

6. The coil component according to claim 5, wherein the first holding member further includes a spacer portion that projects such that the spacer portion leaves from the first planar coil at least at a portion between the groove on the surface on which the first planar coil is stacked and the turn portion inside the groove in the radial direction or a portion between the groove and the turn portion outside the groove in the radial direction, and the spacer portion is adjacent to the protruding portion in the radial direction.

7. The coil component according to any one of claim 1 to claim 6, wherein the groove extends in a spiral shape along the turn portions.

8. The coil component according to any one of claim 1 to claim 7, wherein the groove contains a recessed location, and
wherein at least a portion of the projecting piece is located at the recessed location.

9. The coil component according to any one of claim 1 to claim 8, wherein the projecting piece extends from the inner circumferential edge and the outer circumferential edge of the turn portion.

10. The coil component according to any one of claim 1 to claim 8, wherein the projecting piece extends only from the outer circumferential edge of the turn portion.

11. The coil component according to any one of claim 1 to claim 10, wherein the turn portion that is connected to the projecting piece has a through-hole at a position at which the turn portion is adjacent to the projecting piece in the radial direction.

12. A method of manufacturing a coil component comprising:
a step of preparing a coil intermediate material that includes turn portions that are arranged in a radial direction and a connection portion that connects the turn portions adjacent to each other in the radial direction;
a step of preparing a mold on which a protuberance is formed;
a step of placing the coil intermediate material on the mold such that the connection portion faces the protuberance, and the turn portions that are connected by the connection portion and that are adjacent to each other face a portion of the mold that differs from the protuberance;
a step of pressing a mold material against the mold with the coil intermediate material interposed therebetween, relatively pressing the protuberance into the mold material with the connection portion interposed therebetween, consequently separating the connection portion from one of the turn portions adjacent to each other, bending the connection portion such that the connection portion leaves from the turn portion, and forming a groove on the mold material; and
a step of solidifying the mold material and subsequently removing the mold material from the mold.

13. The method of manufacturing the coil component according to claim 12, wherein the mold includes positioning protrusions that extend upward from the portion that differs from the protuberance,
wherein the turn portions to which the connection portion is connected have through-holes at positions at which the turn portions are adjacent to the connection portion in the radial direction, and
wherein the coil intermediate material is placed on the mold with the positioning protrusions extending through the through-holes.

14. The method of manufacturing the coil component according to claim 12 or claim 13, wherein the connection portion includes a constriction portion a sectional area of which locally decreases.

15. The method of manufacturing the coil component according to claim 14, wherein the constriction portion is formed at an intermediate position on the connection portion in the radial direction.

16. The method of manufacturing the coil component according to claim 14, wherein the constriction portion is formed at an outer end portion of the connection portion in the radial direction.

17. A method of manufacturing a coil component comprising:
a step of preparing a pre-coil component that includes a first planar coil that includes turn portions that are arranged in a radial direction and a first holding member that is in contact with the turn portions and that overlaps the first planar coil, the first holding member having a groove on a surface on which the first planar coil is stacked, the groove opening from between the turn portions adjacent to each other, the pre-coil component further including a protruding portion that projects from the groove;
a step of preparing a second coil intermediate material that includes turn portions that are arranged in a radial direction and a connection portion that connects the turn portions adjacent to each other in the radial direction;
a step of stacking the second coil intermediate material with the first planar coil such that the connection portion faces the protruding portion, and
a step of pressing the connection portion against the protruding portion, separating the connection portion from one of the turn portions that are connected by the connection portion and that are adjacent to each other, and bending the connection portion such that the connection portion leaves from the turn portion.

18. A power transmitter comprising: the coil component according to any one of claim 1 to claim 11.

19. A power receiver comprising: the coil component according to any one of claim 1 to claim 11.

20. A power transmission system comprising: a power transmitter; and a power receiver,
wherein at least the power transmitter or the power receiver includes the coil component according to any one of claim 1 to claim 11.

21. A mobile body comprising: the coil component according to any one of claim 1 to claim 11.

22. A coil component comprising:
a planar coil that has a spiral shape and that has a first surface and a second surface opposite each other in an axial direction that extends along a central axis of the spiral shape; and
a first holding member that overlaps the planar coil such that the first holding member faces the second surface and that holds the planar coil,
wherein the planar coil has a path hole that extends from the first surface to the second surface, and
wherein the first holding member includes a base portion having a contact surface that is in contact with the second surface and that extends along the second surface and a rib portion that projects from the contact surface, that extends through the path hole, and that is in contact with or close to an inner circumferential surface of the path hole in a radial direction of the planar coil perpendicular to the central axis.

23. The coil component according to claim 22, wherein the first holding member includes a plurality of the rib portions, and
wherein the plurality of the rib portions is arranged at an interval in the radial direction.

24. The coil component according to claim 22 or claim 23, wherein the rib portion includes a raised portion that is in contact with or close to the path hole in the radial direction and crosses the planar coil in the axial direction and an overhang portion that extends from the raised portion in the radial direction and that faces the first surface.

25. A coil component comprising:
a planar coil that has a spiral shape and that has a first surface and a second surface opposite each other in an axial direction that extends along a central axis of the spiral shape; and
a first holding member that overlaps the planar coil such that the first holding member faces the second surface and that holds the planar coil,
wherein the first holding member includes a base portion having a contact surface that is in contact with the second surface and that extends along the second surface and a rib portion that projects from the contact surface and that is in contact with or close to a side surface of the planar coil that is located between the first surface and the second surface in a radial direction of the planar coil perpendicular to the central axis, and
wherein the rib portion includes a raised portion that is in contact with or close to the side surface of the planar coil in the radial direction and that crosses the planar coil in the axial direction and an overhang portion that extends from the raised portion in the radial direction and that faces the first surface.

26. The coil component according to claim 25, wherein the raised portion extends in a spiral shape along the planar coil that has the spiral shape.

27. The coil component according to claim 25 or claim 26, wherein the raised portion includes an inner raised portion that is in contact with or close to an inner circumferential side surface of the side surface that faces the central axis in the radial direction and an outer raised portion that is in contact with or close to an outer circumferential side surface of the side surface opposite the inner circumferential side surface, and
wherein the inner raised portion and the outer raised portion are separated from each other in the radial direction and project from the contact surface.

28. The coil component according to any one of claim 25 to claim 27, wherein the rib portion includes a plurality of the overhang portions, and
wherein the plurality of the overhang portions is provided at an interval in a direction in which the planar coil extends in the spiral shape.

29. The coil component according to claim 28, wherein the plurality of the overhang portions is arranged at an interval in the radial direction or a direction parallel with the radial direction.

30. The coil component according to any one of claim 25 to claim 29, wherein the overhang portion partly covers the first surface.

31. The coil component according to claim 30, wherein the overhang portion covers a range of 25% or less of an area of the first surface.

32. The coil component according to any one of claim 22 to claim 31, wherein the first holding member exerts no magnetism and has insulation properties.

33. The coil component according to any one of claim 22 to claim 32, further comprising: a second holding member that exerts magnetism and that is formed into a single body together with the planar coil and the first holding member such that the planar coil is sandwiched between the second holding member and the first holding member.

34. The coil component according to claim 33, wherein the planar coil includes turn portions that are arranged in a radial direction,
wherein the first holding member has a groove at a position on the contact surface between the turn portions adjacent to each other, and
wherein the second holding member is filled in the groove.

35. The coil component according to claim 29, further comprising: a first magnetic shield member that faces the first surface of the planar coil,
wherein the first magnetic shield member includes magnetic plates that exert magnetism, and
wherein the magnetic plates include two of the magnetic plates that sandwich the plurality of the overhang portions arranged at the interval in the radial direction.

36. The coil component according to any one of claim 22 to claim 35, further comprising: an adhesive layer that contains thermoplastic resin that joins the second surface and the contact surface to each other.

37. The coil component according to any one of claim 22 to claim 36, wherein surface roughness of the second surface is more than surface roughness of the first surface.

38. A method of manufacturing a coil component comprising:
a step of preparing a mold on which a recessed portion is formed;
a step of preparing a planar coil that has a spiral shape and that has a first surface and a second surface opposite each other in an axial direction that extends along a central axis of the spiral shape;
a step of placing the planar coil on the mold with the first surface facing a surface of the mold on which the recessed portion is formed and with the planar coil partly covering the recessed portion; and
a step of providing a mold material such that the mold material covers the second surface, forming a portion that fills the recessed portion and a portion that covers the second surface from the mold material, and solidifying the mold material with the portion that fills the recessed portion and the portion that covers the second surface being connected to each other.

39. The method of manufacturing the coil component according to claim 38, wherein the planar coil has a path hole that extends from the first surface to the second surface, and
wherein the planar coil is placed on the mold with the path hole overlapping the recessed portion, and the mold material is filled in the recessed portion from the path hole.

40. The method of manufacturing the coil component according to claim 38 or claim 39, wherein the planar coil is placed on the mold with the planar coil partly covering the recessed portion, and
wherein the mold material is filled in the recessed portion from a part of the recessed portion that is not covered by the planar coil.

41. The method of manufacturing the coil component according to claim 40, wherein the mold includes a support portion that is located inside the recessed portion, and
wherein the planar coil is placed on the mold such that a portion of the planar coil that covers the recessed portion overlaps the support portion.

42. A method of manufacturing a coil component comprising:
a step of preparing a mold;
a step of preparing a planar coil that has a spiral shape, that has a first surface and a second surface opposite each other in an axial direction that extends along a central axis of the spiral shape, and that has a path hole that extends from the first surface to the second surface;
a step of placing the planar coil on the mold; and
a step of providing a mold material such that the mold material covers the second surface, forming a portion that fills the path hole and a portion that covers the second surface from the mold material, and solidifying the mold material with the portion that fills the path hole and the portion that covers the second surface being connected to each other.

43. A coil intermediate material comprising:
a planar coil that has a spiral shape and that has a first surface and a second surface opposite each other in an axial direction that extends along a central axis of the spiral shape; and
a first holding member that overlaps the planar coil such that the first holding member faces the second surface and that holds the planar coil,
wherein the planar coil has a path hole that extends from the first surface to the second surface, and
wherein the first holding member includes a base portion having a contact surface that is in contact with the second surface and that extends along the second surface and a rib portion that projects from the contact surface, that extends through the path hole, and that is in contact with or close to an inner circumferential surface of the path hole in a radial direction of the planar coil perpendicular to the central axis.

44. A coil intermediate material comprising:
a planar coil that has a spiral shape and that has a first surface and a second surface opposite each other in an axial direction that extends along a central axis of the spiral shape; and
a first holding member that overlaps the planar coil such that the first holding member faces the second surface and that holds the planar coil,
wherein the first holding member includes a base portion having a contact surface that is in contact with the second surface and that extends along the second surface and a rib portion that projects from the contact surface and that is in contact with or close to a side surface of the planar coil that is located between the first surface and the second surface in a radial direction of the planar coil perpendicular to the central axis, and
wherein the rib portion includes a raised portion that is in contact with or close to the side surface of the planar coil in the radial direction and that crosses the planar coil in the axial direction and an overhang portion that extends from the raised portion in the radial direction and that faces the first surface.

45. A power transmitter comprising: the coil component according to any one of claim 22 to claim 37.

46. A power receiver comprising: the coil component according to any one of claim 22 to claim 37.

47. A power transmission system comprising: a power transmitter; and a power receiver,
wherein at least the power transmitter or the power receiver includes the coil component according to any one of claim 22 to claim 37.

48. A mobile body comprising: the coil component according to any one of claim 22 to claim 37.

49. A coil component comprising:
a planar coil that has a spiral shape and that has a first surface and a second surface opposite each other in an axial direction that extends along a central axis of the spiral shape;
a first holding member that overlaps the planar coil such that the first holding member faces the second surface and that holds the planar coil; and
a second holding member that is formed into a single body together with the planar coil and the first holding member such that the planar coil is sandwiched between the second holding member and the first holding member,
wherein the planar coil includes turn portions that are arranged in a radial direction of the planar coil,
wherein the second holding member includes a projecting portion that extends in the axial direction between turn portions of the planar coil adjacent to each other,
wherein the first holding member has a contact surface in contact with the second surface and an outer surface opposite the contact surface,
wherein a first groove that receives the projecting portion is formed on the contact surface,
wherein a second groove is formed on the outer surface, and
wherein the second groove is formed in a region on the outer surface that overlaps a region on the contact surface that contains the central axis and the first groove when viewed in the axial direction.

50. The coil component according to claim 49, wherein the second groove is formed along the spiral shape of the planar coil when viewed in the axial direction.

51. The coil component according to claim 49 or claim 50, wherein a width of the second groove is 0.2 times to 1.1 times a width of the first groove.

52. The coil component according to any one of claim 49 to claim 51, wherein a depth of the second groove is 0.2 times to 1.1 times a depth of the first groove.

53. The coil component according to any one of claim 49 to claim 52, wherein a volume of the second groove is 0.2 times to 1.1 times a volume of the first groove.

54. The coil component according to any one of claim 49 to claim 53, wherein the second groove does not overlap the first groove when viewed in the axial direction.

55. A coil component comprising:
a planar coil that has a spiral shape and that has a first surface and a second surface opposite each other in an axial direction that extends along a central axis of the spiral shape;
a first holding member that overlaps the planar coil such that the first holding member faces the second surface and that holds the planar coil; and
a second holding member that is formed into a single body together with the planar coil and the first holding member such that the planar coil is sandwiched between the second holding member and the first holding member,
wherein the planar coil includes turn portions that are arranged in a radial direction of the planar coil,
wherein the second holding member includes a projecting portion that extends in the axial direction between turn portions of the planar coil adjacent to each other,
wherein the first holding member has a contact surface in contact with the second surface and an outer surface opposite the contact surface,
wherein a first groove that receives the projecting portion is formed on the contact surface,
wherein at least one rib is formed on the outer surface, and
wherein the at least one rib is formed in a region on the outer surface that overlaps a region on the contact surface that contains the central axis and the first groove when viewed in the axial direction.

56. The coil component according to claim 55, wherein the at least one rib includes ribs that extend in directions in which these intersect with each other.

57. The coil component according to claim 55 or claim 56, wherein the at least one rib includes ribs, and
wherein the ribs are formed in a lattice shape when viewed in the axial direction.

58. The coil component according to any one of claim 49 to claim 57, wherein the first holding member exerts no magnetism and has an insulation property.

59. The coil component according to any one of claim 49 to claim 58, wherein the second holding member exerts magnetism.

60. The coil component according to any one of claim 49 to claim 59, wherein the planar coil has a plate shape.

61. The coil component according to any one of claim 49 to claim 59, wherein the planar coil is composed of Litz wire.

62. A coil intermediate material comprising:
a planar coil that has a spiral shape and that has a first surface and a second surface opposite each other in an axial direction that extends along a central axis of the spiral shape; and
a first holding member that overlaps the planar coil such that the first holding member faces the second surface and that holds the planar coil,
wherein the planar coil includes turn portions that are arranged in a radial direction of the planar coil,
wherein the first holding member has a contact surface in contact with the second surface and an outer surface opposite the contact surface,
wherein a first groove is formed on the contact surface,
wherein a second groove is formed on the outer surface,
wherein the first groove is formed along the spiral shape of the planar coil between turn portions of the planar coil adjacent to each other when viewed in the axial direction, and
wherein the second groove is formed in a region on the outer surface that overlaps a region on the contact surface that contains the central axis and the first groove when viewed in the axial direction.

63. The coil intermediate material according to claim 62, wherein the second groove is formed along the spiral shape of the planar coil when viewed in the axial direction.

64. A coil intermediate material comprising:
a planar coil that has a spiral shape and that has a first surface and a second surface opposite each other in an axial direction that extends along a central axis of the spiral shape; and
a first holding member that overlaps the planar coil such that the first holding member faces the second surface and that holds the planar coil,
wherein the planar coil includes turn portions that are arranged in a radial direction of the planar coil,
wherein the first holding member has a contact surface in contact with the second surface and an outer surface opposite the contact surface,
wherein a first groove is formed on the contact surface,
wherein at least one rib is formed on the outer surface,
wherein the first groove is formed along the spiral shape of the planar coil between turn portions of the planar coil adjacent to each other when viewed in the axial direction, and
wherein the at least one rib is formed in a region on the outer surface that overlaps a region on the contact surface that contains the central axis and the first groove when viewed in the axial direction.

65. The coil intermediate material according to claim 64, wherein the at least one rib includes ribs that extend in directions in which these intersect with each other.

66. A power transmitter comprising: the coil component according to any one of claim 49 to claim 61.

67. A power receiver comprising: the coil component according to any one of claim 49 to claim 61.

68. A power transmission system comprising: a power transmitter; and a power receiver,
wherein at least the power transmitter or the power receiver includes the coil component according to any one of claim 49 to claim 61.

69. A mobile body comprising: the coil component according to any one of claim 49 to claim 61.

70. A coil component comprising:
a planar coil that has a spiral shape and that has a first surface and a second surface opposite the first surface;
a first holding member that overlaps the planar coil such that the first holding member faces the first surface and holds the planar coil; and
a second holding member configured such that the planar coil is sandwiched between the second holding member and the first holding member,
wherein the planar coil includes turn portions that are arranged in a coil radial direction that is a radial direction of the planar coil,
wherein the first holding member has a contact surface in contact with the first surface,
wherein a groove that extends between turn portions of the planar coil adjacent to each other is formed on the contact surface when viewed in a coil axial direction that is an axial direction of the planar coil,
wherein the second holding member includes a foundation portion in contact with the second surface of the planar coil and a wall portion that extends from the foundation portion into the groove of the first holding member between turn portions of the planar coil adjacent to each other, and
wherein a width of a bottom portion of the groove is less than a width of the groove at a height position of the contact surface.

71. The coil component according to claim 70, wherein a surface of the first holding member that defines the groove includes a pair of groove side surfaces that face each other in the coil radial direction, and
wherein at least one groove side surface of the pair of groove side surfaces includes an inclined surface that is inclined with respect to the coil axial direction.

72. The coil component according to claim 71, wherein of the pair of groove side surfaces, a groove side surface that is located outside in the coil radial direction includes the inclined surface.

73. The coil component according to claim 71, wherein of the pair of groove side surfaces, a groove side surface that is located inside in the coil radial direction includes the inclined surface.

74. The coil component according to claim 71, wherein both of the pair of groove side surfaces include respective inclined surfaces that are inclined with respect to the coil axial direction.

75. The coil component according to any one of claim 70 to claim 74, wherein the wall portion includes a base end portion that extends from the foundation portion in the coil axial direction and that has a uniform width, and
wherein a dimension in the coil axial direction of the base end portion is more than a thickness of the planar coil.

76. The coil component according to any one of claim 70 to claim 75, wherein a distance between a bottom portion of the groove and the contact surface is 2 mm or more.

77. The coil component according to any one of claim 70 to claim 76, wherein the width of the bottom portion of the groove is 1/2 or less of the width of the groove at the height position of the contact surface.

78. The coil component according to any one of claim 70 to claim 77, wherein the first holding member contains a fiber.

79. The coil component according to any one of claim 70 to claim 78, wherein the first holding member exerts no magnetism and has an insulation property.

80. The coil component according to any one of claim 70 to claim 79, wherein the second holding member exerts magnetism.

81. The coil component according to any one of claim 70 to claim 80, wherein the planar coil has a plate shape.

82. A power transmitter comprising: the coil component according to any one of claim 70 to claim 81.

83. A power receiver comprising: the coil component according to any one of claim 70 to claim 81.

84. A power transmission system comprising: a power transmitter; and a power receiver,
wherein at least the power transmitter or the power receiver includes the coil component according to any one of claim 70 to claim 81.

85. A mobile body comprising: the coil component according to any one of claim 70 to claim 81.

86. A method of manufacturing the coil component according to any one of claim 70 to claim 81, the method comprising:
a step of preparing a mold that includes a body part and a protuberance that extends from the body part and that has a spiral shape;
a step of disposing a planar coil that has a spiral shape that corresponds to the spiral shape of the protuberance on the body part of the mold such that the protuberance extends from between turn portions of the planar coil adjacent to each other;
a step of molding a first holding member by pressing a material for manufacturing the first holding member against the mold on which the planar coil is disposed and manufacturing a coil intermediate material that is a single body of the first holding member and the planar coil;
a step of removing the mold from the coil intermediate material; and
a step of forming a second holding member that covers the planar coil on the coil intermediate material after the mold is removed from the coil intermediate material,
wherein a width of a top portion of the protuberance of the mold is less than a width of the protuberance at a position of connection with the body part.

87. The manufacturing method according to claim 86, wherein the protuberance has a pair of mold side surfaces that face each other in a mold radial direction that is a radial direction of the protuberance, and
wherein at least one mold side surface of the pair of mold side surfaces includes an inclined surface that is inclined with respect to a mold axial direction that is an axial direction of the protuberance.

88. The manufacturing method according to claim 87, wherein of the pair of mold side surfaces, a mold side surface that is located outside in the mold radial direction includes the inclined surface that is inclined with respect to the mold axial direction.

89. The manufacturing method according to claim 87, wherein of the pair of mold side surfaces, a mold side surface that is located inside in the mold radial direction includes the inclined surface that is inclined with respect to the mold axial direction.

90. The manufacturing method according to claim 87, wherein both of the pair of mold side surfaces include respective inclined surfaces that are inclined with respect to the mold axial direction.

91. The manufacturing method according to any one of claim 86 to claim 90, wherein the width of the top portion of the protuberance is 1/2 or less of a width of the protuberance at a position of connection with the body part.
